# EUROPEAN PATENT APPLICATION

(11) **EP 4 804 574 A1**
(43) Date of publication of application: **09.09.2026**
(21) Application number: 24896358.9
(22) Date of filing: 19.11.2024
(51) Int. Cl.: H04W 4/38, H04L 9/40, H04L 67/12, H04Q 9/00, H04W 4/70, H04W 12/06, H04W 24/02, H04W 24/10

(54) **COMMUNICATION METHOD AND APPARATUS, AND COMPUTER-READABLE STORAGE MEDIUM**

(30) Priority: 30.11.2023 CN 202311637523
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); YING, Jiangwei, Shenzhen, Guangdong 518129 (CN)
(74) Representative: MERH-IP Matias Erny Reichl Hoffmann Patentanwälte PartG mbB
(86) International application number: PCT/CN2024/133054
(87) International publication number: WO 2025/113267

(57) **Abstract**

This application provides a communication method and apparatus, and a computer-readable storage medium. The method includes: receiving a first sensing service request for requesting a first sensing service; respectively sending sensing control requests to sensing signal receiving nodes in a plurality of sensing node groups based on the first sensing service request, wherein the sensing control requests is for requesting sensing data corresponding to the first sensing service, the sensing node group comprises a sensing signal sending node and the sensing signal receiving node, and sensing signal sending nodes and/or sensing signal receiving nodes in different sensing node groups are different; and respectively obtaining, from the sensing signal receiving nodes in the plurality of sensing node groups, sensing data corresponding to the first sensing service. In embodiments of this application, corresponding sensing data may be obtained from a plurality of different sensing node groups, so that accuracy of a sensing result and sensing reliability can be ensured.

## Description

This application claims priority to Chinese Patent Application No. 202311637523.2, filed with the China National Intellectual Property Administration on November 30, 2023 and entitled "COMMUNICATION METHOD AND APPARATUS, AND COMPUTER-READABLE STORAGE MEDIUM", which is incorporated herein by reference in its entirety.

### TECHNICAL FIELD

The present invention relates to the field of communication sensing technologies, and in particular, to a communication method and apparatus, and a computer-readable storage medium.

### BACKGROUND

With evolution of mobile communications technologies, a frequency band used in wireless communication is increasingly high, for example, a millimeter wave frequency band. However, when an access network device and a terminal device perform wireless communication by using the millimeter wave frequency band, the access network device and the terminal device have sensing capabilities similar to a sensing capability of radar, so that sensing requirements in many scenarios can be resolved, for example, an autonomous/assisted driving scenario, a vehicle-to-everything scenario, an intelligent transportation scenario, a 3D map reconstruction scenario, a smart industry scenario, a drone monitoring and management scenario, an intelligent interaction scenario, and an environmental monitoring scenario.

In the autonomous/assisted driving scenario, the 3D map reconstruction scenario, and the like, there is a high requirement for accuracy of a sensing result. Therefore, how to ensure the accuracy of the sensing result is a concern in the industry.

### SUMMARY

Embodiments of this application disclose a communication method and apparatus, and a computer-readable storage medium, to ensure accuracy of a sensing result and sensing reliability.

A first aspect discloses a communication method. The method may be applied to a sensing function (SF) network element, may be applied to a module (for example, a processor) in the sensing function network element, or may be applied to a logical module or software that can implement all or some functions of the sensing function network element. The following provides descriptions by using an example in which the method is applied to the sensing function network element. The communication method may include: receiving a first sensing service request, wherein the first sensing service request is for requesting a first sensing service; respectively sending sensing control requests to sensing signal receiving nodes in a plurality of sensing node groups based on the first sensing service request, wherein the sensing control requests is for requesting sensing data corresponding to the first sensing service, the sensing node group comprises a sensing signal sending node and the sensing signal receiving node, and sensing signal sending nodes and/or sensing signal receiving nodes in different sensing node groups are different; and respectively obtaining, from the sensing signal receiving nodes in the plurality of sensing node groups, sensing data corresponding to the first sensing service.

In this embodiment of this application, the SF may respectively send the sensing control requests to the sensing signal receiving nodes in the plurality of sensing node groups based on the first sensing service request, that is, perform the first sensing service through redundancy sensing. In this way, sensing data can be respectively obtained from the different sensing node groups, so that the plurality of pieces of sensing data corresponding to the first sensing service can be obtained. Further, based on the plurality of pieces of sensing data corresponding to the first sensing service, the SF may detect whether the sensing data is incorrect, thereby determining whether a sensing result obtained based on the corresponding sensing data is accurate. Even, in some cases, the SF may compare the sensing data corresponding to the sensing node groups, exclude incorrect sensing data, and then obtain a sensing result based on correct/accurate sensing data, so that accuracy of the sensing result can be ensured. In addition, the SF may further obtain a sensing result by integrating a plurality of pieces of accurate sensing data, so that an error can be reduced, and accuracy of the sensing result can be improved.

Further, the SF performs sensing through redundancy sensing, which can further ensure sensing security and reliability.

With reference to the first aspect, in a possible implementation, the first sensing service request comprises a redundancy sensing indication, and the respectively sending the sensing control requests to the sensing signal receiving nodes in the plurality of sensing node groups based on the first sensing service request comprises: respectively sending the sensing control requests to the sensing signal receiving nodes in the plurality of sensing node groups based on the redundancy sensing indication.

In this embodiment of this application, the redundant sensing indication may be carried in a sensing request to actively trigger redundant sensing. In other words, when the sensing request does not carry the redundant sensing indication, sensing is not performed through redundant sensing, and sensing may be performed through redundant sensing only when the sensing request carries the redundant sensing indication. In this way, it can be avoided that sensing is performed through redundant sensing for each sensing request, and a sensing resource can be saved. In addition, in this manner, a sensing demander may choose, based on an actual requirement, to carry the redundant sensing indication, and flexibility is high.

With reference to the first aspect, in a possible implementation, the method further includes: allocating a sensing task identifier ID to each of the sensing control requests, wherein the sensing task ID corresponds to the first sensing service; and the respectively obtaining, from the sensing signal receiving nodes in the plurality of sensing node groups, the sensing data corresponding to the first sensing service comprises: respectively obtaining, from the sensing signal receiving nodes in the plurality of sensing node groups, the sensing data corresponding to the first sensing service and the sensing task ID corresponding to each piece of the sensing data; and determining, based on the sensing task ID corresponding to the piece of the sensing data, that the piece of the sensing data corresponds to the first sensing service.

In this embodiment of this application, the corresponding sensing task ID may be allocated to each sensing control request corresponding to the first sensing service request/the first sensing service, and a correspondence between the sensing task ID and the first sensing service request/the first sensing service is maintained. In this way, the SF can determine, based on the correspondence, the sensing data corresponding to the first sensing service, to obtain the sensing result.

With reference to the first aspect, in a possible implementation, before respectively sending the sensing control requests to the sensing signal receiving nodes in the plurality of sensing node groups, the method further comprises: sending a first sensing authorization request to a data management network element based on the first sensing service request, wherein the first sensing authorization request is for requesting to perform an authorization check on obtaining of the plurality of pieces of sensing data corresponding to the first sensing service; and receiving a first authorization response from the data management network element, wherein the first authorization response indicates that obtaining of the plurality of pieces of sensing data corresponding to the first sensing service is authorized.

In this embodiment of this application, the data management network element may be for performing a redundancy sensing authorization check, and sensing may be performed through redundancy sensing only when authorization succeeds. In this way, the sensing resource can be saved. In addition, the data management network element may further be for performing a targeted limitation on a redundancy sensing authorization status.

With reference to the first aspect, in a possible implementation, the first sensing authorization request comprises one or more of the following: a sensing service type, a sensing area, an application function identifier, and the redundancy sensing indication.

With reference to the first aspect, in a possible implementation, the first authorization response comprises first authorization indication information, and the first authorization indication information indicates that obtaining of the plurality of pieces of sensing data corresponding to the first sensing service is authorized.

In this embodiment of this application, the first authorization response may carry the first authorization indication information, to indicate that redundancy sensing authorization succeeds. Certainly, when authorization fails, the data management network element may also return a corresponding authorization response, where the authorization response may carry indication information indicating that authorization fails or indication information indicating to perform sensing through non-redundancy sensing.

For example, the first grant indication information may be the redundancy sensing indication.

With reference to the first aspect, in a possible implementation, the respectively sending the sensing control requests to the sensing signal receiving nodes in the plurality of sensing node groups based on the first sensing service request comprises: when the first sensing service request satisfies first redundancy sensing configuration information, respectively sending the sensing control requests to the sensing signal receiving nodes in the plurality of sensing node groups.

In this embodiment of this application, the SF may perform an redundancy sensing authorization check. When determining that the first sensing service request satisfies the first redundancy sensing configuration information, the SF may determine that redundancy sensing authorization succeeds. In addition, sensing may be performed through redundancy sensing only when authorization succeeds. In this way, the sensing resource can be saved.

With reference to the first aspect, in a possible implementation, the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

In this embodiment of this application, a redundancy sensing condition may be flexibly configured. For example, only one of the sensing service type for which redundancy sensing is allowed to be performed, the sensing area for which redundancy sensing is allowed to be performed, the application function identifier for which redundancy sensing is allowed to be performed, and the time for which redundancy sensing is allowed to be performed may be configured, or a plurality of items therein may be configured.

In addition, that a sensing service request satisfies the first redundancy sensing configuration information may include a plurality of cases. In a case, information carried in the sensing service request satisfies one of the configurations. In another case, information carried in the sensing service request satisfies a plurality of items in the configurations. In still another case, information carried in the sensing service request satisfies a plurality of items in the configurations, and there is a binding relationship between the plurality of items. For details, refer to related descriptions in the following embodiments.

With reference to the first aspect, in a possible implementation, the method further includes: receiving a first parameter configuration request from the network exposure function network element, wherein the first parameter configuration request comprises second redundancy sensing configuration information, and the first redundancy sensing configuration information comprises the second redundancy sensing configuration information.

In this embodiment of this application, when the SF performs the redundancy sensing authorization check, the SF may further receive a parameter configuration request of another network element. In this way, redundancy sensing configuration information can be dynamically adjusted, and flexibility is high. For example, targeted configuration may be performed on some sensing scenarios, to perform redundant sensing in the corresponding sensing scenarios.

With reference to the first aspect, in a possible implementation, the first sensing service request further comprises one or more of the following: the sensing service type, a sensing service requirement, the sensing area, and the application function identifier.

With reference to the first aspect, in a possible implementation, the first sensing service request is from a terminal device, the network exposure function network element, or an application function network element.

With reference to the first aspect, in a possible implementation, the method further includes: determining a first sensing result based on the plurality of pieces of sensing data corresponding to the first sensing service.

In this embodiment of this application, the SF may obtain the sensing result based on the plurality of pieces of sensing data corresponding to the first sensing service, so that accuracy of the sensing result can be ensured.

With reference to the first aspect, in a possible implementation, the determining the first sensing result based on the plurality of pieces of sensing data corresponding to the first sensing service comprises: obtaining target sensing data after excluding, based on the plurality of pieces of sensing data corresponding to the first sensing service, biased sensing data in the plurality of pieces of sensing data corresponding to the first sensing service; and obtaining the first sensing result based on the target sensing data.

In this embodiment of this application, the SF may exclude sensing data with a larger bias based on the plurality of pieces of sensing data corresponding to the first sensing service, and then obtain a sensing result based on remaining sensing data (the target sensing data), so that accuracy of the sensing result can be ensured.

A second aspect discloses a communication method. The method may be applied to a data management network element (a UDM/a UDR), may be applied to a module (for example, a processor) in the data management network element, or may be applied to a logical module or software that can implement all or some functions of the data management network element. The following provides descriptions by using an example in which the method is applied to the data management network element. The communication method may include: receiving a first sensing authorization request, wherein the first sensing authorization request is for requesting to perform an authorization check on obtaining of a plurality of pieces of sensing data corresponding to a first sensing service; and when the first sensing authorization request satisfies first redundancy sensing configuration information, sending a first authorization response, wherein the first authorization response indicates that obtaining of the plurality of pieces of sensing data corresponding to the first sensing service is authorized.

In this embodiment of this application, the data management network element may receive a redundancy sensing authorization request sent by an authorization requester (for example, a NEF or an SF), and may perform a redundancy sensing authorization check based on the redundancy sensing authorization request. In addition, when redundancy sensing authorization succeeds, the data management network element may return an authorization response to the corresponding authorization requester, to notify that authorization succeeds. It should be understood that a redundancy sensing application scenario and the like may be limited through redundancy sensing authorization, to avoid an abuse of redundancy sensing, so that a sensing resource can be saved.

With reference to the second aspect, in a possible implementation, the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

With reference to the second aspect, in a possible implementation, the first sensing authorization request comprises one or more of the following: a sensing service type, a sensing area, an application function identifier, and a redundancy sensing indication.

With reference to the second aspect, in a possible implementation, the method further includes: when the first sensing authorization request comprises the redundancy sensing indication, performing, based on the first sensing authorization request and the first redundancy sensing configuration information, the authorization check on obtaining of the plurality of pieces of sensing data corresponding to the first sensing service.

In this embodiment of this application, the data management network element may perform the redundant sensing authorization check only when the first sensing authorization request carries the redundant sensing indication, so that a processing resource can be saved.

With reference to the second aspect, in a possible implementation, the first authorization response comprises first authorization indication information, and the first authorization indication information indicates that obtaining of the plurality of pieces of sensing data corresponding to the first sensing service is authorized.

With reference to the second aspect, in a possible implementation, the method further includes: receiving a first parameter configuration request from a network exposure function network element, wherein the first parameter configuration request comprises second redundancy sensing configuration information, and the first redundancy sensing configuration information comprises the second redundancy sensing configuration information.

With reference to the second aspect, in a possible implementation, the first sensing authorization request is from the network exposure function network element or a sensing function network element.

It should be noted that the technical solutions in the second aspect of this application may correspond to the solutions in the first aspect. For related beneficial effects, refer to the beneficial effects in the first aspect.

A third aspect discloses a communication method. The method may be applied to a network exposure function network element, may be applied to a module (for example, a processor) in the network exposure function network element, or may be applied to a logical module or software that can implement all or some functions of the network exposure function network element. The following provides descriptions by using an example in which the method is applied to the network exposure function network element. The communication method may include: receiving a second sensing service request, where the second sensing service request is for requesting a first sensing service; sending a first sensing authorization request to a data management network element based on the second sensing service request, where the first sensing authorization request is for requesting to perform an authorization check on obtaining of a plurality of pieces of sensing data corresponding to the first sensing service; receiving a first authorization response from the data management network element, where the first authorization response indicates that obtaining of the plurality of pieces of sensing data corresponding to the first sensing service is authorized; and sending a first sensing service request to a sensing function network element based on the first authorization response, where the first sensing service request is for requesting the first sensing service.

In this embodiment of this application, the network exposure function network element may receive the first sensing service request from another network element (for example, an AF); then may perform a redundancy sensing authorization check by using the data management network element; and when authorization succeeds, may send the corresponding sensing service request to the sensing function network element, so that the sensing function network element performs the first sensing service through redundancy sensing.

With reference to the third aspect, in a possible implementation, the second sensing service request includes one or more of the following: a sensing service type, a sensing service requirement, a sensing area, an application function identifier, and a redundancy sensing indication.

With reference to the third aspect, in a possible implementation, the sending the first sensing authorization request to the data management network element based on the second sensing service request includes: when the second sensing service request includes the redundancy sensing indication, sending the first sensing authorization request to the data management network element based on the second sensing service request.

In this embodiment of this application, the network exposure function network element may send the first sensing authorization request to the data management network element only when the second sensing service request includes the redundancy sensing indication. In this way, a quantity of times of sending the first sensing authorization request can be reduced, so that a transmission resource can be saved, and a related processing resource can be correspondingly saved.

With reference to the third aspect, in a possible implementation, the first sensing authorization request comprises one or more of the following: the sensing service type, the sensing area, the application function identifier, and the redundancy sensing indication.

With reference to the third aspect, in a possible implementation, the first authorization response includes first authorization indication information, and the first authorization indication information indicates that obtaining of the plurality of pieces of sensing data corresponding to the first sensing service is authorized.

With reference to the third aspect, in a possible implementation, the first sensing service request includes one or more of the following: the sensing service type, the sensing service requirement, the sensing area, the application function identifier, and the redundancy sensing indication.

With reference to the third aspect, in a possible implementation, the method further includes: receiving a second parameter configuration request from an application function network element, where the second parameter configuration request includes third redundancy sensing configuration information; and sending a first parameter configuration request based on the second parameter configuration request, where the first parameter configuration request includes second redundancy sensing configuration information, and the second redundancy sensing configuration information is obtained based on the third redundancy sensing configuration information.

With reference to the third aspect, in a possible implementation, the sending the first parameter configuration request based on the second parameter configuration request includes: when an authorization check on the application function network element succeeds, sending the first parameter configuration request based on the second parameter configuration request.

In this embodiment of this application, the network exposure function network element may send the first parameter configuration request based on the second parameter configuration request only when the authorization check on the application function network element succeeds. In this way, unnecessary/incorrect parameter configuration can be avoided.

With reference to the third aspect, in a possible implementation, the second redundancy sensing configuration information includes one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

With reference to the third aspect, in a possible implementation, the method further includes: receiving a first sensing result from the sensing function network element, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

It should be noted that the technical solutions in the third aspect of this application may correspond to the solutions in the first aspect. For related beneficial effects, refer to the beneficial effects in the first aspect.

A fourth aspect discloses a communication method. The method may be applied to a network exposure function network element, may be applied to a module (for example, a processor) in the network exposure function network element, or may be applied to a logical module or software that can implement all or some functions of the network exposure function network element. The following provides descriptions by using an example in which the method is applied to the network exposure function network element. The communication method may include: receiving a second sensing service request, where the second sensing service request is for requesting a first sensing service, the second sensing service request includes a redundant sensing indication, and the redundant sensing indication indicates to obtain a plurality of pieces of sensing data corresponding to the first sensing service; and sending a first sensing service request to a sensing function network element based on the second sensing service request, where the first sensing service request is for requesting the first sensing service.

With reference to the fourth aspect, in a possible implementation, the second sensing service request further includes one or more of the following: a sensing service type, a sensing service requirement, a sensing area, and an application function identifier.

With reference to the fourth aspect, in a possible implementation, the first sensing service request includes one or more of the following: the sensing service type, the sensing service requirement, the sensing area, the application function identifier, and the redundancy sensing indication.

With reference to the fourth aspect, in a possible implementation, the sending the first sensing service request to the sensing function network element based on the second sensing service request includes: sending a second sensing authorization request to a data management network element based on the second sensing service request, where the second sensing authorization request is for requesting to perform an authorization check on the first sensing service; receiving a second authorization response from the data management network element, where the second authorization response indicates that the first sensing service is authorized; and sending the first sensing service request to the sensing function network element based on the second authorization response.

With reference to the fourth aspect, in a possible implementation, the method further includes: receiving a first sensing result from the sensing function network element, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

It should be noted that the technical solutions in the fourth aspect of this application may correspond to the solutions in the first aspect. For related beneficial effects, refer to the beneficial effects in the first aspect.

A fifth aspect discloses a communication method. The method may be applied to a terminal device, an application function (AF) network element, or another network element having a sensing requirement, may be applied to a module (for example, a processor) in the terminal device or the application function network element, or may be applied to a logical module or software that can implement all or some functions of the terminal device or the application function network element. The following provides descriptions by using an example in which the method is applied to the application function network element. The communication method may include: sending a first sensing service request, where the first sensing service request is for requesting a first sensing service, the first sensing service request includes a redundancy sensing indication, and the redundancy sensing indication indicates to obtain a plurality of pieces of sensing data corresponding to the first sensing service.

In this embodiment of this application, the AF may use a sensing service request to carry the redundancy sensing indication based on an actual requirement, to trigger redundancy sensing, thereby ensuring accuracy of a sensing result. In addition, in this manner in which the redundant sensing indication is carried in a sensing request to trigger redundant sensing, flexibility is high.

With reference to the fifth aspect, in a possible implementation, the method further includes: receiving a first sensing result, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

With reference to the fifth aspect, in a possible implementation, the method further includes: receiving a second sensing result, where the second sensing result is a sensing result obtained by performing the first sensing service through non-redundant sensing; and the sending the first sensing service request includes: sending the first sensing service request based on the second sensing result.

In this embodiment of this application, the AF may trigger redundancy sensing based on the sensing result obtained by performing the first sensing service through non-redundant sensing. For example, the AF may send the sensing request again when accuracy of the sensing result obtained by performing the first sensing service through non-redundant sensing is insufficient, and use the sensing request to carry the redundant sensing indication, to trigger redundant sensing.

With reference to the fifth aspect, in a possible implementation, the first sensing service request includes one or more of the following: a sensing service type, a sensing service requirement, a sensing area, and an application function identifier.

With reference to the fifth aspect, in a possible implementation, before sending the first sensing service request, the method further includes: receiving a second sensing result, where the second sensing result is a sensing result obtained by performing the first sensing service through non-redundant sensing; and sending a second parameter configuration request based on the second sensing result, where the second parameter configuration request includes third redundancy sensing configuration information.

In this embodiment of this application, the AF may trigger parameter configuration based on the sensing result obtained by performing the first sensing service through non-redundant sensing. For example, the AF may send the second parameter configuration request when accuracy of the sensing result obtained by performing the first sensing service through non-redundant sensing is insufficient, to configure the third redundancy sensing configuration information. In this way, when the first sensing service or a sensing service in a similar scenario is performed again, the redundancy sensing indication may be triggered, so that the accuracy of the sensing result can be ensured.

With reference to the fifth aspect, in a possible implementation, the third redundancy sensing configuration information includes one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

With reference to the fifth aspect, in a possible implementation, the first sensing service request is sent by a terminal device or the application function network element.

A sixth aspect discloses a communications apparatus. The communications apparatus may be a sensing function network element, or may be a module (for example, a processor) in the sensing function network element. The communications apparatus includes: a receiving unit, configured to receive a first sensing service request, wherein the first sensing service request is for requesting a first sensing service; a sending unit, configured to respectively send sensing control requests to sensing signal receiving nodes in a plurality of sensing node groups based on the first sensing service request, wherein the sensing control requests is for requesting sensing data corresponding to the first sensing service, the sensing node group comprises a sensing signal sending node and the sensing signal receiving node, and sensing signal sending nodes and/or sensing signal receiving nodes in different sensing node groups are different; and a processing unit, configured to respectively obtain, from the sensing signal receiving nodes in the plurality of sensing node groups, sensing data corresponding to the first sensing service.

With reference to the sixth aspect, in a possible implementation, the first sensing service request comprises a redundancy sensing indication, and the sending unit is specifically configured to: respectively send the sensing control requests to the sensing signal receiving nodes in the plurality of sensing node groups based on the redundancy sensing indication.

With reference to the sixth aspect, in a possible implementation, the processing unit is further configured to: allocate a sensing task identifier ID to each of the sensing control requests, wherein the sensing task ID corresponds to the first sensing service; respectively obtain, from the sensing signal receiving nodes in the plurality of sensing node groups, the sensing data corresponding to the first sensing service and the sensing task ID corresponding to each piece of the sensing data; and determine, based on the sensing task ID corresponding to the piece of the sensing data, that the piece of the sensing data corresponds to the first sensing service.

With reference to the sixth aspect, in a possible implementation, before the sending unit respectively sends the sensing control requests to the sensing signal receiving nodes in the plurality of sensing node groups, the sending unit is further configured to send a first sensing authorization request to a data management network element based on the first sensing service request, wherein the first sensing authorization request is for requesting to perform an authorization check on obtaining of the plurality of pieces of sensing data corresponding to the first sensing service; and the receiving unit is further configured to receive a first authorization response from the data management network element, wherein the first authorization response indicates that obtaining of the plurality of pieces of sensing data corresponding to the first sensing service is authorized.

With reference to the sixth aspect, in a possible implementation, the first sensing authorization request comprises one or more of the following: a sensing service type, a sensing area, an application function identifier, and the redundancy sensing indication.

With reference to the sixth aspect, in a possible implementation, the first authorization response comprises first authorization indication information, and the first authorization indication information indicates that obtaining of the plurality of pieces of sensing data corresponding to the first sensing service is authorized.

With reference to the sixth aspect, in a possible implementation, the sending unit is further configured to: when the first sensing service request satisfies first redundancy sensing configuration information, respectively send the sensing control requests to the sensing signal receiving nodes in the plurality of sensing node groups.

With reference to the sixth aspect, in a possible implementation, the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

With reference to the sixth aspect, in a possible implementation, the receiving unit is further configured to receive a first parameter configuration request from the network exposure function network element, wherein the first parameter configuration request comprises second redundancy sensing configuration information, and the first redundancy sensing configuration information comprises the second redundancy sensing configuration information.

With reference to the sixth aspect, in a possible implementation, the first sensing service request further comprises one or more of the following: the sensing service type, a sensing service requirement, the sensing area, and the application function identifier.

With reference to the sixth aspect, in a possible implementation, the first sensing service request is from a terminal device, the network exposure function network element, or an application function network element.

With reference to the sixth aspect, in a possible implementation, the processing unit is further configured to determine a first sensing result based on the plurality of pieces of sensing data corresponding to the first sensing service.

With reference to the sixth aspect, in a possible implementation, the processing unit is specifically configured to: obtain target sensing data after excluding, based on the plurality of pieces of sensing data corresponding to the first sensing service, biased sensing data in the plurality of pieces of sensing data corresponding to the first sensing service; and obtain the first sensing result based on the target sensing data.

A seventh aspect discloses a communications apparatus. The communications apparatus may be a data management network element, or may be a module (for example, a processor) in the data management network element. The communications apparatus includes: a receiving unit, configured to receive a first sensing authorization request, wherein the first sensing authorization request is for requesting to perform an authorization check on obtaining of a plurality of pieces of sensing data corresponding to a first sensing service; and a sending unit, configured to: when the first sensing authorization request satisfies first redundancy sensing configuration information, send a first authorization response, wherein the first authorization response indicates that obtaining of the plurality of pieces of sensing data corresponding to the first sensing service is authorized.

With reference to the seventh aspect, in a possible implementation, the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

With reference to the seventh aspect, in a possible implementation, the first sensing authorization request comprises one or more of the following: a sensing service type, a sensing area, an application function identifier, and a redundancy sensing indication.

With reference to the seventh aspect, in a possible implementation, the communications apparatus further includes: a processing unit, configured to: when the first sensing authorization request comprises the redundancy sensing indication, perform, based on the first sensing authorization request and the first redundancy sensing configuration information, the authorization check on obtaining of the plurality of pieces of sensing data corresponding to the first sensing service.

With reference to the seventh aspect, in a possible implementation, the first authorization response comprises first authorization indication information, and the first authorization indication information indicates that obtaining of the plurality of pieces of sensing data corresponding to the first sensing service is authorized.

With reference to the seventh aspect, in a possible implementation, the receiving unit is further configured to receive a first parameter configuration request from a network exposure function network element, wherein the first parameter configuration request comprises second redundancy sensing configuration information, and the first redundancy sensing configuration information comprises the second redundancy sensing configuration information.

With reference to the seventh aspect, in a possible implementation, the first sensing authorization request is from the network exposure function network element or a sensing function network element.

An eighth aspect discloses a communications apparatus. The communications apparatus may be a network exposure function network element, or may be a module (for example, a processor) in the network exposure function network element. the communications apparatus includes: a receiving unit, configured to receive a second sensing service request, where the second sensing service request is for requesting a first sensing service; and a sending unit, configured to send a first sensing authorization request to a data management network element based on the second sensing service request, where the first sensing authorization request is for requesting to perform an authorization check on obtaining of a plurality of pieces of sensing data corresponding to the first sensing service, where the receiving unit is further configured to receive a first authorization response from the data management network element, where the first authorization response indicates that obtaining of the plurality of pieces of sensing data corresponding to the first sensing service is authorized; and the sending unit is further configured to send a first sensing service request to a sensing function network element based on the first authorization response, where the first sensing service request is for requesting the first sensing service.

With reference to the eighth aspect, in a possible implementation, the second sensing service request includes one or more of the following: a sensing service type, a sensing service requirement, a sensing area, an application function identifier, and a redundancy sensing indication.

With reference to the eighth aspect, in a possible implementation, the sending unit is specifically configured to: when the second sensing service request includes the redundancy sensing indication, send the first sensing authorization request to the data management network element based on the second sensing service request.

With reference to the eighth aspect, in a possible implementation, the first sensing authorization request comprises one or more of the following: the sensing service type, the sensing area, the application function identifier, and the redundancy sensing indication.

With reference to the eighth aspect, in a possible implementation, the first authorization response includes first authorization indication information, and the first authorization indication information indicates that obtaining of the plurality of pieces of sensing data corresponding to the first sensing service is authorized.

With reference to the eighth aspect, in a possible implementation, the first sensing service request includes one or more of the following: the sensing service type, the sensing service requirement, the sensing area, the application function identifier, and the redundancy sensing indication.

With reference to the eighth aspect, in a possible implementation, the receiving unit is further configured to receive a second parameter configuration request from an application function network element, where the second parameter configuration request includes third redundancy sensing configuration information; and the sending unit is further configured to send a first parameter configuration request based on the second parameter configuration request, where the first parameter configuration request includes second redundancy sensing configuration information, and the second redundancy sensing configuration information is obtained based on the third redundancy sensing configuration information.

With reference to the eighth aspect, in a possible implementation, that the sending unit sends the first parameter configuration request based on the second parameter configuration request includes: when an authorization check on the application function network element succeeds, sending the first parameter configuration request based on the second parameter configuration request.

With reference to the eighth aspect, in a possible implementation, the second redundancy sensing configuration information includes one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

With reference to the eighth aspect, in a possible implementation, the receiving unit is further configured to receive a first sensing result from the sensing function network element, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

A ninth aspect discloses a communications apparatus. The communications apparatus may be a network exposure function network element, or may be a module (for example, a processor) in the network exposure function network element. The communications apparatus includes: a receiving unit, configured to receive a second sensing service request, where the second sensing service request is for requesting a first sensing service, the second sensing service request includes a redundant sensing indication, and the redundant sensing indication indicates to obtain a plurality of pieces of sensing data corresponding to the first sensing service; and a sending unit, configured to send a first sensing service request to a sensing function network element based on the second sensing service request, where the first sensing service request is for requesting the first sensing service.

With reference to the ninth aspect, in a possible implementation, the second sensing service request further includes one or more of the following: a sensing service type, a sensing service requirement, a sensing area, and an application function identifier.

With reference to the ninth aspect, in a possible implementation, the first sensing service request includes one or more of the following: the sensing service type, the sensing service requirement, the sensing area, the application function identifier, and the redundancy sensing indication.

With reference to the ninth aspect, in a possible implementation, that the sending unit sends the first sensing service request to the sensing function network element based on the second sensing service request includes: sending a second sensing authorization request to a data management network element based on the second sensing service request, where the second sensing authorization request is for requesting to perform an authorization check on the first sensing service; the receiving unit is further configured to receive a second authorization response from the data management network element, where the second authorization response indicates that the first sensing service is authorized; and the sending unit is further configured to send the first sensing service request to the sensing function network element based on the second authorization response.

With reference to the ninth aspect, in a possible implementation, the receiving unit is further configured to receive a first sensing result from the sensing function network element, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

A tenth aspect discloses a communications apparatus. The communications apparatus may be a terminal device, an application function network element, or another network element having a sensing requirement, or may be a module (for example, a processor) in the terminal device, the application function (AF) network element, or the another network element having the sensing requirement. The communications apparatus includes: a sending unit, configured to send a first sensing service request, where the first sensing service request is for requesting a first sensing service, the first sensing service request includes a redundancy sensing indication, and the redundancy sensing indication indicates to obtain a plurality of pieces of sensing data corresponding to the first sensing service.

With reference to the tenth aspect, in a possible implementation, the communications apparatus further includes: a receiving unit, configured to receive a first sensing result, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

With reference to the tenth aspect, in a possible implementation, the receiving unit is further configured to receive a second sensing result, where the second sensing result is a sensing result obtained by performing the first sensing service through non-redundant sensing; and the sending unit is specifically configured to send the first sensing service request based on the second sensing result.

With reference to the tenth aspect, in a possible implementation, the first sensing service request includes one or more of the following: a sensing service type, a sensing service requirement, a sensing area, and an application function identifier.

With reference to the tenth aspect, in a possible implementation, before the first sensing service request is sent, the receiving unit is further configured to receive a second sensing result, where the second sensing result is a sensing result obtained by performing the first sensing service through non-redundant sensing; and the sending unit is further configured to send a second parameter configuration request based on the second sensing result, where the second parameter configuration request includes third redundancy sensing configuration information.

With reference to the tenth aspect, in a possible implementation, the third redundancy sensing configuration information includes one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

With reference to the tenth aspect, in a possible implementation, the first sensing service request is sent by a terminal device or the application function network element.

An eleventh aspect discloses a communications system. The communications system includes a sensing function network element and a data management network element. The sensing function network element is configured to implement the method according to any one of the first aspect and the possible implementations of the first aspect. The data management network element is configured to implement the method according to any one of the second aspect and the possible implementations of the second aspect.

A twelfth aspect discloses a communications system. The communications system includes a sensing function network element and an application function network element. The sensing function network element is configured to implement the method according to any one of the first aspect and the possible implementations of the first aspect. The application function network element is configured to implement the method according to any one of the fifth aspect and the possible implementations of the fifth aspect.

A thirteenth aspect discloses a communications system. The communications system includes a sensing function network element, an application function network element, and a network exposure function network element. The sensing function network element is configured to implement the method according to any one of the first aspect and the possible implementations of the first aspect, the application function network element is configured to implement the method according to any one of the fifth aspect and the possible implementations of the fifth aspect, and the network exposure function network element is configured to implement the method according to any one of the third aspect and the possible implementations of the third aspect, or is configured to implement the method according to any one of the fourth aspect and the possible implementations of the fourth aspect.

A fourteenth aspect discloses a communications system. The communications system includes a sensing function network element, an application function network element, a network exposure function network element, and a data management network element. The sensing function network element is configured to implement the method according to any one of the first aspect and the possible implementations of the first aspect, the application function network element is configured to implement the method according to any one of the fifth aspect and the possible implementations of the fifth aspect, the network exposure function network element is configured to implement the method according to any one of the third aspect and the possible implementations of the third aspect, or is configured to implement the method according to any one of the fourth aspect and the possible implementations of the fourth aspect, and the data management network element is configured to implement the method according to any one of the second aspect and the possible implementations of the second aspect.

A fifteenth aspect discloses a communications apparatus, including a processor and a communications interface. The communications interface is configured to receive and/or send data. The processor invokes a computer program or computer instructions stored in a memory, to implement the method according to any one of the first aspect and the possible implementations of the first aspect.

A sixteenth aspect discloses a communications apparatus, including a processor and a communications interface. The communications interface is configured to receive and/or send data. The processor invokes a computer program or computer instructions stored in a memory, to implement the method according to any one of the second aspect and the possible implementations of the second aspect.

A seventeenth aspect discloses a communications apparatus, including a processor and a communications interface. The communications interface is configured to receive and/or send data. The processor invokes a computer program or computer instructions stored in a memory, to implement the method according to any one of the third aspect and the possible implementations of the third aspect.

An eighteenth aspect discloses a communications apparatus, including a processor and a communications interface. The communications interface is configured to receive and/or send data. The processor invokes a computer program or computer instructions stored in a memory, to implement the method according to any one of the fourth aspect and the possible implementations of the fourth aspect.

A nineteenth aspect discloses a communications apparatus, including a processor and a communications interface. The communications interface is configured to receive and/or send data. The processor invokes a computer program or computer instructions stored in a memory, to implement the method according to any one of the fifth aspect and the possible implementations of the fifth aspect.

In a possible implementation, the communications apparatus disclosed in the fifteenth aspect, the communications apparatus disclosed in the sixteenth aspect, the communications apparatus disclosed in the seventeenth aspect, the communications apparatus disclosed in the eighteenth aspect, and the communications apparatus disclosed in the nineteenth aspect may include one or more processors.

Optionally, the communications apparatus disclosed in the fifteenth aspect, the communications apparatus disclosed in the sixteenth aspect, the communications apparatus disclosed in the seventeenth aspect, the communications apparatus disclosed in the eighteenth aspect, and the communications apparatus disclosed in the nineteenth aspect further include one or more memories.

A twentieth aspect discloses a computer-readable storage medium. The computer-readable storage medium stores a computer program or computer instructions. When the computer program or the computer instructions are run, the method according to any one of the first aspect and the possible implementations of the first aspect is implemented, the method according to any one of the second aspect and the possible implementations of the second aspect is implemented, the method according to any one of the third aspect and the possible implementations of the third aspect is implemented, the method according to any one of the fourth aspect and the possible implementations of the fourth aspect is implemented, or the method according to any one of the fifth aspect and the possible implementations of the fifth aspect is implemented.

A twenty-first aspect discloses a chip, including a processor, configured to execute a program stored in a memory. When the program is executed, the chip is caused to perform the method according to any one of the first aspect and the possible implementations of the first aspect, perform the method according to any one of the second aspect and the possible implementations of the second aspect, perform the method according to any one of the third aspect and the possible implementations of the third aspect, perform the method according to any one of the fourth aspect and the possible implementations of the fourth aspect, or perform the method according to any one of the fifth aspect and the possible implementations of the fifth aspect.

In a possible implementation, the memory is located outside the chip.

A twenty-second aspect discloses a computer program product. The computer program product includes computer program code. When the computer program code is run, the method according to any one of the first aspect and the possible implementations of the first aspect is caused to be performed, the method according to any one of the second aspect and the possible implementations of the second aspect is caused to be performed, the method according to any one of the third aspect and the possible implementations of the third aspect is caused to be performed, the method according to any one of the fourth aspect and the possible implementations of the fourth aspect is caused to be performed, or the method according to any one of the fifth aspect and the possible implementations of the fifth aspect is caused to be performed.

It should be understood that mutual reference may be made to implementations and beneficial effects of the plurality of aspects or any one of the possible implementations of this application.

### BRIEF DESCRIPTION OF DRAWINGS

To describe technical solutions in embodiments of this application more clearly, the following briefly describes accompanying drawings used in describing embodiments. It is clear that the accompanying drawings in the following descriptions show merely some embodiments of this application, and a person of ordinary skill in the art may still derive other drawings from these accompanying drawings without creative efforts.
FIG. 1 is a diagram of a system architecture of a 5G network according to an embodiment of this application;
FIG. 2 is a diagram of a service-based architecture of a 5G network;
FIG. 3 is a diagram of a sensing scenario;
FIG. 4 is a schematic flowchart of a communication method according to an embodiment of this application;
FIG. 5 to FIG. 16 are schematic flowcharts of a group of communication methods according to embodiments of this application;
FIG. 17 is a schematic flowchart of another communication method according to an embodiment of this application;
FIG. 18 is a schematic flowchart of another communication method according to an embodiment of this application;
FIG. 19 is a diagram of a structure of a communication apparatus according to an embodiment of this application;
FIG. 20 is a diagram of a structure of another communication apparatus according to an embodiment of this application;
FIG. 21 is a diagram of a structure of still another communication apparatus according to an embodiment of this application; and
FIG. 22 is a diagram of a structure of still another communication apparatus according to an embodiment of this application.

### DESCRIPTION OF EMBODIMENTS

Embodiments of this application disclose a communication method and apparatus, and a computer-readable storage medium, to ensure accuracy of a sensing result and sensing reliability. The following clearly and completely describes the technical solutions in embodiments of this application with reference to the accompanying drawings in embodiments of this application.

To better understand embodiments of this application, the following first describes a system architecture in embodiments of this application.

In embodiments of this application, some scenarios are described by using a scenario of a 5th generation (5th Generation, 5G) communications network as an example. However, it should be understood that the solutions in the embodiments of this application may be further applied to another communications network, for example, a 6th generation (6th Generation, 6G) network, and a corresponding name may also be replaced with a name of a corresponding function/device in the another communications network.

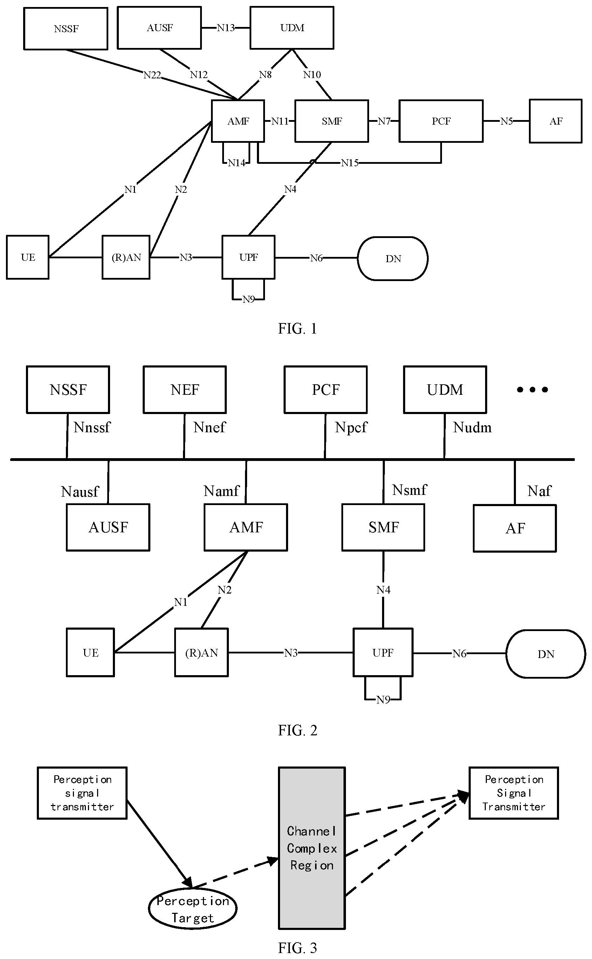

FIG. 1 is a diagram of a system architecture of a 5G network according to an embodiment of this application. As shown in FIG. 1, the system architecture may include a terminal device and network entities. The following separately describes the terminal device and the network entities.

The terminal device may also be referred to as a terminal, user equipment (user equipment, UE), a mobile station (mobile station, MS), a mobile terminal (mobile terminal, MT), a customer premise equipment (customer premise equipment, CPE), or the like, is a device having a wireless communication function, and may provide a voice service and/or a data connectivity service for a user. The terminal device may be a handheld terminal, a notebook computer, an RSU (road side unit, road side unit), a subscriber unit (subscriber unit), a cellular phone (cellular phone), a smart phone (smart phone), a wireless data card, a personal digital assistant (personal digital assistant, PDA) computer, a tablet computer, a label, a wireless modem (modem), another processing device connected to a wireless modem, a handheld (handheld) device, a laptop computer (laptop computer), a cordless phone (cordless phone), a wireless local loop (wireless local loop, WLL) station, a machine type communication (machine type communication, MTC) terminal, a wearable device (for example, a smartwatch, a smart band, or a pedometer), a vehicle-mounted device (for example, an automobile, a bicycle, an electric vehicle, an airplane, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, workshop equipment, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), a flying device (for example, an intelligent robot, a hot air balloon, a drone, or an airplane), or another device that can access a network. The terminal device may be fixed or mobile; and may be deployed on land, and includes an indoor, outdoor, handheld, wearable, or vehicle-mounted device; may be deployed on water (for example, on a ship); or may be deployed in the air (for example, on an airplane, a balloon, and a satellite).

A (radio) access network (R)AN is a network that includes a plurality of 5G-RAN nodes, to implement a radio physical layer function, resource scheduling and radio resource management, radio access control, a mobility management function, and the like. The 5G-RAN may be connected to a user plane function (user plane function, UPF) through a user plane interface N3, to transfer data of the terminal device. The 5G-RAN may also establish a control plane signaling connection to an access and mobility management function (access and mobility management function, AMF) through a control plane interface N2, to implement a function like radio access bearer control. It should be understood that the 5G-RAN node is an access network device, and mainly provides access for the terminal device. The access network device may include a radio access network (radio access network, RAN) device and an access node (access node, AN) device. The RAN device is mainly a wireless network device in a 3GPP network, and the AN device may be a non-3GPP-defined access network device. The RAN device may include base stations in various forms, for example, a macro base station, a micro base station (which may also be referred to as a small cell), a relay station, an access point, and a balloon station. It may be understood that a RAN network element may be understood as the access network device or a base station in a conventional network.

The AMF is mainly responsible for functions such as UE authentication, UE mobility management, network slice selection, and SMF selection, serves as an anchor for N1 and N2 signaling connection, provides N1/N2 SM message routing for an SMF, and maintains and manages status information of the UE.

The session management function (session management function, SMF) is mainly responsible for all control plane functions of UE session management, including user plane function (user plane function, UPF) selection, internet protocol (internet protocol, IP) address allocation, session quality of service (quality of service, QoS) management, obtaining a policy and charging control (policy and charging control, PCC) policy (from a PCF), and the like.

The UPF mainly serves as an anchor point of a protocol data unit (protocol data unit, PDU) session connection, and is responsible for data packet filtering, data transmission/forwarding, rate control, charging information generation, and the like for the user equipment.

A unified data management (unified data management, UDM) network element is mainly configured to: manage and control user data, for example, manage subscription information, including obtaining the subscription information from a unified data repository (unified data repository, UDR) and providing the subscription information for another network element (for example, the AMF); generate an authentication credential of the third generation partnership project (the third generation partnership project, 3GPP) for the UE; and register and maintain a network element currently serving the UE, for example, an AMF, namely, a serving AMF, currently serving the UE. The UDR is also one of network elements in a 5G core network, and is mainly configured to store user data, including subscription data invoked by the UDM, policy information invoked by the PCF, structured data for capability exposure, application data invoked by a NEF, and the like. In embodiments of this application, an operation performed by the UDM may also be performed by the UDR, or may be performed by the UDR and the UDM in cooperation. For example, the UDM and the UDR may be collectively referred to as data management network elements.

An application function (application function, AF) network element mainly interacts with a core network element to provide some services, for example, interacts with the policy control function (policy control function, PCF) to perform service policy control, interacts with the NEF to obtain some network capability information or provide some application information for the network, and provides some data network access point information for the PCF to generate corresponding data service routing information.

An authentication server function (authentication server function, AUSF) is configured to perform security authentication on the UE when the UE accesses the network.

A network slice selection function (network slice selection function, NSSF) selects a slice instance set for the UE, and determines an AMF set and allowed NSSAI for the UE.

The PCF mainly provides configuration policy information for the UE, and provides a control plane network element (for example, the AMF or the SMF) of the network with policy information for managing and controlling the UE.

A data network (data network, data network) network element is configured to provide a data transmission network.

For reference points between the foregoing network elements, refer to FIG. 1, for example, a reference point N1 between the UE and the AMF, a reference point N4 between the SMF and the UPF, and a reference point N13 between the UDM and the AUSF. For specific descriptions of these reference points, refer to related definitions in the 5G standard.

FIG. 1 briefly describes the reference point-based system architecture. FIG. 2 is a diagram of a service-based architecture of a 5G network. As shown in FIG. 2, the service-based architecture includes service-based architecture (service-based architecture, SBA) interfaces such as Nnssf, Nausf, Nnef, Namf, Npcf, Nsmf, Nudm, and Naf.

A naming rule of a 5G service-based interface may be adding N before a name of a function entity. For example, Namf is a service-based interfac provided by an AMF, Nsmf is a service-based interfac provided by an SMF, Nnef is a service-based interfac provided by a NEF, Npcf is a service-based interfac provided by a PCF, and Nudm is a service-based interfac provided by a UDM.

It should be understood that function entities in a 5G core network (core network) may interact with each other through the SBA interfaces. For example, an AF may interact with the NEF through the Nnef interface, to use a service provided by the NEF. For another example, the NEF may interact with the UDM through the Nudm interface, and use a service provided by the UDM.

The network exposure function (network exposure function, NEF) network element in FIG. 2 is mainly configured to connect interaction between another internal network element of the core network and an external application server of the core network, to provide network capability information for the external application server, or provide information about the external application server for a core network element.

In embodiments of this application, the network architectures shown in FIG. 1 and FIG. 2 may further include a sensing function (sensing function, SF) network element, and the SF network element is mainly responsible for related processing of a sensing service. For example, the SF network element may receive a sensing service request from the interior of the network (for example, UE) or the exterior of the network (for example, the AF), and control, based on the sensing service request, a RAN network element to perform sensing.

It should be noted that the SF network element may be one of network elements in the 5G core network (5G core network, 5GC), or may be a non-core network element. This is not particularly limited in this application. When the SF network element is one of the network elements in the 5G core network, the SF network element can be connected to another network element in the 5G core network through an SBA interface, that is, may communicate with the another network element in the 5G core network through the SBA interface. When the SF network element is the non-core network element, the SF network element cannot be connected to another network element in the 5G core network through an SBA interface. In this case, the SF network element may need to interact with the another 5G core network element via the NEF. Optionally, the SF network element may be implemented by the another network element in the core network.

It should be understood that FIG. 1 and FIG. 2 are merely diagrams. The architectures shown in FIG. 1 and FIG. 2 may further include another device/network element, for example, may further include a location management function (location management function, LMF). For details, refer to related content in the 5G standard.

It should be further understood that the foregoing network element or function may be implemented in a form of hardware, computer software, or a combination of the hardware and the computer software. Optionally, the foregoing network element or function may be implemented by one device, may be jointly implemented by a plurality of devices, or may be implemented by a functional module in a device. This is not specifically limited in embodiments of this application.

In addition, the foregoing "network element" may also be referred to as an entity, a device, a module, or the like. This is not limited in this application. In addition, for ease of description, a "network element" description is omitted in the following some descriptions. For example, the NEF network element is referred to as the NEF for short. In this case, the "NEF" should be understood as the NEF network element or an NEF entity, and another network element or function should also be understood similarly. In other words, a function, a function network element, and a function entity may be equivalent. For example, the UDM, the UDM network element, and a UDM entity may be equivalent.

It should be understood that the technical solutions provided in the embodiments of this application may be applied to communications systems of various radio access technologies (radio access technologies, RATs), for example, a 5th generation (5th Generation, 5G) communications system, a transition system (the transition system may also be referred to as a 5.5G communications system) between the 5G communications system and a 6G communications system, and a network integrating a plurality of systems; or certainly, may be applied to a future communications system, for example, a 6th generation (6th Generation, 6G) or even 7th generation (7th generation, 7G) communications system.

It should be noted that the system architecture, the network architecture, the service scenario (or the application scenario), and the like described in embodiments of this application are intended to describe the technical solutions in embodiments of this application more clearly, and do not constitute a limitation on the technical solutions provided in embodiments of this application. A person of ordinary skill in the art may know that, with evolution of the communication network architecture and emergence of a new service scenario, the technical solutions provided in embodiments of this application are also applicable to similar technical problems.

To better understand embodiments of this application, the following briefly describes related content, terms, or nouns in this application.

### 1. Sensing

Sensing is mainly implemented through transmission of an electromagnetic wave, and sensing of an electromagnetic wave propagation environment, for example, detection, positioning, recognition, and imaging of a target object in the electromagnetic wave propagation environment, may be implemented. For example, a sensing signal transmitter may send the electromagnetic wave, and a reflected signal obtained by reflecting the electromagnetic wave by a target object may be received by a sensing signal receiver. Then, a processing device may be for performing feature extraction, data analysis, and the like on the reflected signal and related data of the reflected signal (for example, receiving time of the reflected signal), to obtain a sensing result. The sensing result may reflect information such as a size and a contour of the target object.

With development of communications technologies, a frequency band used by a base station is increasingly high, for example, a millimeter wave frequency band. A higher frequency band indicates a higher sensing resolution (for example, a spatial resolution) and a stronger anti-interference capability. Therefore, when the base station has a sensing capability brought by the millimeter wave frequency band or the like, a wireless communications system/network may perform sensing and recognition on a specific area, object, or event, to satisfy sensing requirements in many scenarios (for example, autonomous driving and drone monitoring). Based on this, the sensing capability will become an important capability and characteristic of a future communications network, and integrated sensing and communication (briefly referred to as integrated sensing and communication) is also a development direction of the future communications network.

For example, a sensing capability of a wireless communications network may be applied to an autonomous/assisted driving scenario, a vehicle-to-everything scenario, an intelligent transportation scenario, a 3D map reconstruction scenario, a smart industry scenario, a drone monitoring and management scenario, an intelligent interaction scenario, an environmental monitoring scenario, and a posture detection and recognition scenario. For example, a high-definition dynamic map may be generated based on sensing, to assist a drone/a smart automobile in autonomous driving. For another example, in a driving process of a smart automobile/a drone, a dangerous event (for example, sudden appearance of a person or an object) may be recognized based on sensing, and the smart automobile/the drone may be notified to perform an emergency operation. For another example, driving violation may be recognized based on sensing. For example, a vehicle occupies an emergency lane, a drone leaves an airway for driving, or a drone intrudes a no-fly zone (for example, an airport). For another example, an abnormal posture, for example, falling down of a person, may be recognized based on sensing, and an alarm may be made. For another example, weather monitoring, pollution monitoring, and pest monitoring may be performed based on sensing.

Common performance indicators of sensing include sensing accuracy, the sensing resolution, and a horizontal field of view (field of view, FOV). The sensing accuracy may generally indicate a bias between the sensing result and an actual result, and may include range accuracy, velocity accuracy, angle accuracy, and the like. The horizontal FOV refers to a sensing angle (for example, 120°) in a horizontal direction. The sensing resolution is a capability of distinguishing between different sensing targets, and may include a range resolution, a velocity resolution, an angle resolution, and the like. The range resolution is a capability of distinguishing between adjacent targets in terms of range, and is usually measured by a minimum resolvable range interval. The velocity resolution is a capability of distinguishing between targets in radial velocity, and is usually measured by a minimum resolvable velocity. The angle resolution/Angle measurement accuracy is a capability of distinguishing between adjacent targets in terms of angles, and is usually measured by a minimum resolvable angle.

### 2. Sensing mode

In embodiments of this application, an access network device or a terminal device may serve as the sensing signal transmitter, or may serve as the sensing signal receiver. Therefore, there are a plurality of combination manners for a transmitting party and a receiving party of sensing signals. Based on different combinations of the transmitting party and the receiving party of the sensing signals, sensing modes may be classified into the following six types: Access network device self-transmitting and self-receiving (the access network device transmits a sensing signal, and receives the reflected signal). Terminal device self-transmitting and self-receiving (the terminal device transmits a sensing signal, and receives the reflected signal). Collaboration between access network devices (one access network device transmits a sensing signal, and another access network device receives the reflected signal). Access network device transmitting and terminal device receiving (the access network device transmits a sensing signal, and the terminal device receives the reflected signal). Terminal device transmitting and access network device receiving (the terminal device transmits a sensing signal, and the access network device receives the reflected signal). Collaboration between terminal device (one terminal device transmits a sensing signal, and another terminal device receives the reflected signal). The foregoing six sensing modes are shown in the following Table 1:

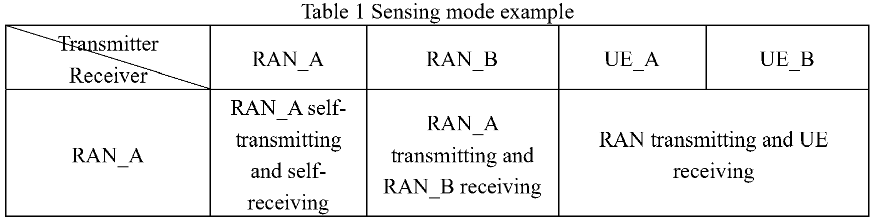

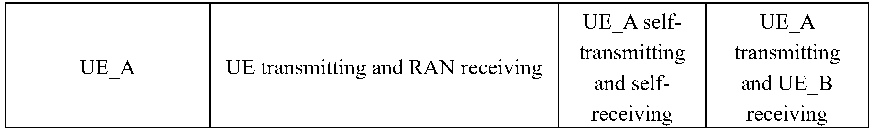

In embodiments of this application, the sensing signal transmitter may also be referred to as a sensing signal sending node, and the sensing signal receiver may also be referred to as a sensing signal receiving node. In addition, the sensing signal receiving node and the sensing signal sending node may be collectively referred to as sensing nodes. In cases of access network device self-transmitting and self-receiving and terminal device self-transmitting and self-receiving, the sensing signal receiving node and the corresponding sensing signal sending node are a same node.

### 3. Redundant sensing

Redundant sensing is a relative concept. For example, to obtain a sensing result corresponding to a sensing service, only one piece of sensing data corresponding to the sensing service needs to be obtained in a normal case, provided that the sensing data is accurate. However, because accuracy of the sensing data cannot be ensured, more (for example, two, three, or four pieces of) sensing data corresponding to the sensing service may be obtained than in the normal case, to improve accuracy of the sensing result, and even detect sensing data with a larger bias. This manner is redundant sensing. Sensing data is data obtained based on a specific sensing task. A specific data format is not limited in embodiments of this application. For example, the sensing data may be a single data value, may be one or more groups of matrix data, may be one or more groups of point cloud data, or may be a combination of the data in the foregoing plurality of formats. The sensing data is uniformly used for description in the following descriptions. For example, one piece of sensing data may be obtained by executing a specific sensing task once, and a plurality of pieces of sensing data may be obtained by executing a plurality of sensing tasks or executing the specific sensing task a plurality of times.

It can be learned that, compared with sensing in the normal case, redundant sensing needs to obtain the more sensing data. If one piece of sensing data is needed in the normal case, two, three, four, or even more pieces of sensing data are needed for redundancy sensing. In addition, these pieces of sensing data are usually independent of each other (for example, obtained by executing sensing tasks by using different combinations of sensing signal sending nodes and sensing signal receiving nodes). In this way, the accuracy of the sensing result can be improved based on these pieces of sensing data, and even the sensing data with the larger bias can be detected.

For example, in the normal case, the sensing result may be obtained based on one piece of sensing data. However, to detect whether the sensing result is accurate, another piece of sensing data may be obtained. Then, the two pieces of sensing data are compared, or sensing results obtained based on the two pieces of sensing data are compared. If a comparison result is being basically the same, it indicates that the sensing result is accurate. If a comparison result is being different or having a quite large bias, it indicates that the sensing result is inaccurate. Further, to detect sensing data with a larger bias, more sensing data may be obtained. For example, if two of three pieces of sensing data are basically the same, and the other piece of sensing data is greatly different from the two pieces of sensing data, the two pieces of basically same sensing data may be determined as accurate sensing data, and the other piece of sensing data is determined as sensing data with a larger bias. Then, a sensing result may be obtained based on the two pieces of normal sensing data.

It can be learned from the foregoing related descriptions that sensing depends on the received reflected signal and the related data of the reflected signal (for example, the receiving time of the reflected signal). However, in some cases, the reflected signal received by the sensing signal receiving node or the obtained related data of the reflected signal may be inaccurate. Consequently, a biased sensing result is finally obtained. For example, a path of the reflected signal may be in an area with complex channels (as shown in FIG. 3), for example, blocking/multipath caused by a complex environment like a city. Consequently, the reflected signal may have a delay, and so on. Consequently, there is a bias between the sensing result obtained based on the received reflected signal and a real case. For example, there is a bias between a range, calculated based on the reflected signal, to a sensing target and an actual real range. To resolve the foregoing problem, the embodiments of this application provide a technical solution in which redundant sensing is implemented in a communications network, to ensure accuracy of a sensing result and sensing reliability.

For ease of understanding the embodiments of this application, the following first briefly describes related content of the embodiments of this application. First, in embodiments of this application, a sensing request may be triggered by UE, may be triggered by an AF, or may be triggered by another network element having a sensing requirement. This is not limited in embodiments of this application. Second, there are a plurality of cases for a condition for performing redundant sensing. The following provides several examples. Case 1: The sensing request needs to carry a redundancy sensing indication. In this case, redundancy sensing is performed only when the sensing request carries the redundancy sensing indication. If the sensing request does not carry the redundancy sensing indication, redundancy sensing is not performed. Case 2: The sensing request needs to carry a redundancy sensing indication, and redundancy sensing needs to be authorized. In this case, redundancy sensing is performed only when the sensing request carries the redundancy sensing indication, and redundancy sensing is authorized. If the sensing request does not carry the redundancy sensing indication, or the sensing request carries the redundancy sensing indication, but redundancy sensing is not authorized, redundancy sensing is not performed. Case 3: The sensing request does not need to carry a redundancy sensing indication, but redundancy sensing needs to be authorized. In this case, a redundancy sensing authorization check may be performed for each sensing request. If redundancy sensing is authorized, redundancy sensing may be performed. If redundancy sensing is not authorized, redundancy sensing is not performed. The three cases are briefly listed herein. However, it should be understood that there is another possible case. For example, the sensing request does not need to carry a redundancy sensing indication, and a redundant sensing authorization check does not need to be performed, redundant sensing is performed for all sensing requests by default. This is not limited in embodiments of this application.

Further, when redundancy sensing needs to be authorized, there may be plurality of cases in which the authorization check is performed. A UDM may perform the redundancy sensing authorization check, or an SF may perform the redundancy sensing authorization check. It should be understood that there are different combinations of the foregoing cases (a sensing request trigger party+the condition for performing redundant sensing+a redundancy sensing authorization status). Overall procedures of redundancy sensing may vary with different combinations. However, in essence, a (redundancy) sensing demander first initiates the sensing request, and then the SF respectively sends sensing control requests to a plurality of corresponding sensing nodes when the sensing request satisfies the condition for performing redundant sensing (for example, the sensing request carries the redundancy sensing indication), to obtain a plurality of pieces of sensing data, and implement redundant sensing. For the combinations of the foregoing cases, the following separately provides descriptions by using different embodiments.

Embodiment 1 is a case in which UE initiates a sensing request, and the sensing request needs to carry a redundant sensing indication, but a redundant sensing authorization check does not need to be performed. Embodiment 2 is a case in which an AF initiates a sensing request, and the sensing request needs to carry a redundancy sensing indication, but a redundant sensing authorization check does not need to be performed. Embodiment 3 is a case in which UE initiates a sensing request, the sensing request needs to carry a redundancy sensing indication, and a UDM performs a redundancy sensing authorization check. Embodiment 4 is a case in which an AF initiates a sensing request, the sensing request needs to carry a redundancy sensing indication, and a UDM performs a redundancy sensing authorization check. Embodiment 5 is a case in which UE initiates a sensing request, the sensing request does not need to carry a redundancy sensing indication, and a UDM performs a redundancy sensing authorization check. Embodiment 6 is a case in which an AF initiates a sensing request, the sensing request does not need to carry a redundancy sensing indication, and a UDM performs a redundancy sensing authorization check. Embodiment 7 is a case in which UE initiates a sensing request, the sensing request needs to carry a redundancy sensing indication, and an SF performs a redundancy sensing authorization check. Embodiment 8 is a case in which an AF initiates a sensing request, the sensing request needs to carry a redundancy sensing indication, and an SF performs a redundancy sensing authorization check. Embodiment 9 is a case in which UE initiates a sensing request, the sensing request does not need to carry a redundancy sensing indication, and an SF performs a redundancy sensing authorization check. Embodiment 10 is a case in which an AF initiates a sensing request, the sensing request does not need to carry a redundancy sensing indication, and an SF performs a redundancy sensing authorization check.

Redundancy sensing procedures in the embodiments of this application mainly relates to network elements such as the UE, the SF, the UDM, a NEF, and the AF. For ease of understanding, the following first briefly describes functions of the network elements in the embodiments of this application. The UE and the AF mainly serve as sensing demanders, and are configured to initiate sensing requests. The SF mainly receives a sensing request from another network element (for example, the UE, the AF, or the NEF), and respectively sends sensing control requests to a plurality of corresponding sensing nodes when the sensing request satisfies a condition for triggering redundancy sensing (for example, the sensing request carries a redundancy sensing indication), to obtain a plurality of pieces of sensing data. The UDM mainly performs an authorization check, including a redundancy sensing authorization check and/or another authorization check (for example, performing an authorization check on whether the AF has permission to initiate the sensing request, or performing an authorization check on whether the AF has permission to initiate a parameter creation request). The NEF serves as a communication bridge between the AF and UDM or between the AF and SF. Certainly, the functions of the foregoing network elements are not limited thereto. In addition, the overall procedures of implementing redundancy sensing through mutual collaboration between the network elements may vary with the combinations of the foregoing different cases.

The following first uses an example to describe an overall procedure of the technical solutions provided in embodiments of this application.

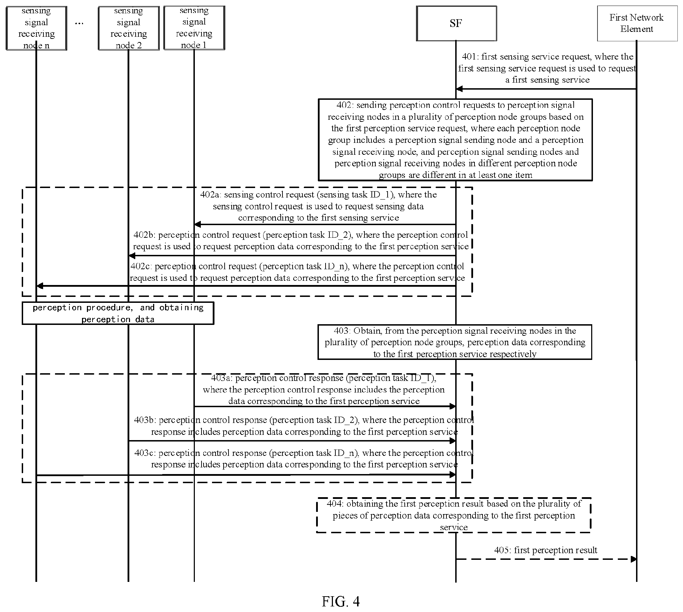

FIG. 4 is a schematic flowchart of a communication method according to an embodiment of this application. As shown in FIG. 4, the method may include but is not limited to the following steps.

401: A first network element sends a first sensing service request to an SF, where the first sensing service request is for requesting a first sensing service.

For example, when having a redundancy sensing requirement, the first network element may send the first sensing service request to the SF. Accordingly, the SF may receive the first sensing service request from the first network element.

The first network element may be a terminal device, may be an AF, may be a NEF, or may be another network element having a sensing requirement. This is not limited in this embodiment of this application. Optionally, when the first network element is the AF, the AF may send the first sensing service request to the SF via a NEF. Optionally, when the first network element is the terminal device, the terminal device may send the first sensing service request to the SF via an AMF, or the terminal device may directly send the first sensing service request to the SF, for example, directly send the first sensing service request to the SF through a user plane channel.

It should be understood that, in this embodiment of this application, there are a plurality of cases for a condition for performing redundancy sensing. The following provides several examples. Case 1: A sensing request only needs to carry a redundancy sensing indication, but a redundancy sensing authorization check does not need to be performed. Case 2: A sensing request needs to carry a redundant sensing indication, and redundant sensing needs to be authorized. Case 3: A sensing request does not need to carry a redundancy sensing indication, but redundancy sensing needs to be authorized. For the three cases, refer to the foregoing related descriptions.

Specifically, for the foregoing case 1, the first sensing service request may include the redundancy sensing indication, to trigger the SF to perform the first sensing service through redundancy sensing. For the foregoing case 2, the first sensing service request may also include the redundancy sensing indication, to trigger a redundancy sensing authorization check, and enable, when redundancy sensing is authorized, the SF to perform the first sensing service through redundancy sensing. For the foregoing case 3, the first sensing service request may not include the redundancy sensing indication, a redundancy sensing authorization check is triggered by default, and the SF is enabled, when redundancy sensing is authorized, to perform the first sensing service through redundancy sensing.

It should be understood that the redundancy sensing indication in the first sensing service request indicates to obtain a plurality of pieces of sensing data corresponding to the first sensing service, indicates to perform the first sensing service through redundancy sensing, indicates to obtain a sensing result of the first sensing service through redundancy sensing, indicates to perform sensing through redundancy sensing. Alternatively, indicating to obtain a plurality of pieces of sensing data corresponding to the first sensing service may be understood as indicating to perform the first sensing service through redundancy sensing, or may be understood as indicating to obtain a sensing result of the first sensing service through redundancy sensing. A definition of the redundancy sensing indication is not specifically limited in this embodiment of this application.

Optionally, for the foregoing case 1 and case 2, the first sensing service request may further include one or more of the following: a sensing service type, a sensing service requirement, a sensing area, and an application function identifier. For the foregoing case 3, the first sensing service request may include one or more of the following: a sensing service type, a sensing service requirement, a sensing area, and an application function identifier. It should be understood that when the first network element is the terminal device, the first sensing service request may not include the application function identifier, and may include a terminal device identifier.

Specifically, the sensing service type may indicate sensing service type information corresponding to the first sensing service request, namely, sensing service type information of the first sensing service, for example, may be a specific sensing service type identifier or sensing service type name. This is not limited in this embodiment of this application. There may be a plurality of sensing service types. The sensing service types may be predefined, or may be specified in a related standard. For example, the sensing service types may include drone traffic monitoring, traffic flow monitoring, map reconstruction, driving violation monitoring, abnormal-posture monitoring, and weather monitoring. It should be understood that the sensing service types may alternatively be classified or defined in another manner.

The sensing service requirement may indicate a requirement for a first sensing result, and may include one or more of range accuracy, velocity accuracy, angle accuracy, a range resolution, a velocity resolution, an angle resolution, a sensing delay, and the like. For example, the sensing service requirement in the first sensing service request may indicate that the range accuracy is 10 centimeters (cm) and that the range resolution is 1 cm.

The sensing area may indicate an area in which sensing is needed. The sensing area herein may be external area information, or may be internal area information. The external area information may be area information, for example, a specific geographical location or a geographical scope, defined or used by a non-operator network (for example, a third-party network to which the AF belongs or a map navigation service provider) and the like. For example, the external area information may be an airport C in a district B of a city A, an intersection D in the district B of the city A, or the like. The internal area information may be area information, for example, a tracking area identity (tracking area ID), a cell identity (cell ID), or a base station ID, defined or used by an operator network. It should be noted that, when the first sensing service request is from the AF, the sensing area herein may be the external area information. When the first sensing service request is from the terminal device or the NEF, the sensing area herein may be the internal area information, or may be the external area information.

The application function identifier is identification information of the AF, and may indicate the corresponding AF. The terminal device identifier is identification information of the terminal device, and may indicate the corresponding terminal device. For example, the terminal device identifier may be a generic public subscription identifier (generic public subscription identifier) or a subscription permanent identifier (subscription permanent identifier, SUPI).

It should be understood that the information included in the first sensing service request is merely an example for description, and should not be construed as a limitation. In addition to the redundant sensing indication, the information carried in the first sensing service request is not specifically limited in this embodiment of this application. For example, in addition to the sensing service type, the sensing service requirement, the sensing area, and the like, the first sensing service request may further include other information such as execution time of the first sensing service, duration of the first sensing service, and a frequency of performing the first sensing service.

402: The SF respectively sends sensing control requests to sensing signal receiving nodes in a plurality of sensing node groups based on the first sensing service request, where each sensing node group includes a sensing signal sending node and a sensing signal receiving node, and sensing signal sending nodes and/or sensing signal receiving nodes in different sensing node groups are different.

After receiving the first sensing service request from the first network element, the SF may respectively send the sensing control requests to the sensing signal receiving nodes in the plurality of sensing node groups based on the first sensing service request. Accordingly, the sensing signal receiving nodes in the plurality of sensing node groups may respectively receive the sensing control requests from the SF.

It should be understood that the SF may further respectively send sensing control requests to sensing signal sending nodes in the plurality of sensing node groups, where the sensing control request is for requesting the corresponding sensing signal sending node to send a sensing signal. Accordingly, the sensing signal sending nodes in the plurality of sensing node groups may respectively receive the sensing control requests from the SF. Then, the sensing signal sending nodes in the plurality of sensing node groups may respectively send sensing signals based on the corresponding sensing control requests, and the sensing signal receiving nodes in the plurality of sensing node groups may respectively receive corresponding reflected signals, and may obtain related data of the reflected signals (for example, receiving time of the reflected signals).

It may be understood that, for the foregoing case 1 and case 2, the SF may respectively send the sensing control request to the sensing signal receiving nodes in the plurality of sensing node groups based on the redundancy sensing indication in the first sensing service request. Specifically, for case 1, when determining that the first sensing service request includes the redundancy sensing indication, the SF may directly send the sensing control request to the sensing signal receiving nodes in the plurality of sensing node groups. For case 2, when determining that the first sensing service request includes the redundancy sensing indication, the SF performs an authorization check for redundancy sensing based on the first sensing service request, and in a case in which the authorization is passed (authorized), sends a sensing control request to the sensing signal receiving nodes in the plurality of sensing node groups respectively. However, for the foregoing case 3, the SF may directly perform an authorization check for redundancy sensing based on the first sensing service request, and in a case in which the authorization is passed, send a sensing control request to the sensing signal receiving nodes in the plurality of sensing node groups respectively.

In this embodiment of this application, there may be a plurality of authorization cases of redundancy sensing. For example, the UDM may be used as the authorizing party of redundancy sensing, or the SF may be used as the authorizing party of redundancy sensing.

When the UDM is used as an authorizing party of redundancy sensing, the SF may send a first sensing authorization request to the UDM based on the first sensing service request, where the first sensing authorization request is for requesting to perform an authorization check on the plurality of pieces of sensing data corresponding to the first sensing service. The requesting to perform an authorization check on the plurality of pieces of sensing data corresponding to the obtained first sensing service may also be understood as requesting to perform an authorization check on the first sensing service executed through redundancy sensing, which is not described in the following. Correspondingly, the UDM may receive the first sensing authorization request from the SF, and then the UDM may perform, based on the first sensing authorization request and the first redundancy sensing configuration information, an authorization check on the obtained plurality of pieces of sensing data corresponding to the first sensing service. In addition, when the first sensing authorization request satisfies the first redundancy sensing configuration information, the UDM may determine that obtaining the plurality of pieces of sensing data corresponding to the first sensing service is authorized, and may send a first authorization response to the SF, where the first authorization response indicates that the obtaining the plurality of pieces of sensing data corresponding to the first sensing service is authorized. Correspondingly, the SF may receive the first authorization response from the UDM, and may determine, based on the first authorization response, that obtaining the plurality of pieces of sensing data corresponding to the first sensing service is authorized. It should be understood that the first authorization response is also an authorization response in response to the first sensing authorization request.

Optionally, when receiving the first sensing service request, the SF may perform the first sensing service authorization by default through redundancy sensing, that is, obtain the plurality of pieces of sensing data corresponding to the first sensing service. For example, in this case, before the SF receives the first sensing service request, the UDM may first perform an authorization check on the first sensing service request. For example, before sending the first sensing service request to the SF, the NEF may request the UDM to perform an authorization check on the plurality of pieces of sensing data corresponding to the first sensing service. After the UDM performs an authorization check on the obtained plurality of pieces of sensing data corresponding to the first sensing service, that is, after the UDM performs an authorization check on the first sensing service through redundancy sensing, the UDM may return an authorization response message to the NEF to indicate an authorization result, and the NEF sends the first sensing service request to the SF only after obtaining a result indicating that the authorization succeeds. In other words, the NEF sends the first sensing service request to the SF only when determining that obtaining the plurality of pieces of sensing data corresponding to the first sensing service is authorized.

In some possible implementations, the first sensing authorization request may include a redundant sensing indication. In a case in which it is determined that the first sensing authorization request includes a redundancy sensing indication, the UDM performs, based on the first sensing authorization request and the first redundancy sensing configuration information, an authorization check on the obtained plurality of pieces of sensing data corresponding to the first sensing service.

Optionally, the first sensing authorization request may include one or more of the following: a sensing service type, a sensing area, an application function identifier, and a redundancy sensing indication. It should be understood that, when the first network element is a terminal device, the first sensing authorization request may not include the application function identifier, and may include the identifier of the terminal device.

Optionally, the first authorization response may include first authorization indication information, and the first authorization indication information indicates that obtaining the plurality of pieces of sensing data corresponding to the first sensing service is authorized. For example, the first grant indication information may be a redundancy sensing indication.

When the SF is used as an authorizing party of redundancy sensing, the SF may directly perform, based on the first sensing service request and the first redundancy sensing configuration information, an authorization check on the obtained plurality of pieces of sensing data corresponding to the first sensing service. In addition, when the first sensing service request satisfies the first redundancy sensing configuration information, the SF may determine that the authorization for obtaining the plurality of pieces of sensing data corresponding to the first sensing service is passed. It should be understood that, for the foregoing case 2, the SF may perform, based on the first sensing service request and the first redundancy sensing configuration information, an authorization check on obtaining the plurality of pieces of sensing data corresponding to the first sensing service in a case in which the first sensing service request includes a redundancy sensing indication.

The first redundancy sensing configuration information is used to determine whether the obtaining of the plurality of pieces of sensing data corresponding to the first sensing service is authorized. Specifically, when the first sensing service request satisfies the first redundancy sensing configuration information, it indicates that the first sensing service authorization is performed through redundancy sensing. Optionally, the first redundancy sensing configuration information may include one or more of the following: a sensing service type allowed to perform redundancy sensing, a sensing area allowed to perform redundancy sensing, an identifier of an application function allowed to perform redundancy sensing, and time allowed to perform redundancy sensing. That the first sensing service request satisfies the first redundancy sensing configuration information may be that at least one piece of information included in the first sensing service request satisfies at least one piece of information in the first redundancy sensing configuration information. For details, refer to the following related description.

It should be understood that the first redundancy sensing configuration information may be preconfigured, or may be dynamically configured (for example, dynamically configured by using a service-based interface of an SF or a UDM), or may be configured in another manner. This is not limited in this embodiment of this application.

The sensing service type that allows redundancy sensing is a service type that can perform redundancy sensing, and may include one or more sensing service types, such as 3D map reconstruction and drone monitoring. In this embodiment of this application, a type of a sensing service that allows redundancy sensing may be determined based on an actual situation or a sensing requirement. For example, for a specific sensing service (for example, an drone traffic monitoring service) that has a relatively high requirement on accuracy of a sensing result, redundancy sensing may be allowed, and for a sensing service that has a relatively low requirement on accuracy of a sensing result, redundancy sensing may not be allowed.

The sensing area that allows redundancy sensing is a sensing area that can perform redundancy sensing, and may include one or more sensing areas, for example, a sensing area 1 and a sensing area 2. In this embodiment of this application, a sensing area in which redundancy sensing is allowed may be determined based on an actual situation or a sensing requirement. For example, for a complex channel area (for example, a traffic intersection of a high-rise building and an overpass), redundancy sensing may be allowed. For another example, when it is obtained, based on historical sensing data analysis, that a sensing result of a area is different from an actual situation, the area may be configured to allow redundant sensing.

The time allowed to perform redundancy sensing is a time in which redundancy sensing may be performed, and may include one or more time periods. In this embodiment of this application, a time for allowing redundant sensing may be determined based on an actual situation or a sensing requirement. For example, when it is obtained, based on historical sensing data analysis, that a sensing result obtained in a time period generally deviates from an actual situation, the time period may be configured as allowing redundant sensing. For another example, in some scenarios in which accuracy of a sensing result needs to be improved, for example, a peak period of a crowd in a railway station or a peak period of a road in an early morning, redundant sensing may be allowed.

The identifier of the application function allowed to perform redundancy sensing is used to determine the AF that can perform redundancy sensing, such as the traffic authority AF and the air traffic control authority AF. The identifier of the terminal device allowed to perform redundancy sensing is used to determine the terminal device that can perform redundancy sensing, where the identifier of the terminal device allowed to perform redundancy sensing may be an identifier of a terminal device group or an identifier of a specific terminal device. It should be understood that the first redundancy sensing configuration information herein is for configuration of the SF itself, and does not distinguish a scenario in which the sensing request is from the terminal device or the AF, and should not constitute a limitation thereto. Definitely, for the two cases that the sensing request is from the terminal device or the AF, the redundancy sensing configuration information may also be respectively configured.

Based on the related configuration of the first redundancy sensing configuration information, the sensing authorizing party may match information included in the first sensing authorization request with the first redundancy sensing configuration information, to determine whether the first sensing authorization request satisfies the first redundancy sensing configuration information, that is, determine whether the obtaining of the plurality of pieces of sensing data corresponding to the first sensing service is authorized. Specifically, that the first sensing service request satisfies the first redundancy sensing configuration information may be that at least one piece of information included in the first sensing authorization request satisfies at least one piece of information in the first redundancy sensing configuration information. In this embodiment of this application, there may be a plurality of specific configuration cases of the first redundancy sensing configuration information, and the following respectively describes the first redundancy sensing configuration information.

One is to configure only one of the sensing service type allowed to perform redundancy sensing, the sensing area allowed to perform redundancy sensing, and the time allowed to perform redundancy sensing. In this case, when the information included in the first sensing authorization request satisfies the corresponding configuration, it may be determined that the first sensing authorization request is authorized. For example, only the sensing service type allowing redundancy sensing may be configured. Then, the SF may check whether the sensing service type included in the first sensing authorization request is the configured sensing service type allowing redundancy sensing. If yes, the SF may determine that the first sensing service request satisfies the first redundancy sensing configuration information, that is, may determine that obtaining authorization of plurality of pieces of sensing data corresponding to the first sensing service is passed. For another example, only the time allowed for performing redundancy sensing may be configured. Then, the SF may determine whether the time for receiving the first sensing authorization request (which is used as the execution time of the first sensing service by default) or the execution time of the first sensing service carried in the first sensing service request is within the configured time period allowed for performing redundancy sensing. If yes, the SF may determine that the first sensing service request satisfies the first redundancy sensing configuration information.

The other is to configure plurality of types of the sensing service type allowed to perform redundancy sensing, the sensing area allowed to perform redundancy sensing, and the time allowed to perform redundancy sensing, but the first sensing service request only needs to satisfy one of the types. For example, a sensing service type allowed for redundancy sensing and a sensing area allowed for redundancy sensing may be configured. After that, the SF may check whether the sensing service type included in the first sensing authorization request belongs to the configured sensing service type allowed for redundancy sensing, or whether the sensing area included in the first sensing authorization request belongs to the configured sensing area allowed for redundancy sensing. If one of the sensing service types belongs to the configured sensing area allowed for redundancy sensing, the SF may determine that the first sensing service request satisfies the first redundancy sensing configuration information.

Another method is to configure plurality of types of the sensing service type allowed to perform redundancy sensing, the sensing area allowed to perform redundancy sensing, and the time allowed to perform redundancy sensing, and the first sensing service request needs to satisfy plurality of types of the first sensing service request. For example, the sensing service type allowed for redundancy sensing and the sensing area allowed for redundancy sensing may be configured. After that, the SF may check whether the sensing service type included in the first sensing authorization request belongs to the configured sensing service type allowed for redundancy sensing, and whether the sensing area included in the first sensing authorization request belongs to the configured sensing area allowed for redundancy sensing. If both belong to the configured sensing service type and the sensing area, the SF may determine that the first sensing service request satisfies the first redundancy sensing configuration information.

Another method is to configure plurality of types of the sensing service type allowed to perform redundancy sensing, the sensing area allowed to perform redundancy sensing, and the time allowed to perform redundancy sensing, and the plurality of types of configurations have a binding relationship, and the first sensing service request needs to satisfy the binding relationship between the plurality of types of configurations and the corresponding. For example, the sensing area allowed to perform redundancy sensing and the time allowed to perform redundancy sensing may be configured, and there is a binding relationship between the two. Exemplarily, the sensing area may be configured as sensing area 1+time segment 1, sensing area 2+time segment 1, sensing area 3+time segment 2, and the like. Then, the SF may check whether the sensing area (for example, sensing area 1) included in the first sensing authorization request belongs to the configured sensing area allowing redundancy sensing, and whether the time of receiving the first sensing authorization request or the execution time of the first sensing service carried in the first sensing service request is within the corresponding configured time segment allowing redundancy sensing, it may be determined that the first sensing service request satisfies the first redundancy sensing configuration information. For another example, the identifier of the application function allowed to perform redundancy sensing and the type of the service allowed to perform redundancy sensing may be configured, and the two are in a binding relationship. For example, the application function identifier may be configured as an application function identifier 1 + a sensing service type 1, an application function identifier 2 + a sensing service type 1, an application function identifier 3 + a sensing service type, or the like.

It can be seen that the authorization check of redundancy sensing includes plurality of cases, and may be flexibly configured according to an actual situation.

It should be understood that, the information included in the first redundancy sensing configuration information may correspond to the data type of the information included in the first sensing authorization request, so that matching may be directly performed. For example, if the sensing service type allowed to perform redundancy sensing included in the first redundancy sensing configuration information is a sensing service ID, the sensing service type included in the first sensing authorization request may also be a corresponding sensing service ID. For another example, if the sensing area, on which redundancy sensing is allowed, included in the first redundancy sensing configuration information is a tracking area identifier, the sensing area included in the first sensing authorization request may also be a corresponding tracking area identifier.

It may be understood that the foregoing related description of the first redundancy sensing configuration information is merely an example for description, and does not constitute a limitation on the first redundancy sensing configuration information. In other possible implementations of the present application, the first redundancy sensing configuration information may further include more information that may be used for performing authorization check, for example, an identifier of a terminal device allowed to perform redundancy sensing, an identifier of an AF allowed to perform redundancy sensing, and the like.

It may be understood that, at least one of the sensing signal sending node and the sensing signal receiving node in different sensing node groups is different, so as to ensure as much as possible that transmission paths of sensing signals when different sensing node groups perform sensing are different, for example, transmission paths of reflected signals are different, thereby ensuring independence of each piece of sensing data and facilitating obtaining of an accurate sensing result. For example, it is assumed that there are three sensor node groups, namely, a sensor node group 1 to a sensor node group 3, and a reflected signal path of one sensor node group 1 is in a complex channel area. The finally obtained sensor data corresponding to the sensor node group 1 differs greatly from the sensor data corresponding to the other two sensor node groups (the sensor node group 2 and the sensor node group 3), and the sensor data corresponding to the sensor node group 2 and the sensor node group 3 is almost the same, it may be determined that the sensing data corresponding to the sensing node group 1 is biased, and then the sensing result may be obtained based on the sensing data corresponding to the sensing node group 2 and the sensing node group 3.

It should be noted that a quantity of sensor node groups is not limited in this embodiment of this application. For example, a quantity of corresponding sensor node groups may be preconfigured for different service types in advance, or may be specified by a sensing demander in a sensing request according to an actual requirement, or the quantity of sensor node groups may not be limited. For example, in a case in which a quantity of corresponding sensor node groups is preconfigured for different service types, for a sensing service that has a relatively high requirement for accuracy of a sensing result, a quantity of preconfigured sensor node groups may be relatively large (for example, 5 or more), and for a sensing service that has a relatively low requirement for accuracy of a sensing result, a quantity of preconfigured sensor node groups may be relatively small (for example, 2-4). For another example, from a perspective of a requirement for a sensing result, if only whether sensing data or sensing results are incorrect needs to be checked, a quantity of sensing node groups may be 2. In this case, if sensing data corresponding to two sensing node groups differs greatly or sensing results obtained based on the sensing data differ greatly, for example, greater than a first threshold, it may be determined that there is incorrect sensing data in the two pieces of sensing data or the sensing results are unreliable. If the sensing data with bias needs to be excluded, the number of sensing node groups may be 3, 4, 5, or more. In this way, sensing data corresponding to each sensing node group may be compared, and data corresponding to a sensing node group with a greatest difference is determined as incorrect sensing data. In a case in which the number of sensor node groups is not limited, the SF may select some or all of the sensor nodes from all the sensor nodes that satisfy the condition to form the sensor node group. For another example, the SF may select some or all of the sensing nodes that may cover the sensing area to form the sensing node group. The foregoing quantity of sensor node groups is merely an example for description, and should not constitute a limitation. For example, the quantity of sensor node groups may be further adjusted based on an actual situation.

It should be understood that, for a case in which a sensing demander specifies a quantity of sensor node groups in the sensing request according to an actual requirement, a sensor node group quantity parameter may be additionally carried in the sensing request to indicate a quantity of required sensor node groups. Optionally, the redundancy sensing indication may exist in a form of a sensing node group quantity parameter, that is, in a case in which the sensing request includes the sensing node group quantity parameter, a manner in which redundancy sensing needs to be used may be implicitly indicated. In this case, the quantity of sensing node groups indicated by the sensing node group quantity parameter is greater than or equal to 2, and in a case in which the sensing request does not include the sensing node group quantity parameter, a manner in which redundancy sensing does not need to be used may be implicitly indicated. Alternatively, when the quantity of sensor node groups indicated by the sensor node group quantity parameter is 1, the non-redundancy sensing manner may be implicitly indicated; and when the quantity of sensor node groups indicated by the sensor node group quantity parameter is greater than or equal to 2 (for example, 3, 4, or 5), the redundancy sensing manner may be implicitly indicated.

In some possible implementations, when determining the sensing node group, the SF may consider information carried in the first sensing service request, for example, a sensing requirement and a sensing area. In other words, the SF may determine the sensing node group based on information (such as a sensing requirement and a sensing area) carried in the first sensing service request. For example, when determining the sensing node group, the SF may determine the sensing node group from sensing nodes that can cover a corresponding sensing area. In addition, each sensing node group needs to satisfy a corresponding sensing requirement, that is, a sensing result obtained based on sensing data corresponding to each sensing node group can satisfy a corresponding sensing requirement. That is, when the sensing node group is determined, a capability (such as a receiving and sending capability and a bandwidth capability) of the sensing node needs to be considered. In addition, when determining the sensor node group, the SF may further consider priorities of corresponding sensor nodes, and may preferentially select a sensor node with a higher priority. Certainly, a manner of determining the sensor node group herein is merely an example for description, and should not constitute a limitation thereto.

It should be noted that, in this embodiment of this application, the sensing mode corresponding to the plurality of sensing node groups determined by the SF is not limited, and may be one sensing mode, or may be a plurality of sensing modes. In some possible implementations, the SF may first determine a sensing mode, and then determine sensor nodes that satisfy a corresponding sensing mode to form a sensor node group.

Optionally, the sensing control request includes a sensing task identifier (ID). Specifically, in a possible implementation, for each sensing node group of the first sensing service request, the SF may allocate a sensing task ID to each sensing node group or a sensing control request corresponding to each sensing node group, where the sensing task ID corresponds to the first sensing service or the first sensing service request, so that the SF subsequently determines, from the received sensing data, the first sensing service or the sensing data corresponding to the first sensing service request. Each sensing node group may correspond to a different sensing task ID. In this way, sensing data from different sensing node groups may be distinguished. In this case, the SF may maintain a correspondence between plurality of different sensing task IDs and the first sensing service or the first sensing service request. In another possible implementation, for each sensing node group of the first sensing service request, the SF may allocate a same sensing task ID to each sensing node group or a sensing control request corresponding to each sensing node group, where the sensing task ID corresponds to the first sensing service or the first sensing service request, so that the SF subsequently determines, from the received sensing data, the first sensing service or the sensing data corresponding to the first sensing service request. It should be understood that allocation of the sensing task ID herein is merely an example for description, and this is not limited in this embodiment of this application. For example, in still some possible implementations, a different sensing task ID may be allocated to each sensing control request.

Optionally, the sensing control request further includes configuration information. Specifically, to enable the sensing signal sending node and the sensing signal receiving node in each sensing node group to cooperate to complete the sensing procedure and obtain the sensing data, the sensing control request may further include related configuration information, such as a time domain resource, a frequency domain resource, a sending time, and a transceiver antenna configuration (such as 2T4R or 8T8R) for sending the sensing signal. Some configuration information may be determined based on a sensing service requirement. For example, a transceiver antenna configuration may be determined based on sensing resolution. Some configuration information may be determined based on an internal algorithm. For example, a time-frequency resource may be scheduled by using a resource scheduling algorithm.

It should be understood that, after receiving the corresponding sensing control request, the sensing signal receiving node and the sensing signal sending node in the plurality of sensing node groups may execute a corresponding sensing procedure, so that the sensing signal receiving node may obtain sensing data. Exemplarily, FIG. 4 uses n sensor node groups as an example, as shown in 402a, 402b, and 402c. The SF may send a sensing control request to the sensing signal receiving node 1, the sensing signal receiving node 2, ..., and the sensing signal receiving node n respectively, where the sensing control request may carry a sensing task ID_1, a sensing task ID_2, ..., and a sensing task ID_n respectively. Certainly, the SF may also send a sensing control request to the corresponding sensing signal sending node 1, sensing signal sending node 2, ..., and sensing signal sending node n respectively, where the sensing control request may also carry sensing task ID_1, sensing task ID_2, ..., and sensing task ID_n respectively, which is not shown in FIG. 4. The sensing signal sending node 1, the sensing signal sending node 2, ..., and the sensing signal sending node n may send a sensing signal based on a corresponding sensing control request, and the sensing signal receiving node 1, the sensing signal receiving node 2, ..., and the sensing signal receiving node n may respectively receive corresponding reflected signals to obtain sensing data. where n is an integer greater than or equal to 2, sensing signal sending node 1 and sensing signal receiving node 1 belong to sensing node group 1, sensing signal sending node 2 and sensing signal receiving node 2 belong to sensing node group 2, and sensing signal sending node n and sensing signal receiving node n belong to sensing node group n. It should be noted that the sensing signal sending node and the sensing signal receiving node in one sensing node group may be a same sensing node, or may be different sensing nodes.

403: The SF obtains, from the sensing signal receiving nodes in the plurality of sensing node groups, the sensing data corresponding to the first sensing service.

The SF may respectively obtain the sensing data corresponding to the first sensing service from the sensing signal receiving nodes in the plurality of sensing node groups. For example, after the sensing signal receiving node in the plurality of sensing node groups obtains the sensing data, the sensing signal receiving node in the plurality of sensing node groups may respectively send a sensing control response to the SF, where the sensing control response includes the sensing data corresponding to the first sensing service. Correspondingly, the SF may respectively receive the sensing control response from the sensing signal receiving node in the plurality of sensing node groups.

The sensing data corresponding to the first sensing service may include a reflected signal (for example, a reflected signal or a digital signal obtained after analog-to-digital conversion is performed on the reflected signal), or may include data related to the reflected signal, or may be data determined according to the reflected signal. This is not limited.

In a case in which the sensing control request includes a corresponding sensing task ID, the sensing control response sent by the sensing signal receiving node may also include a corresponding sensing task ID, and the SF may determine, based on the sensing task ID in the sensing control response, that the sensing data in the corresponding sensing control response is the first sensing service or the sensing data corresponding to the first sensing service request. Optionally, the SF may determine, based on a sensing task ID in the sensing control response and a correspondence between the sensing task ID and the first sensing service or the first sensing service request, that the corresponding sensing data in the sensing control response is the first sensing service or the sensing data corresponding to the first sensing service request. That is, after receiving the plurality of pieces of sensing data from the sensing signal receiving node in the plurality of sensing node groups and the sensing task IDs corresponding to the plurality of pieces of sensing data, the SF may determine, based on the sensing task IDs corresponding to the plurality of pieces of sensing data, that the plurality of pieces of sensing data are the first sensing service or the sensing data corresponding to the first sensing service request. For example, as shown in 403a, 403b, and 403c in FIG. 4, the SF may respectively receive sensing control responses sent by sensing signal receiving node 1, sensing signal receiving node 2, ..., and sensing signal receiving node n, where the sensing control responses may respectively carry sensing task ID_1, sensing task ID_2, ..., and sensing task ID_n, and are based on sensing task ID_1, sensing task ID_2, ..., and sensing task ID_n, the SF may determine that the corresponding sensing data is the sensing data corresponding to the first sensing service.

In some possible implementations, the communication method shown in FIG. 4 may further include step 404 and step 405.

404: The SF obtains the first sensing result based on the plurality of pieces of sensing data corresponding to the first sensing service.

After obtaining the plurality of pieces of sensing data corresponding to the first sensing service, the SF may obtain the first sensing result based on the plurality of pieces of sensing data corresponding to the first sensing service.

In this embodiment of this application, whether the sensing data or the sensing result has a bias may be checked based on the plurality of pieces of sensing data corresponding to the first sensing service. Further, the bias sensing data may be excluded.

For example, in a possible implementation, the SF may exclude, based on the plurality of pieces of sensing data corresponding to the first sensing service, bias sensing data from the plurality of pieces of sensing data, to obtain the target sensing data, where the target sensing data is sensing data in the plurality of pieces of sensing data except the bias sensing data. For example, the SF may compare plurality of pieces of sensing data corresponding to the first sensing service. If most (for example, more than half) of the sensing data is almost the same, and a small part (for example, less than half) of the sensing data is greatly different from the most of the data, the small part of the sensing data may be determined as bias sensing data, and may be ignored. For another example, the SF may obtain a sensing result based on each piece of sensing data in plurality of pieces of sensing data corresponding to the first sensing service, and then may compare the obtained plurality of sensing results. If most (for example, more than half) of the sensing results are almost the same, and a small part (for example, less than half) of the sensing result is greatly different from the most data, sensing data corresponding to the small part of the sensing result may be determined as bias sensing data, and may be ignored. The bias sensing data may also be understood as incorrect/incorrect sensing data, or sensing data that deviates greatly from an actual situation.

After obtaining the target sensing data, the SF may obtain the first sensing result based on the target sensing data. Specifically, the SF may obtain the first sensing result based on one piece of sensing data in the target sensing data, or may obtain the first sensing result based on a plurality of pieces of sensing data in the target sensing data, for example, perform comprehensive processing on the plurality of pieces of sensing data by using a specific algorithm, to obtain a relatively accurate sensing result. For example, one sensing result may be obtained based on each piece of sensing data in the target sensing data, and then a plurality of obtained sensing results may be averaged. In this way, accuracy of the sensing result can be ensured. It should be understood that a process of obtaining the first sensing result based on the target sensing data may include various procedures such as feature extraction and feature fusion. A specific process of obtaining the first sensing result based on the target sensing data is not limited in this embodiment of this application.

Optionally, the SF may record related information about a sensing node group that executes a sensing service, including information about a sensing signal sending node and a sensing signal receiving node in each sensing node group, and a correspondence between the sensing signal sending node and the sensing signal receiving node. Information about a sensor node may include but is not limited to an identifier and a location of the sensor node. Further, the SF may record, according to the obtained bias sensing data, related information of the sensing node group that provides the bias sensing data.

It should be noted that in some possible implementations, another network element may obtain the first sensing result based on a plurality of pieces of sensing data corresponding to the first sensing service. This is not limited in this embodiment of this application.

405: The SF sends the first sensing result to the first network element.

After obtaining the first sensing result, the SF may send the first sensing result to the first network element, or the SF may open the first sensing result by using the NEF. Correspondingly, the first network element may obtain the first sensing result from the NEF.

For ease of understanding, the following describes combinations of various possible cases by using Embodiment 1 to Embodiment 10 as examples. For related descriptions, refer to related descriptions in the method embodiment shown in FIG. 4.

### [Embodiment 1]

In this case of Embodiment 1, a redundant sensing indication needs to be carried in the sensing request to trigger redundant sensing, but an authorization check of the redundant sensing is not required. Therefore, if the UE needs to perform redundancy sensing, the sensing request may carry the redundancy sensing indication; otherwise, if the UE does not need to perform redundancy sensing, the sensing request may not carry the redundancy sensing indication. The following mainly uses a case in which redundancy sensing is carried as an example for description.

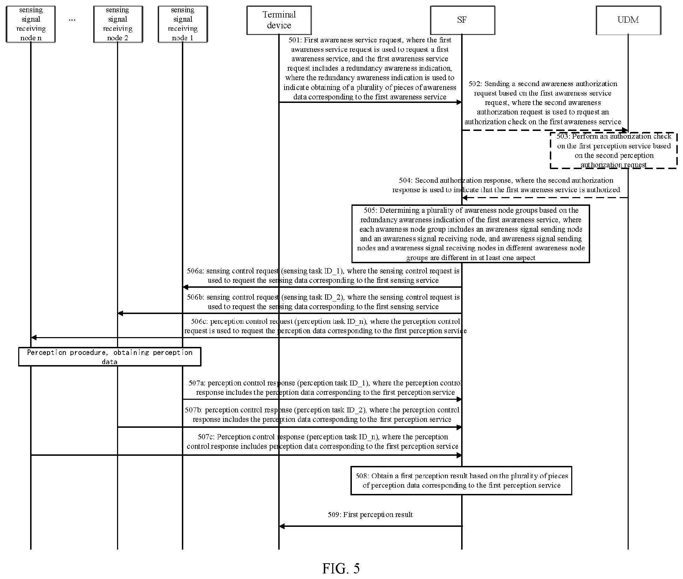

FIG. 5 is a schematic flowchart of another communication method according to an embodiment of this application. As shown in FIG. 5, the method may include but is not limited to the following steps.

501: sending, by a terminal device, a first sensing service request to an SF, where the first sensing service request is for requesting a first sensing service, the first sensing service request includes a redundancy sensing indication, and the redundancy sensing indication is used to instruct to obtain plurality of pieces of sensing data corresponding to the first sensing service.

Exemplarily, when there is a redundancy sensing requirement, the terminal device may send the first sensing service request to the SF. Correspondingly, the SF may receive the first perceived service request from the terminal device. In addition, to execute the first sensing service through redundancy sensing, the terminal device may carry a redundancy sensing indication in the first sensing service request, where the redundancy sensing indication may be understood as a redundancy sensing indication of the first sensing service. The instructing to obtain the plurality of pieces of sensing data corresponding to the first sensing service may also be understood as instructing to execute the first sensing service through redundancy sensing, and details are not described in the following.

Optionally, the first sensing service request may further include one or more of the following: a sensing service type, a sensing service requirement, a sensing area, and an identifier of a terminal device. For descriptions of the type of the sensing service, the requirement of the sensing service, the sensing area, and the identifier of the terminal device, reference may be made to related descriptions in step 401.

502: The SF sends a second sensing authorization request to the UDM based on the first sensing service request, where the second sensing authorization request is for requesting to perform an authorization check on the first sensing service.

After receiving the first sensing service request from the terminal device, the SF may send a second sensing authorization request to the UDM based on the first sensing service request. Correspondingly, the UDM may receive the second sensing authorization request from the SF. In some possible implementations, the second sensing authorization request may include information in the first sensing service request and/or other information obtained based on the information in the first sensing service request.

Optionally, the second sensing authorization request may include one or more of the following: a sensing service type, a sensing area, and an identifier of a terminal device.

Because the internal area information may be different from the external area information, when the first sensing service request carries the external area information, the SF may convert the external area information carried in the first sensing service request into the internal area information, and then may use the internal area information. For example, the sensing area in the second sensing authorization request may be internal area information obtained through conversion. Certainly, in some other possible implementations, another network element may alternatively convert the external area information into the internal area information.

503: The UDM performs an authorization check on the first sensing service based on the second sensing authorization request.

After receiving the second sensing authorization request from the SF, the UDM may perform an authorization check on the first sensing service based on the second sensing authorization request. Specifically, the UDM may obtain sensing authorization configuration information related to the second sensing authorization request, for example, obtain sensing authorization configuration information configured in advance in the UDM, and then may perform an authorization check on the first sensing service based on the second sensing authorization request and the sensing authorization configuration information.

Exemplarily, the sensing authorization configuration information may include one or more of a sensing service type allowed to be sensed, a sensing area allowed to be sensed, an identifier of a terminal device allowed to be sensed, a time allowed to be sensed, and the like.

It should be noted that the authorization check for the first sensing service herein does not include the authorization check for the redundancy sensing. For example, only the sensing permission of the initiator (such as the terminal device) of the sensing request may be checked to check whether the initiator has the permission to initiate the sensing request. Similarly, the sensing authorization configuration information herein is also different from the following redundancy sensing configuration information. The sensing authorization configuration information herein is mainly used to perform an authorization check that does not include redundancy sensing on the first sensing service, and the redundancy sensing configuration information is mainly used to perform an authorization check on the redundancy sensing of the first sensing service. For ease of distinguishing from the following redundancy sensing configuration information, the sensing authorization configuration information herein may be referred to as non-redundancy sensing configuration information.

504: The UDM sends a second authorization response to the SF, where the second authorization response indicates that the first sensing service is authorized.

When the UDM determines, based on the second sensing authorization request, that the first sensing service is authorized, the UDM may send a second authorization response to the SF. Correspondingly, the SF may receive the second grant response from the UDM.

Optionally, the second authorization response may include second authorization indication information, and the second authorization indication information indicates that the first sensing service is authorized, that is, indicate that the first service is authorized.

It should be noted that the foregoing steps 502 to 504 are optional, and in some possible implementations, steps 502 to 504 may not be performed. In this case, step 505 may be directly performed after step 501. That is, after receiving the first perceived service request from the terminal device, the SF may directly perform step 505.

505: The SF determines plurality of sensing node groups based on a redundancy sensing indication of the first sensing service, where each sensing node group includes a sensing signal sending node and a sensing signal receiving node, and at least one of the sensing signal sending node and the sensing signal receiving node in different sensing node groups is different.

The SF may determine, based on the redundancy sensing indication in the first sensing service request, that the redundancy sensing manner needs to be used for sensing. There are plurality of possible cases in which the SF determines the plurality of sensing node groups based on the redundancy sensing indication of the first sensing service. For example, in one case, the SF may determine the plurality of sensing node groups directly based on the redundancy sensing indication in the first sensing service request after receiving the first sensing service request from the terminal device. For another example, in one case, the SF may determine the plurality of sensing node groups based on the redundancy sensing indication in the first sensing service request after receiving the second authorization response from the UDM, that is, in a case in which the first sensing service is authorized, the SF determines the plurality of sensing node groups based on the redundancy sensing indication in the first sensing service request.

For related operations of determining the sensor node group by the SF, refer to related descriptions in step 402.

It should be understood that, in a case in which an authorization check does not need to be performed on the first sensing service, if the first sensing service request does not carry a redundancy sensing indication, the SF may execute the first sensing service through non-redundant sensing. In a case in which an authorization check needs to be performed on the first sensing service, if the first sensing service request does not carry a redundancy sensing indication, and the first sensing service is authorized, the SF may execute the first sensing service through non-redundant sensing. If the first sensing service request carries/does not carry a redundancy sensing indication, and the first sensing service is not authorized, the SF may reject the first sensing service request.

506: The SF respectively sends a sensing control request to the sensing signal receiving nodes in the plurality of sensing node groups, where the sensing control request is for requesting sensing data corresponding to the first sensing service.

After determining the plurality of sensing node groups, the SF may respectively send a sensing control request to the sensing signal receiving nodes in the plurality of sensing node groups, where the sensing control request is for requesting sensing data corresponding to the first sensing service. Accordingly, the sensing signal receiving nodes in the plurality of sensing node groups may respectively receive the sensing control requests from the SF.

In a possible implementation, the SF may respectively send the sensing control request to the sensing signal receiving nodes in the plurality of sensing node groups by using an intermediate network element (for example, an AMF). Correspondingly, the SF may also respectively send the sensing control request to the sensing signal sending nodes in the plurality of sensing node groups by using an intermediate network element (for example, an AMF). In other words, the SF may communicate with the terminal device or the access network device by using the AMF.

507: The SF respectively receives a sensing control response from the sensing signal receiving node in the plurality of sensing node groups, where the sensing control response includes sensing data corresponding to the first sensing service.

508: The SF obtains the first sensing result based on the plurality of pieces of sensing data corresponding to the first sensing service.

509: The SF sends the first sensing result to the terminal device.

After obtaining the first sensing result, the SF may send the first sensing result to the terminal device, or the SF may open the first sensing result by using the NEF.

A principle of step 506 to step 509 is similar to that of step 402 to step 405. For details, refer to related descriptions in step 402 to step 405.

In some possible implementations, the terminal device in FIG. 5 may also be replaced with an AF. In other words, an operation performed by the terminal device may also be performed by the AF.

### [Embodiment 2]

Same as Embodiment 1, in this case of Embodiment 2, a redundant sensing indication needs to be carried in the sensing request to trigger redundant sensing, but an authorization check of the redundant sensing is not required. Therefore, if the AF needs to perform redundancy sensing, the sensing request may carry the redundancy sensing indication; otherwise, if the AF does not need to perform redundancy sensing, the sensing request may not carry the redundancy sensing indication. The following mainly uses a case in which redundancy sensing is carried as an example for description. A main difference between Embodiment 1 and Embodiment 2 lies in that the initiator of the sensing request is different, and the two may be mutually referenced.

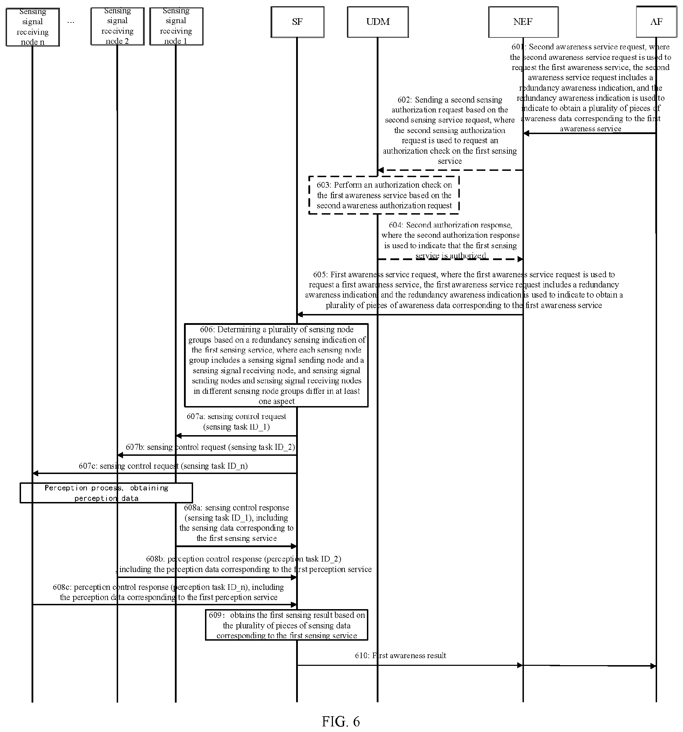

FIG. 6 is a schematic flowchart of another communication method according to an embodiment of this application. As shown in FIG. 6, the method may include but is not limited to the following steps.

601: The AF sends a second sensing service request to the NEF, where the second sensing service request is for requesting a first sensing service, the second sensing service request includes a redundancy sensing indication, and the redundancy sensing indication is used to instruct to obtain plurality of pieces of sensing data corresponding to the first sensing service.

Exemplarily, when there is a redundancy sensing requirement, the AF may send the second sensing service request to the NEF. Correspondingly, the NEF may receive the second sensing service request from the AF. In addition, to execute the first sensing service through redundancy sensing, the AF may carry a redundancy sensing indication in the second sensing service request, where the redundancy sensing indication may be understood as the redundancy sensing indication of the first sensing service. The instructing to obtain the plurality of pieces of sensing data corresponding to the first sensing service may also be understood as instructing to execute the first sensing service through redundancy sensing, and details are not described in the following.

Optionally, the second sensing service request may further include one or more of the following: a sensing service type, a sensing service requirement, a sensing area, and an application function identifier (AF ID). For descriptions of the sensing service type, the sensing service requirement, and the sensing area, refer to related descriptions in step 401. However, it should be understood that, because the AF is outside the network, the sensing area in the second sensing service request may be external area information.

It should be understood that the information included in the second sensing service request is merely an example for description, and should not be construed as a limitation. In addition to the redundant sensing indication, the information carried in the second sensing service request is not specifically limited in this embodiment of this application. For example, in addition to the foregoing type of the sensing service, the sensing service requirement, the sensing area, and the application function identifier, the second sensing service request may further include other information, such as execution time of the first sensing service, duration of the first sensing service, and execution frequency.

602: The NEF sends a second sensing authorization request to the UDM based on the second sensing service request, where the second sensing authorization request is for requesting to perform an authorization check on the first sensing service.

After receiving the second sensing service request from the AF, the NEF may send the second sensing authorization request to the UDM based on the second sensing service request. Correspondingly, the UDM may receive the second sensing authorization request from the AF.

The second sensing authorization request may include one or more of the following: a sensing service type, a sensing area, and an application function identifier.

Because the second sensing service request carries the external area information, the NEF may convert the external area information carried in the second sensing service request into the internal area information, and then may use the internal area information. For example, the sensing area in the second sensed authorization request and the first sensing service request sent by the NEF may be internal area information obtained through conversion.

603: The UDM performs an authorization check on the first sensing service based on the second sensing authorization request.

604: The UDM sends a second authorization response to the NEF, where the second authorization response indicates that the first sensing service is authorized.

When the UDM determines, based on the second sensing authorization request, that the first sensing service is authorized, the UDM may send a second authorization response to the NEF. Correspondingly, the NEF may receive the second grant response from the UDM. Optionally, the second authorization response may include second authorization indication information, and the second authorization indication information indicates that the first sensing service is authorized.

It should be noted that the foregoing steps 602 to 604 are optional, and in some possible implementations, steps 602 to 604 may not be performed. In this case, step 605 may be directly performed after step 601. That is, after receiving the second sensing service request from the AF, the NEF may directly perform step 605.

Steps 602 to 604 are similar to steps 502 to 504. For details, refer to related descriptions in the foregoing steps 502 to 504. Details are not described herein again.

605: The NEF sends a first sensing service request to the SF, where the first sensing service request is for requesting a first sensing service, the first sensing service request includes a redundancy sensing indication, and the redundancy sensing indication is used to instruct to obtain plurality of pieces of sensing data corresponding to the first sensing service.

The sending, by the NEF, the first sensing service request to the SF includes a plurality of possible cases. For example, in one case, after receiving the second sensing service request from the AF, the NEF may directly send the first sensing service request to the SF based on the second sensing service request. For another example, in one case, after receiving the second authorization response from the UDM, the NEF may send the first sensing service request to the SF based on the second sensing service request, that is, when the first sensing service is authorized, the NEF sends the first sensing service request to the SF based on the second sensing service request.

It should be understood that the redundancy sensing indication in the first sensing service request may be understood as a redundancy sensing indication of the first sensing service.

Optionally, the first sensing service request may further include one or more of the following: a sensing service type, a sensing service requirement, a sensing area, and an application function identifier (AF ID).

It may be understood that the first sensing service request may be obtained based on the second sensing service request. For example, the first sensing service request may be the same as the second sensing service request, and only external information in the second sensing service request is converted into internal information. In this case, it is equivalent to that the NEF only forwards the second sensing service request.

606: The SF determines plurality of sensing node groups based on a redundancy sensing indication of the first sensing service, where each sensing node group includes a sensing signal sending node and a sensing signal receiving node, and at least one of the sensing signal sending node and the sensing signal receiving node in different sensing node groups is different.

After receiving the first sensing service request from the NEF, the SF may determine, based on the redundancy sensing indication in the first sensing service request, that the redundancy sensing manner needs to be used to perform sensing. Therefore, the SF may determine plurality of sensing node groups.

It should be understood that, in a case in which an authorization check does not need to be performed on the first sensing service, if the second sensing service request does not carry a redundancy sensing indication, the SF may execute the first sensing service through non-redundant sensing. In a case in which an authorization check needs to be performed on the first sensing service, if the second sensing service request does not carry a redundancy sensing indication, and the first sensing service is authorized, the SF may execute the first sensing service through non-redundant sensing. If the second sensing service request carries/does not carry a redundancy sensing indication, and the first sensing service is not authorized, the NEF may reject the second sensing service request.

For related operations of determining the sensor node group by the SF, refer to related descriptions in step 402.

It should be further understood that, when an authorization check needs to be performed on the first sensing service, the foregoing authorization check is initiated by the NEF to the UDM. However, in some other possible implementations of this application, the SF may also initiate the authorization check to the UDM. In this case, steps 601 and 605 may be first performed, and then the SF initiates an authorization check to the UDM. Then, the SF may perform corresponding processing according to an authorization situation. For example, in a case in which the first sensing service is authorized, the SF may determine plurality of sensing node groups based on the redundancy sensing indication of the first sensing service, and in a case in which the first sensing service is not authorized, the SF may reject the first sensing service request.

607: The SF respectively sends a sensing control request to the sensing signal receiving nodes in the plurality of sensing node groups, where the sensing control request is for requesting sensing data corresponding to the first sensing service.

608: The SF respectively receives a sensing control response from the sensing signal receiving node in the plurality of sensing node groups, where the sensing control response includes sensing data corresponding to the first sensing service.

609: The SF obtains the first sensing result based on the plurality of pieces of sensing data corresponding to the first sensing service.

A principle of steps 607 to 609 is similar to that of steps 402 to 404, and reference may be further made to related descriptions of steps 402 to 404.

610: The SF sends the first sensing result to the AF by using the NEF.

After obtaining the first sensing result, the SF may open the first sensing result by using the NEF. Correspondingly, the AF may obtain the first sensing result from the NEF.

### [Embodiment 3]

In this case of Embodiment 3, a redundant sensing indication needs to be carried in the sensing request to trigger redundant sensing, and the UDM needs to perform an authorization check for the redundant sensing. Therefore, if the UE needs to perform redundancy sensing, the redundancy sensing indication may be carried in the sensing request, and the redundancy sensing can be performed only when the redundancy sensing is authorized subsequently. On the contrary, if the UE does not need to perform redundancy sensing, the redundancy sensing indication may not be carried in the sensing request. The following mainly uses a case in which redundancy sensing is carried as an example for description.

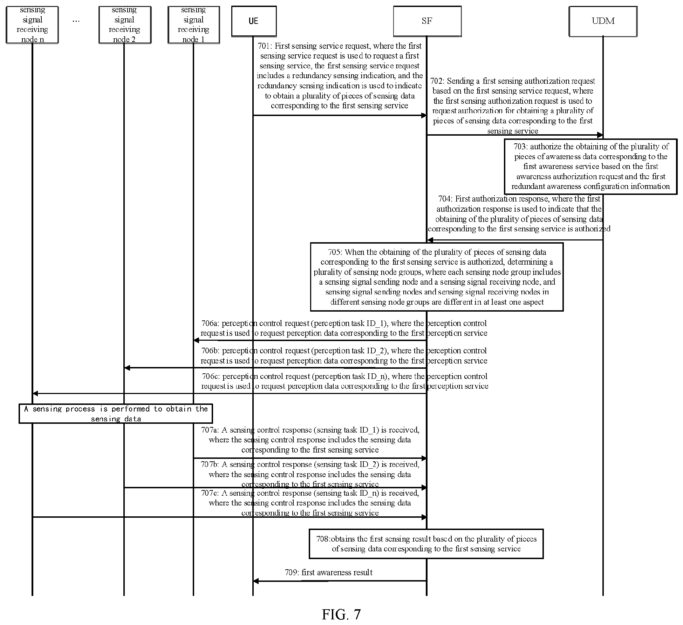

FIG. 7 is a schematic flowchart of still another communication method according to an embodiment of this application. As shown in FIG. 7, the method may include but is not limited to the following steps.

701: sending, by a terminal device, a first sensing service request to an SF, where the first sensing service request is for requesting a first sensing service, the first sensing service request includes a redundancy sensing indication, and the redundancy sensing indication is used to instruct to obtain plurality of pieces of sensing data corresponding to the first sensing service.

The instructing to obtain the plurality of pieces of sensing data corresponding to the first sensing service may also be understood as instructing to execute the first sensing service through redundancy sensing, and details are not described in the following.

Step 701 is similar to step 501. For details, refer to related descriptions in step 501. Details are not described herein again.

702: The SF sends a first sensing authorization request to the UDM based on the first sensing service request, where the first sensing authorization request is for requesting to perform an authorization check on the plurality of pieces of sensing data corresponding to the first sensing service.

After receiving the first sensing service request from the terminal device, the SF may determine, based on the redundancy sensing indication in the first sensing service request, that the redundancy sensing mode needs to be used for sensing, and may send a first sensing authorization request to the UDM. Correspondingly, the UDM may receive the first sensing authorization request from the SF. In some possible implementations, the first sensing authorization request may include information in the first sensing service request and/or other information obtained based on the information in the first sensing service request.

It should be understood that the first sensing authorization request is for requesting to perform an authorization check on the plurality of pieces of sensing data corresponding to the first sensing service, or may be understood as being for requesting to perform an authorization check on redundant sensing of the first sensing service, or for requesting to perform an authorization check on the first sensing service executed in a manner of/using redundant sensing.

Optionally, the first sensing authorization request may include one or more of the following: a sensing service type, a sensing area, an identifier of a terminal device, and a redundancy sensing indication. It should be understood that, in a case in which the first sensing authorization request includes the redundancy sensing indication, the redundancy sensing indication is not used for authorization check, but is used to notify the UDM that the redundancy sensing authorization check needs to be performed. On the contrary, if the first sensing authorization request does not include the redundancy sensing indication, it indicates that the redundancy sensing authorization check does not need to be performed, and other authorization checks may be performed (for example, the authorization check is performed on the first sensing service as shown in the foregoing Embodiment 1 and Embodiment 2).

Because the internal area information may be different from the external area information, when the sensing area carried in the first sensing service request is external area information, the SF may convert the external area information carried in the first sensing service request into the internal area information, and then may use the internal area information. For example, the sensing area in the first sensing authorization request may be internal area information obtained through conversion. Certainly, in some other possible implementations, another network element may alternatively convert the external area information into the internal area information.

703: The UDM performs, based on the first sensing authorization request and the first redundancy sensing configuration information, an authorization check on the obtained plurality of pieces of sensing data corresponding to the first sensing service.

After receiving the first sensing authorization request from the SF, the UDM may perform, based on the first sensing authorization request and the first redundancy sensing configuration information, an authorization check on the obtained plurality of pieces of sensing data corresponding to the first sensing service. It should be noted that performing authorization and performing authorization check in this embodiment of this application have a same meaning.

Optionally, the first redundancy sensing configuration information includes one or more of the following: a sensing service type allowed to perform redundancy sensing, a sensing area allowed to perform redundancy sensing, time allowed to perform redundancy sensing, an identifier of a terminal device allowed to perform redundancy sensing, and an identifier (AF ID) of an application function allowed to perform redundancy sensing.

For the description of the redundancy sensing configuration information and the authorization of the redundancy sensing, refer to the related description in step 402.

704: The UDM sends a first authorization response to the SF, where the first authorization response indicates that obtaining the plurality of pieces of sensing data corresponding to the first sensing service is authorized.

In a case in which the UDM determines, based on the first sensing authorization request and the first redundancy sensing configuration information, that the obtaining of the plurality of pieces of sensing data corresponding to the first sensing service is authorized, the UDM may send a first authorization response to the SF. Correspondingly, the SF may receive the first grant response from the UDM.

Optionally, the first authorization response includes first authorization indication information, and the first authorization indication information indicates that obtaining the plurality of pieces of sensing data corresponding to the first sensing service is authorized. For example, the first grant indication information may be a redundancy sensing indication.

In this embodiment of this application, when the obtaining of the plurality of pieces of sensing data corresponding to the first sensing service is not authorized, the UDM includes a plurality of possible processing cases. In one case, the UDM directly sends an authorization response to the SF, where the authorization response includes first instruction information, and the first instruction information is used to instruct to use a non-redundant sensing manner to execute the first sensing service, or is used to instruct to reject the first sensing service (request). In another case, the UDM directly sends an authorization response to the SF, where the authorization response does not include the first authorization indication information, and the SF determines, according to that the authorization response information does not include the first authorization indication information, to use the non-redundancy sensing manner to execute the first sensing service. In another case, the UDM continues to perform an authorization check on the first sensing service (referring to related descriptions in Embodiment 1 and Embodiment 2). When the first sensing service is authorized, the UDM may send an authorization response to the SF, where the authorization response includes first instruction information, and the first instruction information is used to instruct to perform the first sensing service through non-redundant sensing. When the first sensing service is not authorized, the UDM may send an authorization response to the SF, where the authorization response includes second instruction information, and the second instruction information is used to instruct to reject the first sensing service (request). The foregoing second case is equivalent to that an authorization check is first performed on the obtained plurality of pieces of sensing data corresponding to the first sensing service, and then an authorization check is performed on the first sensing service when the obtained plurality of pieces of sensing data corresponding to the first sensing service are not authorized. However, in some other possible implementations of this application, the first sensing service being authorized may be a prerequisite for authorization of obtaining the plurality of pieces of sensing data corresponding to the first sensing service. That is, the first sensing service needs to be authorized first, and authorization of obtaining the plurality of pieces of sensing data corresponding to the first sensing service can be further performed only when the first sensing service is authorized, and the first sensing service request may be directly rejected when the first sensing service is not authorized, a specific authorization procedure is related to a related implementation. This is not limited in this embodiment of this application. This embodiment of this application mainly focuses on an authorization status of obtaining a plurality of pieces of sensing data corresponding to the first sensing service.

705: When obtaining that the plurality of pieces of sensing data corresponding to the first sensing service are authorized, the SF determines plurality of sensing node groups, where each sensing node group includes a sensing signal sending node and a sensing signal receiving node, and at least one of the sensing signal sending node and the sensing signal receiving node in different sensing node groups is different.

After receiving the first authorization response from the UDM, the SF may determine that obtaining the plurality of pieces of sensing data corresponding to the first sensing service is authorized. Then, the SF may determine the plurality of sensing node groups. For related operations of determining the sensor node group by the SF, refer to related descriptions in step 402.

Optionally, the SF may determine, based on the first authorization indication information in the first authorization response, that obtaining the plurality of pieces of sensing data corresponding to the first sensing service is authorized.

It may be understood that, in a case in which the first sensing service request does not carry a redundancy sensing indication, the UDM may further perform/not perform an authorization check on the first sensing service (referring to related descriptions in Embodiment 1 and Embodiment 2). In a case in which an authorization check does not need to be performed on the first sensing service, if the first sensing service request does not carry a redundancy sensing indication, the SF may directly execute the first sensing service through non-redundant sensing. In a case in which an authorization check needs to be performed on the first sensing service, if the first sensing service request does not carry a redundancy sensing indication, and the first sensing service is authorized, the SF may execute the first sensing service through non-redundant sensing. If the first sensing service request does not carry a redundancy sensing indication, and the first sensing service is not authorized, the SF may reject the first sensing service request.

706: The SF respectively sends a sensing control request to the sensing signal receiving nodes in the plurality of sensing node groups, where the sensing control request is for requesting sensing data corresponding to the first sensing service.

707: The SF respectively receives a sensing control response from the sensing signal receiving node in the plurality of sensing node groups, where the sensing control response includes sensing data corresponding to the first sensing service.

708: The SF obtains the first sensing result based on the plurality of pieces of sensing data corresponding to the first sensing service.

A principle of steps 706 to 708 is similar to that of steps 402 to 404. For details, refer to related descriptions in steps 402 to 404.

709: The SF sends the first sensing result to the terminal device.

In some possible implementations, the terminal device in FIG. 7 may also be replaced with an AF. In other words, an operation performed by the terminal device may also be performed by the AF.

### [Embodiment 4]

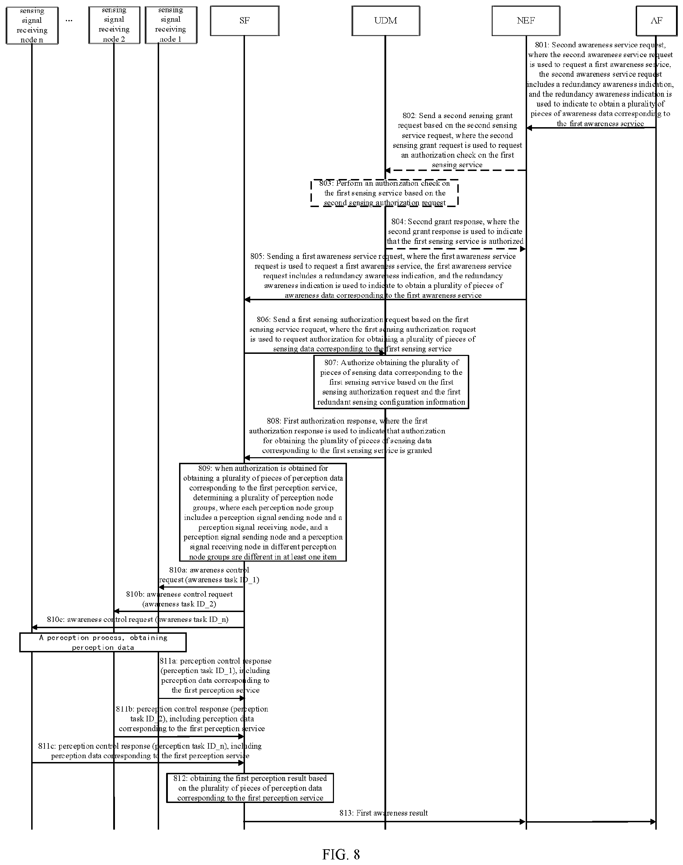

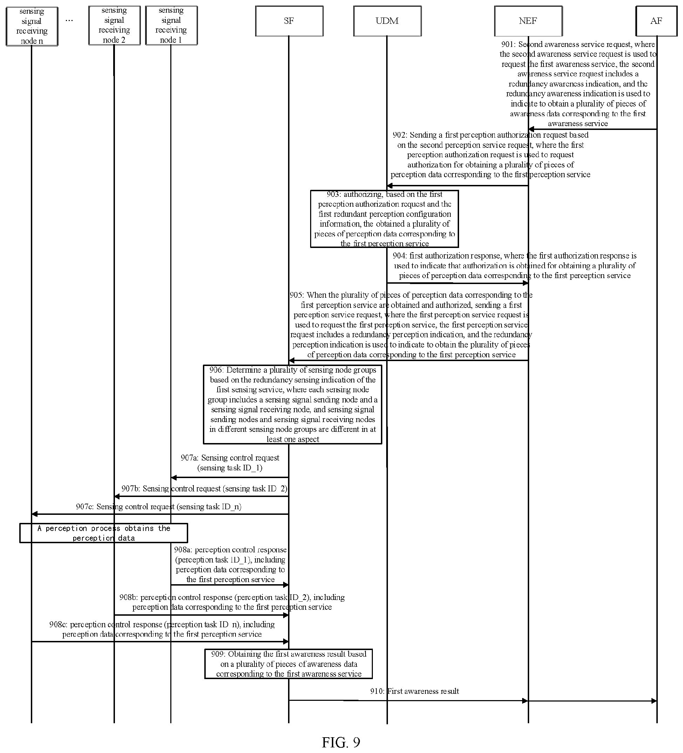

In this case of Embodiment 4, a redundant sensing indication needs to be carried in the sensing request to trigger redundant sensing, and a UDM needs to perform an authorization check for the redundant sensing. Therefore, if the AF needs to perform redundancy sensing, the redundancy sensing indication may be carried in the sensing request, and the redundancy sensing can be performed only when the redundancy sensing is authorized. On the contrary, if the UE does not need to perform redundancy sensing, the redundancy sensing indication may not be carried in the sensing request. In addition, in a case in which the AF initiates a redundancy sensing request, there may be two cases of triggering redundancy sensing authorization. One is that the SF initiates a redundancy sensing authorization request to the UDM (FIG. 8), and the other is that the NEF initiates a redundancy sensing authorization request to the UDM (FIG. 9). The following respectively provides examples for description.

FIG. 8A to FIG. 8C are a schematic flowchart of yet another communication method according to an embodiment of this application. As shown in FIG. 8, the method may include but is not limited to the following steps.

801: The AF sends a second sensing service request to the NEF, where the second sensing service request is for requesting a first sensing service, the second sensing service request includes a redundancy sensing indication, and the redundancy sensing indication is used to instruct to obtain plurality of pieces of sensing data corresponding to the first sensing service.

The instructing to obtain the plurality of pieces of sensing data corresponding to the first sensing service may also be understood as instructing to execute the first sensing service through redundancy sensing, and details are not described in the following.

802: The NEF sends a second sensing authorization request to the UDM based on the second sensing service request, where the second sensing authorization request is for requesting to perform an authorization check on the first sensing service.

803: The UDM performs an authorization check on the first sensing service based on the second sensing authorization request.

804: The UDM sends a second authorization response to the NEF, where the second authorization response indicates that the first sensing service is authorized.

It should be noted that steps 802 to 804 are optional. In some possible implementations, steps 802 to 804 may not be performed. In this case, step 805 may be directly performed after step 801. That is, after receiving the second sensing service request from the AF, the NEF may directly perform step 805.

805: The NEF sends a first sensing service request to the SF, where the first sensing service request is for requesting a first sensing service, the first sensing service request includes a redundancy sensing indication, and the redundancy sensing indication is used to instruct to obtain plurality of pieces of sensing data corresponding to the first sensing service.

Steps 801 to 805 are similar to the foregoing steps 601 to 605, and reference may be made to related descriptions in the foregoing steps 601 to 605, including related descriptions of the second sensing service request and the first sensing service request.

806: The SF sends a first sensing authorization request to the UDM based on the first sensing service request, where the first sensing authorization request is for requesting to perform an authorization check on the plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

807: The UDM performs, based on the first sensing authorization request and the first redundancy sensing configuration information, an authorization check on the obtained plurality of pieces of sensing data corresponding to the first sensing service.

808: The UDM sends a first authorization response to the SF, where the first authorization response indicates that obtaining the plurality of pieces of sensing data corresponding to the first sensing service is authorized.

809: When obtaining that the plurality of pieces of sensing data corresponding to the first sensing service are authorized, the SF determines plurality of sensing node groups, where each sensing node group includes a sensing signal sending node and a sensing signal receiving node, and at least one of the sensing signal sending node and the sensing signal receiving node in different sensing node groups is different.

810: The SF respectively sends a sensing control request to the sensing signal receiving nodes in the plurality of sensing node groups, where the sensing control request is for requesting sensing data corresponding to the first sensing service.

811: The SF respectively receives a sensing control response from the sensing signal receiving node in the plurality of sensing node groups, where the sensing control response includes sensing data corresponding to the first sensing service.

812: The SF obtains the first sensing result based on the plurality of pieces of sensing data corresponding to the first sensing service.

Steps 806 to 812 are similar to the foregoing steps 702 to 708, and reference may be made to related descriptions of the foregoing steps 702 to 708.

813: The SF sends the first sensing result to the AF by using the NEF.

FIG. 9 is a schematic flowchart of still another communication method according to an embodiment of this application. As shown in FIG. 9, the method may include but is not limited to the following steps.

901: The AF sends a second sensing service request to the NEF, where the second sensing service request is for requesting a first sensing service, the second sensing service request includes a redundancy sensing indication, and the redundancy sensing indication is used to instruct to obtain plurality of pieces of sensing data corresponding to the first sensing service.

The instructing to obtain the plurality of pieces of sensing data corresponding to the first sensing service may also be understood as instructing to execute the first sensing service through redundancy sensing, and details are not described in the following.

Step 901 is similar to step 601, and reference may be made to related descriptions in step 601.

902: The NEF sends a first sensing authorization request to the UDM based on the second sensing service request, where the first sensing authorization request is for requesting to perform an authorization check on the plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

After receiving the second sensing service request from the AF, the NEF may determine, based on the redundancy sensing indication in the second sensing service request, that the redundancy sensing manner needs to be used to perform sensing, and may send the first sensing authorization request to the UDM. Correspondingly, the UDM may receive the first sensing authorization request from the NEF. In some possible implementations, the first sensing authorization request may include information in the second sensing service request and/or other information obtained based on the information in the second sensing service request.

Optionally, the first sensing authorization request may include one or more of the following: a sensing service type, a sensing area, an application function identifier, and a redundancy sensing indication. It should be understood that, in a case in which the first sensing authorization request includes the redundancy sensing indication, the redundancy sensing indication is not used for authorization check, but is used to notify the UDM that the redundancy sensing authorization check needs to be performed. On the contrary, if the first sensing authorization request does not include the redundancy sensing indication, it indicates that the redundancy sensing authorization check does not need to be performed, and other authorization checks may be performed (for example, the authorization check is performed on the first sensing service as shown in the foregoing Embodiment 1 and Embodiment 2).

Because the internal area information may be different from the external area information, when the sensing area carried in the second sensing service request is external area information, the NEF may convert the external area information carried in the second sensing service request into the internal area information, and then may use the internal area information. For example, the sensing area in the first sensing authorization request may be internal area information obtained through conversion. Certainly, in some other possible implementations, another network element may alternatively convert the external area information into the internal area information.

903: The UDM performs, based on the first sensing authorization request and the first redundancy sensing configuration information, an authorization check on the obtained plurality of pieces of sensing data corresponding to the first sensing service.

904: The UDM sends a first authorization response to the SF, where the first authorization response indicates that obtaining the plurality of pieces of sensing data corresponding to the first sensing service is authorized.

Steps 902 to 904 are similar to steps 702 to 704. For details, refer to related descriptions in steps 702 to 704.

In this embodiment of this application, when the obtaining of the plurality of pieces of sensing data corresponding to the first sensing service is not authorized, the UDM includes a plurality of possible processing cases. In one case, the UDM directly sends an authorization response to the NEF, where the authorization response includes first instruction information, and the first instruction information is used to instruct to use a non-redundancy sensing manner to execute the first sensing service, or is used to instruct to reject the first sensing service (request). In another case, the UDM continues to perform an authorization check on the first sensing service (referring to related descriptions in Embodiment 1 and Embodiment 2). When the first sensing service is authorized, the UDM may send an authorization response to the NEF, where the authorization response includes first instruction information, and the first instruction information is used to instruct to perform the first sensing service through non-redundant sensing. When the first sensing service is not authorized, the UDM may send an authorization response to the NEF, where the authorization response includes second instruction information, and the second instruction information is used to instruct to reject the first sensing service (request). A specific authorization procedure is related to a related implementation. This is not limited in this embodiment of this application.

905: When obtaining the plurality of pieces of sensing data corresponding to the first sensing service is authorized, the NEF sends a first sensing service request to the SF, where the first sensing service request is for requesting the first sensing service, the first sensing service request includes a redundancy sensing indication, and the redundancy sensing indication is used to instruct to obtain the plurality of pieces of sensing data corresponding to the first sensing service.

After receiving the first authorization response from the UDM, the NEF may determine that obtaining the plurality of pieces of sensing data corresponding to the first sensing service is authorized. Then, the NEF may send the first sensing service request to the SF. Correspondingly, the SF may receive the first sensing service request from the NEF.

For example, the NEF may determine, based on the first authorization indication information in the first authorization response, that obtaining the plurality of pieces of sensing data corresponding to the first sensing service is authorized.

Optionally, the first sensing service request may further include one or more of the following: a sensing service type, a sensing service requirement, a sensing area, and an application function identifier (AF ID).

It may be understood that the first sensing service request may be obtained based on the second sensing service request. For example, the first sensing service request may be the same as the second sensing service request, and only external information in the second sensing service request is converted into internal information. Certainly, the first sensing service request may also include more or less information than the first sensing service request, which is not limited herein.

Step 905 is similar to step 605. For details, refer to related descriptions in step 605.

906: The SF determines plurality of sensing node groups based on a redundancy sensing indication of the first sensing service, where each sensing node group includes a sensing signal sending node and a sensing signal receiving node, and at least one of the sensing signal sending node and the sensing signal receiving node in different sensing node groups is different.

After receiving the first sensing service request from the NEF, the SF may determine, based on the redundancy sensing indication in the first sensing service request, that the redundancy sensing manner needs to be used to perform sensing, and may determine plurality of sensing node groups.

In some possible implementations, the SF may require a redundancy sensing authorization check by default in a local policy. In this case, after receiving the first sensing service request from the NEF, the SF may initiate a redundancy sensing authorization request to the UDM. For details, refer to related descriptions in the foregoing steps 702 to 704.

907: The SF respectively sends a sensing control request to the sensing signal receiving nodes in the plurality of sensing node groups, where the sensing control request is for requesting sensing data corresponding to the first sensing service.

908: The SF respectively receives a sensing control response from the sensing signal receiving node in the plurality of sensing node groups, where the sensing control response includes sensing data corresponding to the first sensing service.

909: The SF obtains the first sensing result based on the plurality of pieces of sensing data corresponding to the first sensing service.

Steps 906 to 909 are similar to the foregoing steps 606 to 609, and reference may be made to related descriptions of the foregoing steps 606 to 609.

910: The SF sends the first sensing result to the AF by using the NEF.

### [Embodiment 5]

In this case of Embodiment 5, the terminal device does not need to carry a redundancy sensing indication in the sensing request to trigger redundancy sensing, and by default, the UDM performs authorization check on redundancy sensing for each sensing request. If the redundancy sensing is authorized, the redundancy sensing may be performed; otherwise, if the redundancy sensing is not authorized, the redundancy sensing is not performed. It can be understood that the main difference between Embodiment 5 and Embodiment 3 lies in that, in Embodiment 3, the terminal device actively carries a redundancy sensing indication in the sensing request according to an actual requirement to trigger the authorization of the redundancy sensing, and further trigger the redundancy sensing; in Embodiment 5, the core network element (NEF, SF, and so on) actively triggers the authorization of the redundancy sensing, and further trigger the redundancy sensing. Therefore, mutual reference may be made between Embodiment 5 and Embodiment 3.

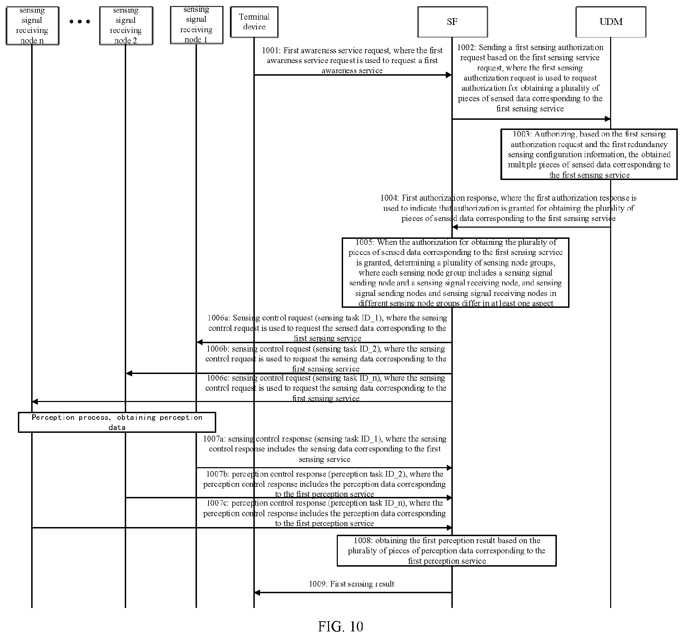

FIG. 8A to FIG. 8C are a schematic flowchart of yet another communication method according to an embodiment of this application. As shown in FIG. 10, the method may include but is not limited to the following steps.

1001: The terminal device sends a first sensing service request to the SF, where the first sensing service request is for requesting the first sensing service.

Exemplarily, when there is a redundancy sensing requirement, the terminal device may send the first sensing service request to the SF. Correspondingly, the SF may receive the first perceived service request from the terminal device.

Optionally, the first sensing service request may include one or more of the following: a sensing service type, a sensing service requirement, a sensing area, and an identifier of a terminal device. For specific descriptions of the type of the perceived service, the requirement of the perceived service, and the like, refer to related descriptions in step 401.

It should be understood that the information included in the first sensing service request is merely an example for description, and should not be construed as a limitation. For example, in addition to the sensing service type, the sensing service requirement, the sensing area, and the like, the first sensing service request may further include other information such as execution time of the first sensing service, duration of the first sensing service, and a frequency of performing the first sensing service.

1002: The SF sends a first sensing authorization request to the UDM based on the first sensing service request, where the first sensing authorization request is for requesting to perform an authorization check on the plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

After receiving the first sensing service request from the terminal device, the SF may send the first sensing authorization request to the UDM based on the first sensing service request. Correspondingly, the UDM may receive the first sensing authorization request from the SF. In some possible implementations, the first sensing authorization request may include information in the first sensing service request and/or other information obtained based on the information in the first sensing service request.

Optionally, the first sensing authorization request may include one or more of the following: a sensing service type, a sensing area, and an identifier of a terminal device.

Optionally, the first sensing authorization request may further include a redundant sensing indication. Specifically, in this manner in Embodiment 5, the authorization check of redundancy sensing needs to be performed on each sensing request by default. Therefore, the SF may carry a redundancy sensing indication in the authorization request sent to the UDM, where the redundancy sensing indication is not used for authorization check, but is used to notify the UDM that the authorization check of redundancy sensing needs to be performed.

Step 1002 is similar to step 702. For details, refer to related descriptions in step 702.

1003: The UDM performs, based on the first sensing authorization request and the first redundancy sensing configuration information, an authorization check on the obtained plurality of pieces of sensing data corresponding to the first sensing service.

After receiving the first sensing authorization request from the SF, the UDM may perform, based on the first sensing authorization request and the first redundancy sensing configuration information, an authorization check on the obtained plurality of pieces of sensing data corresponding to the first sensing service.

Step 1003 is similar to step 703, and reference may be made to related descriptions in step 703.

1004: The UDM sends a first authorization response to the SF, where the first authorization response indicates that obtaining the plurality of pieces of sensing data corresponding to the first sensing service is authorized.

In a case in which the UDM determines, based on the first sensing authorization request and the first redundancy sensing configuration information, that the obtaining of the plurality of pieces of sensing data corresponding to the first sensing service is authorized, the UDM may send a first authorization response to the SF. Correspondingly, the SF may receive the first grant response from the UDM.

Optionally, the first authorization response includes first authorization indication information, and the first authorization indication information indicates that obtaining the plurality of pieces of sensing data corresponding to the first sensing service is authorized. For example, the first grant indication information may be a redundancy sensing indication.

Step 1004 is similar to step 704. For details, refer to related descriptions in step 704.

1005: In a case in which obtaining the plurality of pieces of sensing data corresponding to the first sensing service is granted, the SF determines the plurality of sensing node groups based on a redundancy sensing indication of the first sensing service, where each sensing node group includes a sensing signal sending node and a sensing signal receiving node, and at least one of the sensing signal sending node and the sensing signal receiving node in different sensing node groups is different.

After receiving the first authorization response from the UDM, the SF may determine, based on the first authorization response, that the plurality of pieces of sensing data corresponding to the first sensing service are authorized, and may determine the plurality of sensing node groups. For related operations of determining the sensor node group by the SF, refer to related descriptions in step 402.

For example, the NEF may determine, based on the first authorization indication information in the first authorization response, that obtaining the plurality of pieces of sensing data corresponding to the first sensing service is authorized.

1006: The SF respectively sends a sensing control request to the sensing signal receiving nodes in the plurality of sensing node groups, where the sensing control request is for requesting sensing data corresponding to the first sensing service.

1007: The SF respectively receives a sensing control response from the sensing signal receiving node in the plurality of sensing node groups, where the sensing control response includes sensing data corresponding to the first sensing service.

1008: The SF obtains the first sensing result based on the plurality of pieces of sensing data corresponding to the first sensing service.

A principle of steps 1006 to 1008 is similar to that of steps 402 to 404, and reference may be further made to related descriptions of steps 402 to 404.

1009: The SF sends the first sensing result to the terminal device.

In some possible implementations, the terminal device in FIG. 10 may also be replaced with an AF. In other words, an operation performed by the terminal device may also be performed by the AF.

### [Embodiment 6]

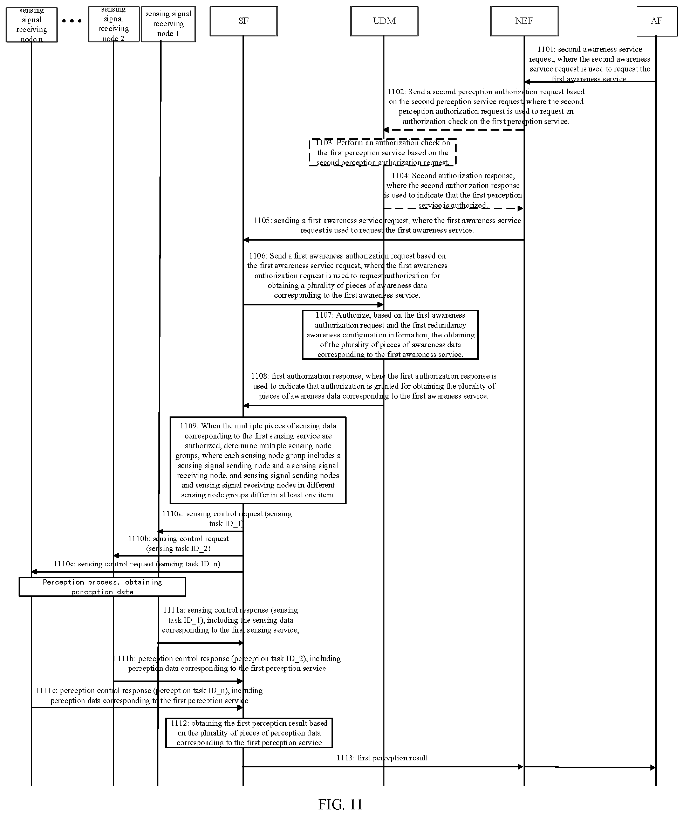

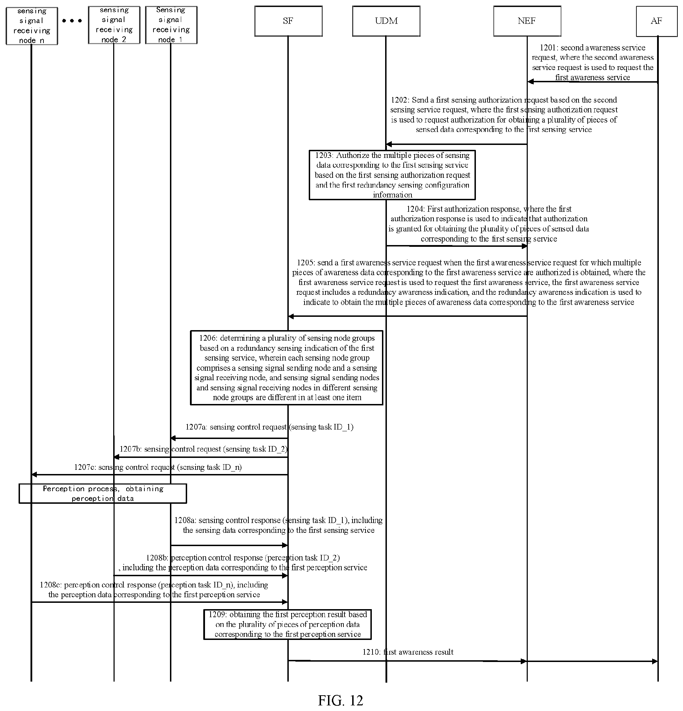

In this case of Embodiment 6, the AF does not need to carry a redundancy sensing indication in the sensing request to trigger redundancy sensing. By default, the UDM performs authorization check on redundancy sensing for each sensing request. If the redundancy sensing is authorized, the redundancy sensing may be performed; otherwise, if the redundancy sensing is not authorized, the redundancy sensing is not performed. In addition, in this manner, there may be two cases of triggering redundancy sensing authorization. One is that the SF initiates a redundancy sensing authorization request to the UDM (FIG. 11), and the other is that the NEF initiates a redundancy sensing authorization request to the UDM (FIG. 12). The following respectively describes the two cases. It can be understood that, the main difference between Embodiment 6 and Embodiment 4 lies in that, in Embodiment 4, the AF actively carries a redundancy sensing indication in the sensing request according to an actual requirement to trigger authorization of redundancy sensing, and further trigger redundancy sensing; in Embodiment 6, a core network element (NEF, SF, and the like) actively triggers authorization of redundancy sensing, and further trigger redundancy sensing. Therefore, mutual reference may be made between Embodiment 6 and Embodiment 4.

FIG. 8A to FIG. 8C are a schematic flowchart of yet another communication method according to an embodiment of this application. As shown in FIG. 11, the method may include but is not limited to the following steps.

1101: The AF sends a second sensing service request to the NEF, where the second sensing service request is for requesting the first sensing service.

Exemplarily, when there is a redundancy sensing requirement, the AF may send the second sensing service request to the NEF. Correspondingly, the NEF may receive the second sensing service request from the AF.

Optionally, the second sensing service request may include one or more of the following: a sensing service type, a sensing service requirement, a sensing area, and an application function identifier (AF ID). For specific descriptions of the type of the perceived service, the requirement of the perceived service, and the like, refer to related descriptions in step 501.

1102: The NEF sends a second sensing authorization request to the UDM based on the second sensing service request, where the second sensing authorization request is for requesting to perform an authorization check on the first sensing service.

1103: The UDM performs an authorization check on the first sensing service based on the second sensing authorization request.

1104: The UDM sends a second authorization response to the NEF, where the second authorization response indicates that the first sensing service is authorized.

It should be noted that the foregoing steps 1102 to 1104 are optional. In some possible implementations, steps 1102 to 1104 may not be performed. In this case, step 1105 may be directly performed after step 1101. That is, after receiving the second sensing service request from the AF, the NEF may directly perform step 1105.

Steps 1102 to 1104 are similar to the foregoing steps 602 to 604, and reference may be made to related descriptions in the foregoing steps 602 to 604.

1105: The NEF sends a first sensing service request to the SF, where the first sensing service request is for requesting the first sensing service.

Optionally, the first sensing service request may include one or more of the following: a sensing service type, a sensing service requirement, a sensing area, and an application function identifier. For specific descriptions of the type of the perceived service, the requirement of the perceived service, and the like, refer to related descriptions in step 401.

Optionally, the first sensing service request may further include a redundancy sensing indication. Specifically, in this manner in Embodiment 6, the authorization check of redundancy sensing needs to be performed on each sensing request by default. Therefore, the NEF may carry a redundancy sensing indication in the sensing request sent to the SF, where the redundancy sensing indication indicates that plurality of pieces of sensing data corresponding to the first sensing service are obtained, and may also be understood as indicating that the SF needs to perform the authorization check of redundancy sensing, so as to determine whether to perform sensing through redundancy sensing.

Step 1105 is similar to step 605, and reference may be further made to related descriptions in step 605.

1106: The SF sends a first sensing authorization request to the UDM based on the first sensing service request, where the first sensing authorization request is for requesting to perform an authorization check on the plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

After receiving the first sensing service request from the NEF, the SF may send the first sensing authorization request to the UDM based on the first sensing service request. Correspondingly, the UDM may receive the first sensing authorization request from the SF. Exemplarily, the SF may determine, based on the redundancy sensing indication in the first sensing service request, that the redundancy sensing manner needs to be used for sensing. Therefore, the SF may first send the first sensing authorization request to the UDM, to perform authorization check for redundancy sensing.

In some possible implementations, the first sensing authorization request may include information in the first sensing service request and/or other information obtained based on the information in the first sensing service request.

Optionally, the first sensing authorization request may include one or more of the following: a sensing service type, a sensing area, and an application function identifier.

Optionally, the first sensing authorization request may further include a redundancy sensing indication. The redundancy sensing indication is not used for authorization check, but is used to notify the UDM that the authorization check for the redundancy sensing needs to be performed.

Step 1106 is similar to step 702. For details, refer to related descriptions in step 702.

1107: The UDM performs, based on the first sensing authorization request and the first redundancy sensing configuration information, an authorization check on the obtained plurality of pieces of sensing data corresponding to the first sensing service.

Step 1107 is similar to step 703, and reference may be made to related descriptions in step 703.

1108: The UDM sends a first authorization response to the SF, where the first authorization response indicates that obtaining the plurality of pieces of sensing data corresponding to the first sensing service is authorized.

Optionally, the first authorization response includes first authorization indication information, and the first authorization indication information indicates that obtaining the plurality of pieces of sensing data corresponding to the first sensing service is authorized. For example, the first grant indication information may be a redundancy sensing indication.

Step 1108 is similar to step 704. For details, refer to related descriptions in step 704.

1109: When obtaining that the plurality of pieces of sensing data corresponding to the first sensing service are authorized, the SF determines plurality of sensing node groups, where each sensing node group includes a sensing signal sending node and a sensing signal receiving node, and at least one of the sensing signal sending node and the sensing signal receiving node in different sensing node groups is different.

After receiving the first authorization response from the UDM, the SF may determine, based on the first authorization response, that the plurality of pieces of sensing data corresponding to the first sensing service are authorized, and may determine the plurality of sensing node groups. For related operations of determining the sensor node group by the SF, refer to related descriptions in step 402. For example, the NEF may determine, based on the first authorization indication information in the first authorization response, that obtaining the plurality of pieces of sensing data corresponding to the first sensing service is authorized.

1110: The SF respectively sends a sensing control request to the sensing signal receiving nodes in the plurality of sensing node groups, where the sensing control request is for requesting sensing data corresponding to the first sensing service.

1111: The SF respectively receives a sensing control response from the sensing signal receiving node in the plurality of sensing node groups, where the sensing control response includes sensing data corresponding to the first sensing service.

1112: The SF obtains the first sensing result based on the plurality of pieces of sensing data corresponding to the first sensing service.

A principle of steps 1110 to 1112 is similar to that of steps 402 to 404, and reference may be further made to related descriptions of steps 402 to 404.

1113: The SF sends the first sensing result to the AF by using the NEF.

FIG. 12 is a schematic flowchart of still another communication method according to an embodiment of this application. As shown in FIG. 12, the method may include but is not limited to the following steps.

1201: The AF sends a second sensing service request to the NEF, where the second sensing service request is for requesting the first sensing service.

Step 1201 is similar to step 1101, and reference may be made to related descriptions in step 1101.

1202: The NEF sends a first sensing authorization request to the UDM based on the second sensing service request, where the first sensing authorization request is for requesting to perform an authorization check on the plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

After receiving the second sensing service request from the AF, the NEF may send the first sensing authorization request to the UDM based on the second sensing service request. Correspondingly, the UDM may receive the first sensing authorization request from the SF. In some possible implementations, the first sensing authorization request may include information in the second sensing service request and/or other information obtained based on the information in the second sensing service request.

Optionally, the first sensing authorization request may include one or more of the following: a sensing service type, a sensing area, and an application function identifier.

Optionally, the first sensing authorization request may further include a redundant sensing indication. Specifically, in this manner in Embodiment 5, the authorization check for redundancy sensing needs to be performed on each sensing request by default. Therefore, the NEF may carry a redundancy sensing indication in the authorization request sent to the UDM, where the redundancy sensing indication is not used for authorization check, but is used to notify the UDM that the authorization check for redundancy sensing needs to be performed.

Step 1202 is similar to step 902. For details, refer to related descriptions in step 902.

1203: The UDM performs, based on the first sensing authorization request and the first redundancy sensing configuration information, an authorization check on the obtained plurality of pieces of sensing data corresponding to the first sensing service.

1204: The UDM sends a first authorization response to the NEF, where the first authorization response indicates that obtaining the plurality of pieces of sensing data corresponding to the first sensing service is authorized.

When the UDM determines, based on the first sensing authorization request and the first redundancy sensing configuration information, that the obtaining of the plurality of pieces of sensing data corresponding to the first sensing service is authorized, the UDM may send the first authorization response to the NEF. Correspondingly, the NEF may receive the first authorization response from the UDM.

Optionally, the first authorization response includes first authorization indication information, and the first authorization indication information indicates that obtaining the plurality of pieces of sensing data corresponding to the first sensing service is authorized. For example, the first grant indication information may be a redundancy sensing indication.

Steps 1202 to 1204 are similar to steps 902 to 904. For details, refer to related descriptions in the foregoing steps 902 to 904.

1205: When obtaining the plurality of pieces of sensing data corresponding to the first sensing service is authorized, the NEF sends a first sensing service request to the SF, where the first sensing service request is for requesting the first sensing service, the first sensing service request includes a redundancy sensing indication, and the redundancy sensing indication is used to instruct to obtain the plurality of pieces of sensing data corresponding to the first sensing service.

After receiving the first authorization response from the UDM, the NEF may determine that obtaining the plurality of pieces of sensing data corresponding to the first sensing service is authorized. Then, the NEF may send the first sensing service request to the SF. Correspondingly, the SF may receive the first sensing service request from the NEF.

For example, the NEF may determine, based on the first authorization indication information in the first authorization response, that obtaining the plurality of pieces of sensing data corresponding to the first sensing service is authorized.

It should be understood that, in a case in which obtaining the plurality of pieces of sensing data corresponding to the first sensing service is not authorized, if the UDM adds the first indication information to the authorization response, the first sensing service request sent by the NEF to the SF does not include a redundancy sensing indication, and the first indication information indicates that the first sensing service is executed through non-redundant sensing.

Step 1205 is similar to step 605, and reference may be further made to related descriptions in step 605.

1206: The SF determines plurality of sensing node groups based on a redundancy sensing indication of the first sensing service, where each sensing node group includes a sensing signal sending node and a sensing signal receiving node, and at least one of the sensing signal sending node and the sensing signal receiving node in different sensing node groups is different.

After receiving the first sensing service request from the NEF, the SF may determine, based on the redundancy sensing indication in the first sensing service request, that the redundancy sensing manner needs to be used to perform sensing, and may determine plurality of sensing node groups.

In some possible implementations, the SF may require a redundancy sensing authorization check by default in a local policy. In this case, after receiving the first sensing service request from the NEF, the SF may initiate a redundancy sensing authorization request to the UDM. For details, refer to related descriptions in the foregoing steps 702 to 704.

1207: The SF respectively sends a sensing control request to the sensing signal receiving nodes in the plurality of sensing node groups, where the sensing control request is for requesting sensing data corresponding to the first sensing service.

1208: The SF respectively receives a sensing control response from the sensing signal receiving node in the plurality of sensing node groups, where the sensing control response includes sensing data corresponding to the first sensing service.

1209: The SF obtains the first sensing result based on the plurality of pieces of sensing data corresponding to the first sensing service.

A principle of steps 1207 to 1209 is similar to that of steps 402 to 404. For details, refer to related descriptions in steps 402 to 404.

1210: The SF sends the first sensing result to the AF by using the NEF.

### [Embodiment 7]

In the case of Embodiment 7, a redundant sensing indication needs to be carried in the sensing request to trigger redundant sensing, and an authorization check of the redundant sensing needs to be performed through an SF. Therefore, if the UE needs to perform redundancy sensing, the redundancy sensing indication may be carried in the sensing request, and the redundancy sensing can be performed only when the redundancy sensing is authorized subsequently. On the contrary, if the UE does not need to perform redundancy sensing, the redundancy sensing indication may not be carried in the sensing request. The following mainly uses a case in which redundancy sensing is carried as an example for description.

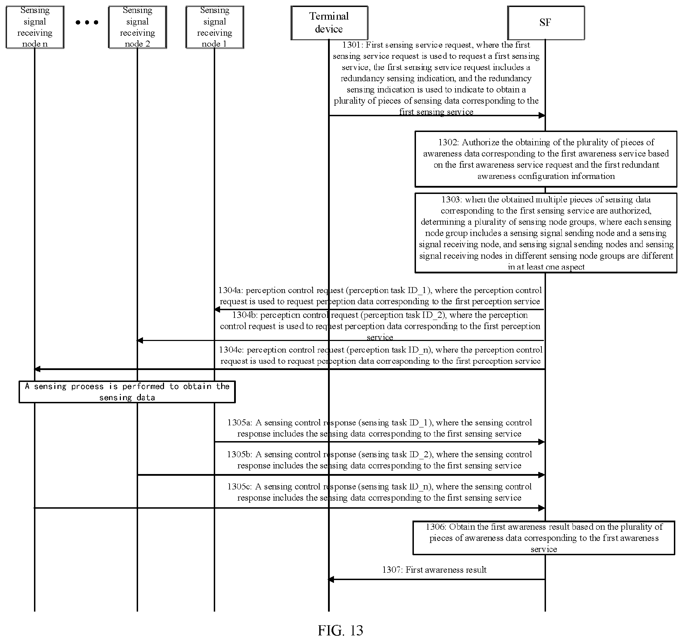

FIG. 8A to FIG. 8C are a schematic flowchart of yet another communication method according to an embodiment of this application. As shown in FIG. 13, the method may include but is not limited to the following steps.

1301: sending, by a terminal device, a first sensing service request to an SF, where the first sensing service request is for requesting a first sensing service, the first sensing service request includes a redundancy sensing indication, and the redundancy sensing indication is used to instruct to obtain plurality of pieces of sensing data corresponding to the first sensing service.

The instructing to obtain the plurality of pieces of sensing data corresponding to the first sensing service may also be understood as instructing to execute the first sensing service through redundancy sensing, and details are not described in the following.

Correspondingly, the SF may receive the first perceived service request from the terminal device.

Step 1301 is similar to step 501. For details, refer to related descriptions in step 501. Details are not described herein again.

1302: The SF performs, based on the first sensing service request and the first redundancy sensing configuration information, an authorization check on the obtained plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

After receiving the first sensing service request from the terminal device, the SF may determine, based on the redundancy sensing indication in the first sensing service request, that the redundancy sensing manner needs to be used for sensing. Therefore, the SF may first perform, based on the first sensing service request and the first redundancy sensing configuration information, authorization check on the plurality of pieces of sensing data corresponding to the first sensing service.

Optionally, the first redundancy sensing configuration information includes one or more of the following items: a sensing service type allowed to perform redundancy sensing, a sensing area allowed to perform redundancy sensing, a time allowed to perform redundancy sensing, an application function identity (AF ID) allowed to perform redundancy sensing, and an identity of a terminal device allowed to perform redundancy sensing.

Step 1302 is similar to step 703, and reference may be made to related descriptions in step 703.

1303: In a case in which obtaining the plurality of pieces of sensing data corresponding to the first sensing service is granted, the SF determines the plurality of sensing node groups based on a redundancy sensing indication of the first sensing service, where each sensing node group includes a sensing signal sending node and a sensing signal receiving node, and at least one of the sensing signal sending node and the sensing signal receiving node in different sensing node groups is different.

After determining, based on the first sensing service request and the first redundancy sensing configuration information, that obtaining the plurality of pieces of sensing data corresponding to the first sensing service is authorized, the SF may determine the plurality of sensing node groups.

It may be understood that, in a case in which the first sensing service request does not carry a redundancy sensing indication, the SF may further perform/not perform an authorization check on the first sensing service by using the UDM (referring to related descriptions in Embodiment 1 and Embodiment 2). In a case in which an authorization check does not need to be performed on the first sensing service, if the first sensing service request does not carry a redundancy sensing indication, the SF may directly execute the first sensing service through non-redundant sensing. In a case in which an authorization check needs to be performed on the first sensing service, if the first sensing service request does not carry a redundancy sensing indication, and the first sensing service is authorized, the SF may execute the first sensing service through non-redundant sensing. If the first sensing service request does not carry a redundancy sensing indication, and the first sensing service is not authorized, the SF may reject the first sensing service request.

For related operations of determining the sensor node group by the SF, refer to related descriptions in step 402.

1304: The SF respectively sends a sensing control request to the sensing signal receiving nodes in the plurality of sensing node groups, where the sensing control request is for requesting sensing data corresponding to the first sensing service.

1305: The SF respectively receives a sensing control response from the sensing signal receiving node in the plurality of sensing node groups, where the sensing control response includes sensing data corresponding to the first sensing service.

1306: The SF obtains the first sensing result based on the plurality of pieces of sensing data corresponding to the first sensing service.

A principle of steps 1304-1306 is similar to that of steps 402 to 404. For details, refer to related descriptions in steps 402 to 404.

1307: The SF sends the first sensing result to the terminal device.

In some possible implementations, the terminal device in FIG. 13 may also be replaced with an AF. In other words, an operation performed by the terminal device may also be performed by the AF.

### [Embodiment 8]

In the case of Embodiment 8, a redundant sensing indication needs to be carried in the sensing request to trigger redundant sensing, and an authorization check of the redundant sensing needs to be performed through an SF. Therefore, if the AF needs to perform redundancy sensing, the redundancy sensing indication may be carried in the sensing request, and the redundancy sensing can be performed only when the redundancy sensing is authorized. On the contrary, if the UE does not need to perform redundancy sensing, the redundancy sensing indication may not be carried in the sensing request.

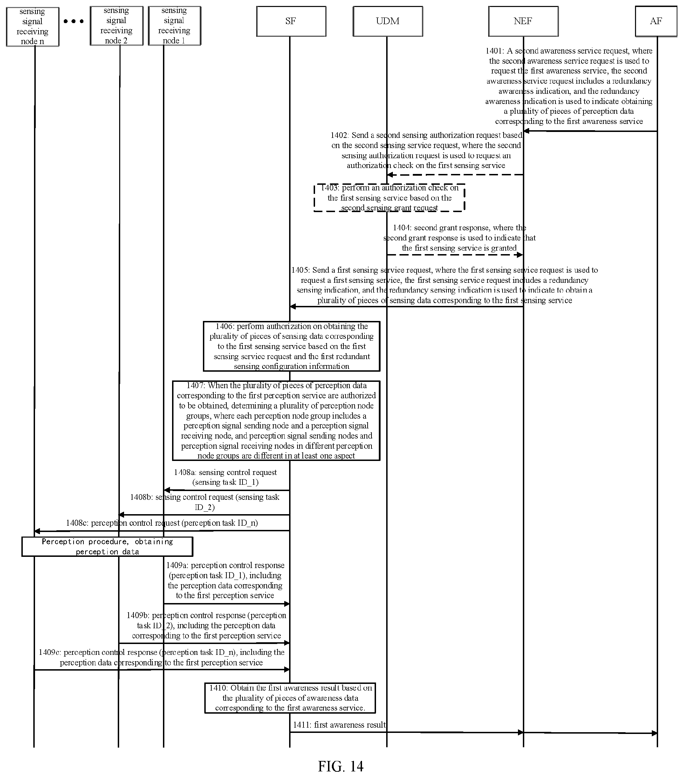

FIG. 8A to FIG. 8C are a schematic flowchart of yet another communication method according to an embodiment of this application. As shown in FIG. 14, the method may include but is not limited to the following steps.

1401: The AF sends a second sensing service request to the NEF, where the second sensing service request is for requesting a first sensing service, the second sensing service request includes a redundancy sensing indication, and the redundancy sensing indication is used to instruct to obtain plurality of pieces of sensing data corresponding to the first sensing service.

The instructing to obtain the plurality of pieces of sensing data corresponding to the first sensing service may also be understood as instructing to execute the first sensing service through redundancy sensing, and details are not described in the following.

1402: The NEF sends a second sensing authorization request to the UDM based on the second sensing service request, where the second sensing authorization request is for requesting to perform an authorization check on the first sensing service.

1403: The UDM performs an authorization check on the first sensing service based on the second sensing authorization request.

1404: The UDM sends a second authorization response to the NEF, where the second authorization response indicates that the first sensing service is authorized.

It should be noted that, the foregoing steps 1402 to 1404 are optional, and in some possible implementations, steps 1402 to 1404 may not be performed. In this case, step 1405 may be directly performed after step 1401. That is, after receiving the second sensing service request from the AF, the NEF may directly perform step 1405.

1405: The NEF sends a first sensing service request to the SF, where the first sensing service request is for requesting a first sensing service, the first sensing service request includes a redundancy sensing indication, and the redundancy sensing indication is used to instruct to obtain plurality of pieces of sensing data corresponding to the first sensing service.

Steps 1401 to 1405 are similar to the foregoing steps 601 to 605, and reference may be made to related descriptions in the foregoing steps 601 to 605.

1406: The SF performs, based on the first sensing service request and the first redundancy sensing configuration information, an authorization check on the obtained plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

After receiving the first sensing service request from the AF, the SF may determine, based on the redundancy sensing indication in the first sensing service request, that the redundancy sensing manner needs to be used for sensing. Therefore, the SF may first perform, based on the first sensing service request and the first redundancy sensing configuration information, authorization check on the obtained plurality of pieces of sensing data corresponding to the first sensing service.

Optionally, the first redundancy sensing configuration information includes one or more of the following items: a sensing service type allowed to perform redundancy sensing, a sensing area allowed to perform redundancy sensing, a time allowed to perform redundancy sensing, an identifier of an application function allowed to perform redundancy sensing (AF ID), and an identifier of a terminal device allowed to perform redundancy sensing.

Step 1406 is similar to step 703, and reference may be made to related descriptions in step 703.

1407: When obtaining that the plurality of pieces of sensing data corresponding to the first sensing service are authorized, the SF determines plurality of sensing node groups, where each sensing node group includes a sensing signal sending node and a sensing signal receiving node, and at least one of the sensing signal sending node and the sensing signal receiving node in different sensing node groups is different.

After determining, based on the first sensing service request and the first redundancy sensing configuration information, that obtaining the plurality of pieces of sensing data corresponding to the first sensing service is authorized, the SF may determine the plurality of sensing node groups.

Step 1407 is similar to step 705. For details, refer to related descriptions in step 705.

1408: The SF respectively sends a sensing control request to the sensing signal receiving nodes in the plurality of sensing node groups, where the sensing control request is for requesting sensing data corresponding to the first sensing service.

1409: The SF respectively receives a sensing control response from the sensing signal receiving node in the plurality of sensing node groups, where the sensing control response includes sensing data corresponding to the first sensing service.

1410: The SF obtains the first sensing result based on the plurality of pieces of sensing data corresponding to the first sensing service.

A principle of steps 1408 to 1410 is similar to that of steps 402 to 404. For details, refer to related descriptions in steps 402 to 404.

1411: The SF sends the first sensing result to the AF by using the NEF.

### [Embodiment 9]

In the case of Embodiment 9, the terminal device does not need to carry a redundancy sensing indication in the sensing request to trigger redundancy sensing, and by default, the redundancy sensing authorization check is performed on each sensing request through the SF. If the redundancy sensing is authorized, the redundancy sensing may be performed; otherwise, if the redundancy sensing is not authorized, the redundancy sensing is not performed. It can be understood that, the main difference between Embodiment 9 and Embodiment 7 lies in that, in Embodiment 7, the terminal device actively carries a redundancy sensing indication in the sensing request according to an actual requirement to trigger the authorization of the redundancy sensing, so as to further trigger the redundancy sensing; in Embodiment 9, the core network element (such as an SF) actively triggers the authorization of the redundancy sensing, so as to further trigger the redundancy sensing. Therefore, mutual reference may be made between Embodiment 9 and Embodiment 7.

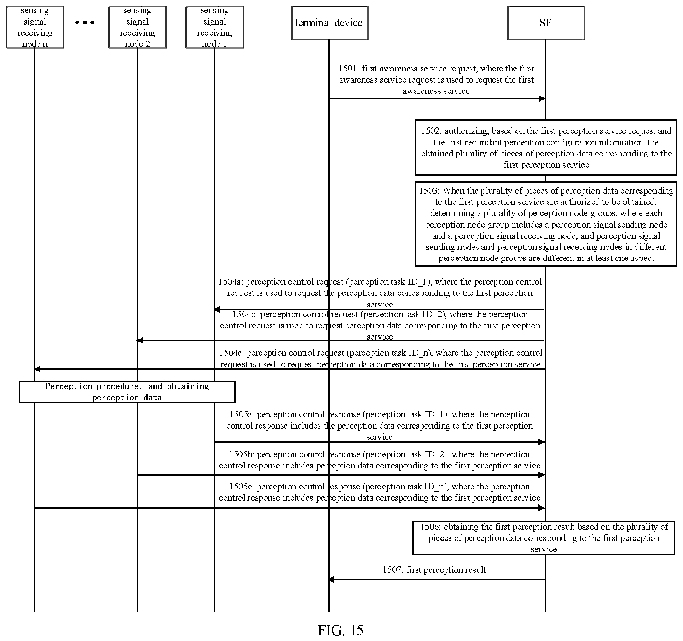

FIG. 8A to FIG. 8C are a schematic flowchart of yet another communication method according to an embodiment of this application. As shown in FIG. 15, the method may include but is not limited to the following steps.

1501: The terminal device sends a first sensing service request to the SF, where the first sensing service request is for requesting the first sensing service.

Correspondingly, the SF may receive the first perceived service request from the terminal device.

Step 1501 is similar to step 1001. For details, refer to related descriptions in step 1001. Details are not described herein again.

1502: The SF performs, based on the first sensing service request and the first redundancy sensing configuration information, an authorization check on the obtained plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

For example, the SF local policy may be configured to perform a redundancy sensing authorization check on each sensing request by default. Therefore, after receiving the first sensing service request from the terminal device, the SF may perform, based on the first sensing service request and the first redundancy sensing configuration information, an authorization check on the plurality of pieces of sensing data corresponding to the first sensing service.

Step 1503 is similar to step 703, and reference may be further made to related descriptions in step 703.

1503: When obtaining that the plurality of pieces of sensing data corresponding to the first sensing service are authorized, the SF determines plurality of sensing node groups, where each sensing node group includes a sensing signal sending node and a sensing signal receiving node, and at least one of the sensing signal sending node and the sensing signal receiving node in different sensing node groups is different.

After determining, based on the first sensing service request and the first redundancy sensing configuration information, that obtaining the plurality of pieces of sensing data corresponding to the first sensing service is authorized, the SF may determine the plurality of sensing node groups.

1504: The SF respectively sends a sensing control request to the sensing signal receiving nodes in the plurality of sensing node groups, where the sensing control request is for requesting sensing data corresponding to the first sensing service.

1505: The SF respectively receives a sensing control response from the sensing signal receiving node in the plurality of sensing node groups, where the sensing control response includes sensing data corresponding to the first sensing service.

1506: The SF obtains the first sensing result based on the plurality of pieces of sensing data corresponding to the first sensing service.

A principle of steps 1504-1506 is similar to that of steps 402 to 404. For details, refer to related descriptions in steps 402 to 404.

1507: The SF sends the first sensing result to the terminal device.

In some possible implementations, the terminal device in FIG. 15 may also be replaced with an AF. In other words, an operation performed by the terminal device may also be performed by the AF.

### [Embodiment 10]

In the case of Embodiment 10, the AF does not need to carry a redundancy sensing indication in the sensing request to trigger redundancy sensing, and by default, the redundancy sensing authorization check is performed on each sensing request through the SF. If the redundancy sensing is authorized, the redundancy sensing may be performed; otherwise, if the redundancy sensing is not authorized, the redundancy sensing is not performed. It can be understood that, the main difference between Embodiment 10 and Embodiment 8 lies in that, in Embodiment 8, the AF actively carries a redundancy sensing indication in the sensing request according to an actual requirement to trigger authorization of redundancy sensing, so as to further trigger redundancy sensing; in Embodiment 10, a core network element (NEF, SF, and the like) actively triggers authorization of redundancy sensing, so as to further trigger redundancy sensing. Therefore, mutual reference may be made between Embodiment 10 and Embodiment 8.

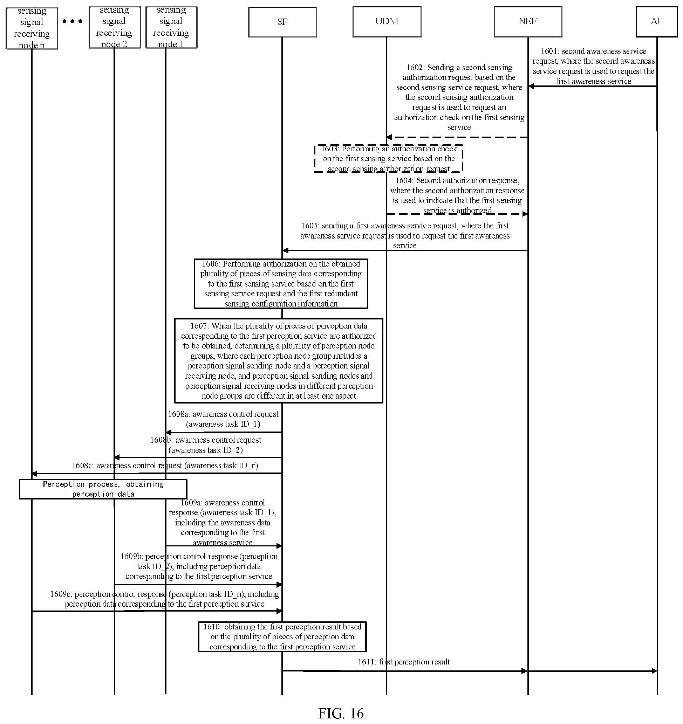

FIG. 8A to FIG. 8C are a schematic flowchart of yet another communication method according to an embodiment of this application. As shown in FIG. 16, the method may include but is not limited to the following steps.

1601: The AF sends a second sensing service request to the NEF, where the second sensing service request is for requesting the first sensing service.

1602: The NEF sends a second sensing authorization request to the UDM based on the second sensing service request, where the second sensing authorization request is for requesting to perform an authorization check on the first sensing service.

1603: The UDM performs an authorization check on the first sensing service based on the second sensing authorization request.

1604: The UDM sends a second authorization response to the NEF, where the second authorization response indicates that the first sensing service is authorized.

It should be noted that the foregoing steps 1602 to 604 are optional. In some possible implementations, steps 1602 to 604 may not be performed. In this case, step 1605 may be directly performed after step 1601. That is, after receiving the second sensing service request from the AF, the NEF may directly perform step 1605.

1605: The NEF sends a first sensing service request to the SF, where the first sensing service request is for requesting the first sensing service.

Optionally, the first sensing service request may include one or more of the following: a sensing service type, a sensing service requirement, a sensing area, and an application function identifier. For specific descriptions of the type of the perceived service, the requirement of the perceived service, and the like, refer to related descriptions in step 401.

Optionally, the first sensing service request may further include a redundancy sensing indication. Specifically, in this manner in Embodiment 10, the SF needs to perform an authorization check for redundancy sensing on each sensing request by default. Therefore, the NEF may carry a redundancy sensing indication in the sensing request sent to the SF, where the redundancy sensing indication indicates that plurality of pieces of sensing data corresponding to the first sensing service are obtained, and may also be understood as indicating that the SF needs to perform an authorization check for redundancy sensing, so as to determine whether to perform sensing through redundancy sensing.

Steps 1601 to 1605 are similar to the foregoing steps 601 to 605, and reference may be further made to related descriptions in the foregoing steps 601 to 605.

1606: The SF performs, based on the first sensing service request and the first redundancy sensing configuration information, an authorization check on the obtained plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

For example, the SF local policy may be configured to perform a redundancy sensing authorization check on each sensing request by default. Therefore, after receiving the first sensing service request from the NEF, the SF may perform, based on the first sensing service request and the first redundancy sensing configuration information, an authorization check on obtaining the plurality of pieces of sensing data corresponding to the first sensing service.

Optionally, the SF may determine, based on a redundancy sensing indication in the first sensing service request, that a redundancy sensing manner needs to be used to perform sensing, and may perform, based on the first sensing service request and the first redundancy sensing configuration information, authorization check on obtaining plurality of pieces of sensing data corresponding to the first sensing service.

Step 1606 is similar to step 703, and reference may be made to related descriptions in step 703.

1607: When obtaining that the plurality of pieces of sensing data corresponding to the first sensing service are authorized, the SF determines plurality of sensing node groups, where each sensing node group includes a sensing signal sending node and a sensing signal receiving node, and at least one of the sensing signal sending node and the sensing signal receiving node in different sensing node groups is different.

After determining, based on the first sensing service request and the first redundancy sensing configuration information, that obtaining the plurality of pieces of sensing data corresponding to the first sensing service is authorized, the SF may determine the plurality of sensing node groups.

Step 1607 is similar to step 705, and reference may be made to related descriptions in step 705.

1608: The SF respectively sends a sensing control request to the sensing signal receiving nodes in the plurality of sensing node groups, where the sensing control request is for requesting sensing data corresponding to the first sensing service.

1609: The SF respectively receives a sensing control response from the sensing signal receiving node in the plurality of sensing node groups, where the sensing control response includes sensing data corresponding to the first sensing service.

1610: The SF obtains the first sensing result based on the plurality of pieces of sensing data corresponding to the first sensing service.

A principle of steps 1608 to 1610 is similar to that of steps 402 to 404. For details, refer to related descriptions in steps 402 to 404.

1611: The SF sends the first sensing result to the AF by using the NEF.

The foregoing describes, by using Embodiment 1 to Embodiment 10, the redundancy sensing technical solution provided in the embodiments of this application as an example. For Embodiment 1, Embodiment 2, Embodiment 3, Embodiment 4, Embodiment 7, and Embodiment 8, a sensing demander (such as a terminal device or an AF) actively adds a redundancy sensing indication to a sensing request according to an actual requirement to trigger redundancy sensing. Therefore, in a possible scenario, the sensing demander may re-initiate a sensing request in a case in which a sensing result obtained through non-redundant sensing satisfies the first condition, and add a redundancy sensing instruction to the sensing request to trigger redundancy sensing. The following provides an example description based on Embodiment 4, and reference may be made to Embodiment 1, Embodiment 2, Embodiment 3, Embodiment 7, and Embodiment 8.

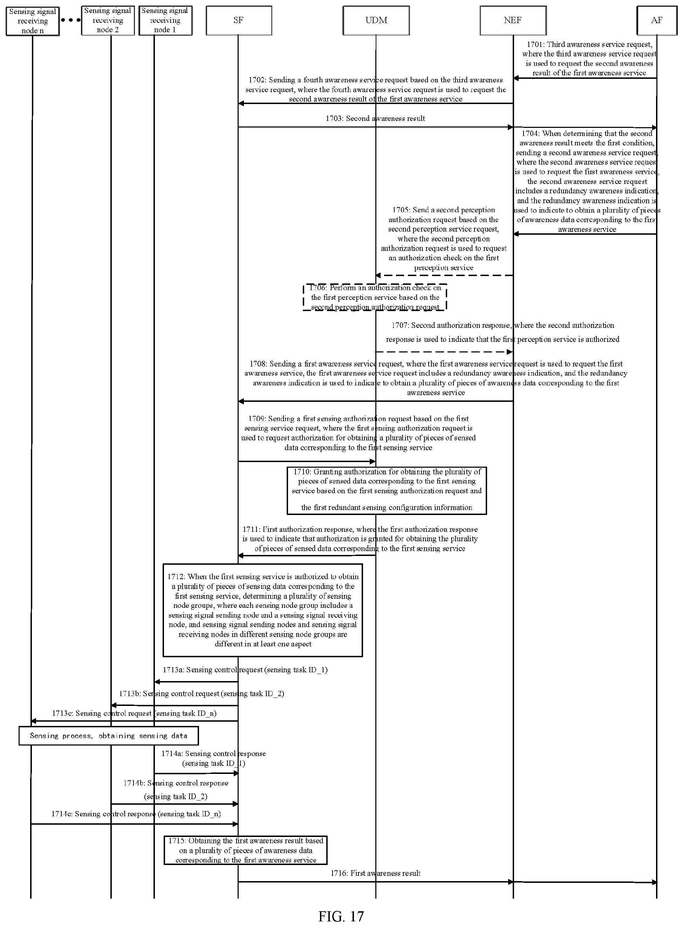

FIG. 8A to FIG. 8C are a schematic flowchart of yet another communication method according to an embodiment of this application. As shown in FIG. 17, the method may include but is not limited to the following steps.

1701: The AF sends a third sensing service request to the NEF, where the third sensing service request is for requesting a second sensing result of the first sensing service.

When the AF does not need to obtain the sensing result corresponding to the first sensing service through non-redundant sensing, the AF may send a third sensing service request to the NEF, where the third sensing service request does not carry a redundancy sensing indication.

1702: The NEF sends a fourth sensing service request to the SF based on the third sensing service request, where the fourth sensing service request is for requesting a second sensing result of the first sensing service.

After receiving the third sensing service request from the AF, the NEF may send a fourth sensing service request to the SF based on the third sensing service request, where the fourth sensing service request is for requesting the second sensing result of the first sensing service. The fourth sensing service request does not carry a redundancy sensing indication.

1703: The SF sends the second sensing result to the AF by using the NEF.

After receiving the fourth sensing service request from the NEF, the SF may determine that the non-redundancy sensing mode needs to be used to execute the first sensing service, and may send a sensing control request to a corresponding sensing node. Then, the sensing node may perform a sensing operation based on the sensing control request, may obtain corresponding sensing data, and may send the sensing data to the SF. After receiving the sensing data from the sensing node, the SF may obtain the second sensing result based on the sensing data. That is, the second sensing result is a sensing result obtained by executing the first sensing service through non-redundant sensing.

It should be understood that the foregoing steps 1701 to 1703 are mainly used to derive the second sensing result, and are not described in detail. In addition, some steps are omitted. For details, refer to related descriptions in the foregoing related embodiments.

1704: In a case in which it is determined that the second sensing result satisfies the first condition, the AF sends a second sensing service request to the NEF, where the second sensing service request is for requesting a first sensing service, the second sensing service request includes a redundancy sensing indication, and the redundancy sensing indication is used to instruct to obtain plurality of pieces of sensing data corresponding to the first sensing service.

In a case in which the AF determines that the second sensing result satisfies the first condition, the AF may send the second sensing service request to the NEF, where the second sensing service request carries a redundancy sensing indication.

That the second sensing result satisfies the first condition includes a plurality of possible configuration cases. For example, that the second sensing result satisfies the first condition may be that sensing accuracy of the second sensing result is insufficient, for example, sensing accuracy of one or more of range accuracy, velocity accuracy, and angle accuracy is insufficient. The insufficient range accuracy may be that the range accuracy is greater than a threshold (10 cm), that is, the range sensing error is greater than a threshold. Similarly, the insufficient velocity accuracy may be that the velocity accuracy is greater than a threshold, and the insufficient angle accuracy may be that the angle accuracy is greater than a threshold. In a possible implementation, that the AF determines that the second sensing result is not precise enough may be: comparing the second sensing result with the actual observation result to determine that a bias between the second sensing result and the actual observation result is greater than a threshold, including one or more of a range bias, a velocity bias, and an angle biasion. That the AF determines that the second sensing result is not precise enough may also be that the AF determines, according to an internal algorithm, that the second sensing result is not precise enough. This is not limited in this embodiment of this application.

It should be noted that, that the second sensing result satisfies the first condition may indicate that the second sensing result is inaccurate/accurate. Therefore, that the second sensing result satisfies the first condition may further include another case that may indicate that the second sensing result is inaccurate.

1705: The NEF sends a second sensing authorization request to the UDM based on the second sensing service request, where the second sensing authorization request is for requesting to perform an authorization check on the first sensing service.

1706: The UDM performs an authorization check on the first sensing service based on the second sensing authorization request.

1707: The UDM sends a second authorization response to the NEF, where the second authorization response indicates that the first sensing service is authorized.

1708: The NEF sends a first sensing service request to the SF, where the first sensing service request is for requesting a first sensing service, the first sensing service request includes a redundancy sensing indication, and the redundancy sensing indication is used to instruct to obtain plurality of pieces of sensing data corresponding to the first sensing service.

The instructing to obtain the plurality of pieces of sensing data corresponding to the first sensing service may also be understood as instructing to execute the first sensing service through redundancy sensing, and details are not described in the following.

1709: The SF sends a first sensing authorization request to the UDM based on the first sensing service request, where the first sensing authorization request is for requesting to perform an authorization check on the plurality of pieces of sensing data corresponding to the first sensing service.

1710: The UDM performs, based on the first sensing authorization request and the first redundancy sensing configuration information, an authorization check on the obtained plurality of pieces of sensing data corresponding to the first sensing service.

The requesting to perform an authorization check on the plurality of pieces of sensing data corresponding to the obtained first sensing service may also be understood as requesting to perform an authorization check on the first sensing service executed through redundancy sensing, which is not described in the following.

1711: The UDM sends a first authorization response to the SF, where the first authorization response indicates that obtaining the plurality of pieces of sensing data corresponding to the first sensing service is authorized.

1712: When obtaining that the plurality of pieces of sensing data corresponding to the first sensing service are authorized, the SF determines plurality of sensing node groups, where each sensing node group includes a sensing signal sending node and a sensing signal receiving node, and at least one of the sensing signal sending node and the sensing signal receiving node in different sensing node groups is different.

1713: The SF respectively sends a sensing control request to the sensing signal receiving nodes in the plurality of sensing node groups, where the sensing control request is for requesting sensing data corresponding to the first sensing service.

1714: The SF respectively receives a sensing control response from the sensing signal receiving node in the plurality of sensing node groups, where the sensing control response includes sensing data corresponding to the first sensing service.

1715: The SF obtains the first sensing result based on the plurality of pieces of sensing data corresponding to the first sensing service.

1716: The SF sends the first sensing result to the AF by using the NEF.

For more detailed descriptions of steps 1705 to 1716, refer to related descriptions in the foregoing embodiment.

It may be understood that, for Embodiment 3 to Embodiment 10, the authorization check of redundancy sensing needs to be performed. In some cases, the authorization condition of redundancy sensing configured by the redundancy sensing authorizer (such as UDM or SF) may not satisfy the sensing request sent by the sensing demander (such as a terminal device or an AF). In this case, even if the sensing request carries a redundancy sensing indication, the non-redundancy sensing manner is not used for sensing, the non-redundancy sensing mode may be used for sensing. However, the sensing result obtained by sensing through non-redundant sensing cannot ensure accuracy of the sensing result. Therefore, in this case, an authorization condition of redundancy sensing may be dynamically configured for the redundancy sensing authorizing party, so that the redundancy sensing manner may be used to perform sensing. In a possible scenario, the sensing demander may configure the corresponding redundancy sensing configuration information by using the parameter configuration request when the sensing result obtained through non-redundant sensing satisfies the first condition, that is, configure the authorization condition of the redundancy sensing. The following uses an example in which the UDM is a redundancy sensing authorizer and the AF initiates a parameter configuration request for description. For a case in which the redundancy sensing authorizing party is another network element (for example, an SF) or another network element (for example, a terminal device) that initiates a parameter configuration request, reference may be made to this case, and details are not described again.

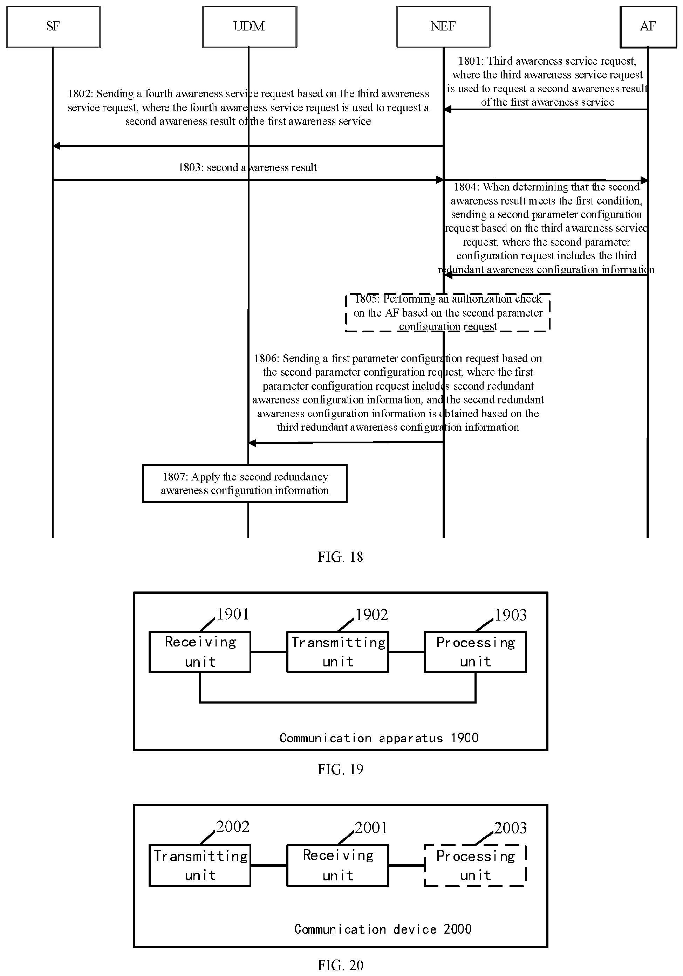

FIG. 8A to FIG. 8C are a schematic flowchart of yet another communication method according to an embodiment of this application. As shown in FIG. 18, the method may include but is not limited to the following steps.

1801: The AF sends a third sensing service request to the NEF, where the third sensing service request is for requesting a second sensing result of the first sensing service.

Optionally, the third sensing service request may include one or more of the following: a sensing service type, a sensing service requirement, a sensing area, and an application function identifier.

1802: The NEF sends a fourth sensing service request to the SF based on the third sensing service request, where the fourth sensing service request is for requesting a second sensing result of the first sensing service.

1803: The SF sends the second sensing result to the AF by using the NEF.

Steps 1801 to 1803 are similar to steps 1701 to 1703, and reference may be made to related descriptions in the foregoing steps 1701 to 1703.

1804: In a case in which it is determined that the second sensing result satisfies the first condition, the AF sends a second parameter configuration request to the NEF based on the third sensing service request, where the second parameter configuration request includes the third redundancy sensing configuration information.

When it is determined that the second sensing result satisfies the first condition, there are a plurality of possible cases in which the second parameter configuration request (Nnef_parameterProvision) is sent to the NEF. One case is: For a case in which the sensing request does not carry a redundancy sensing indication in Embodiment 5, Embodiment 6, Embodiment 9, and Embodiment 10, and redundancy sensing authorization is performed on each sensing request by default, if the AF determines that the second sensing result satisfies the first condition, it may be considered that the third sensing service request does not satisfy the current redundancy sensing configuration information. Therefore, the AF may send a second parameter configuration request to the NEF to perform corresponding configuration for a same or similar sensing service request subsequently, the detection may be performed in a redundancy detection manner. Another case is as follows: For cases in which the sensing request carries a redundancy sensing indication in Embodiment 3, Embodiment 4, Embodiment 7, and Embodiment 8, if the third sensing service request carries the redundancy sensing indication, but the AF determines that the second sensing result satisfies the first condition, in this case, it may also be considered that the third sensing service request does not satisfy the current redundancy sensing configuration information. Therefore, a second parameter configuration request may be sent to the NEF to perform corresponding configuration for a same or similar sensing service request, the detection may be performed in a redundancy detection manner.

A main basis for considering that the third sensing service request does not satisfy the current redundancy sensing configuration information is that: a sensing result obtained by executing a sensing task through redundancy sensing does not satisfy the first condition, or the sensing result obtained by executing a sensing task through redundancy sensing does not satisfy the first condition with a high probability (for example, greater than 90%).

The third redundancy sensing configuration information may be obtained based on a third sensing service request. For example, the redundancy sensing configuration information may include all or a part of information in the third sensing service request, for example, include one or more of a sensing service type, a sensing area, an application function identifier, and execution time of the sensing service in the third sensing service request. It may be understood that the third sensing service request may be considered as a sensing service request corresponding to the second sensing result.

The third redundancy sensing configuration information may include one or more of the following items: a sensing service type allowed to perform redundancy sensing, a sensing area allowed to perform redundancy sensing, an identifier of an application function allowed to perform redundancy sensing, and time allowed to perform redundancy sensing. Exemplarily, the sensing service type allowing redundancy sensing may be the sensing service type in the third sensing service request, the sensing area allowing redundancy sensing may also be the sensing area in the third sensing service request, the identifier of the application function allowing redundancy sensing may be the application function identifier in the third sensing service request, and the allowed time of redundancy sensing may be the execution time of the sensing service in the third sensing service request.

1805: The NEF performs an authorization check on the AF based on the second parameter configuration request.

In some possible implementations, after receiving the second parameter configuration request from the AF, the NEF may perform an authorization check on the AF, to determine whether the AF has permission to initiate the second parameter configuration request. If the second parameter configuration request has the permission, further processing may be performed based on the second parameter configuration request. If the second parameter configuration request does not have the permission, the second parameter configuration request may be rejected or ignored.

For example, the NEF may determine, according to a local policy, whether the AF has permission to initiate the second parameter configuration request. For another example, the NEF may request authorization check information from the UDM, and then determine, based on the authorization check information, whether the AF has permission to initiate the second parameter configuration request.

1806: The NEF sends a first parameter configuration request to the UDM based on the second parameter configuration request, where the first parameter configuration request includes the second redundancy sensing configuration information, and the second redundancy sensing configuration information is obtained based on the third redundancy sensing configuration information.

The third redundancy sensing configuration information may include some external information, for example, a sensing area on which redundancy sensing is allowed to be performed is external area information. Therefore, the NEF may convert the external information in the third redundancy sensing configuration information into internal information, for example, convert the external area information into the internal area information, to obtain the second redundancy sensing configuration information. Then, the NEF may send a first parameter configuration request (Nudm_parameterProvision) to the UDM, where the first parameter configuration request includes the second redundancy sensing configuration information.

It may be understood that, in a case in which the redundancy sensing authorizing party is the SF, the NEF may send a first parameter configuration request (Nsf_parameterProvision) to the SF based on the second parameter configuration request, where the first parameter configuration request includes the second redundancy sensing configuration information, and the second redundancy sensing configuration information is obtained based on the third redundancy sensing configuration information.

1807: The UDM applies the second redundancy sensing configuration information.

After receiving the first parameter configuration request from the NEF, the UDM may apply the second redundancy sensing configuration information in the first parameter configuration request, so that a corresponding sensing service request may be subsequently sensed through redundancy sensing.

For the foregoing Embodiment 3 to Embodiment 10, the first redundancy sensing configuration information may include second redundancy sensing configuration information.

In the foregoing processing procedure, various manners of triggering redundancy sensing are provided, including different sensing demanders (AFs, terminal devices, and the like), whether the authorization check of redundancy sensing is required, and who performs the authorization check of redundancy sensing when the authorization check of redundancy sensing is required. The combination of these different cases includes plurality of possible implementations, and reference may be made to the related description of Embodiment 1 to Embodiment 10. Based on Embodiment 1 to Embodiment 10, another embodiment may be further obtained, for example, a combination of some steps in different embodiments. However, the combination should also fall within the protection scope of this application.

In conclusion, the foregoing performing the sensing service through redundancy sensing can ensure accuracy/accuracy of a sensing result and reliability of sensing. In addition, in the foregoing description, FIG. 17 and FIG. 18 are further used as examples of a procedure in which an AF side actively triggers redundancy sensing and a procedure in which an AF side actively performs parameter configuration, respectively, so that flexibility is relatively high.

It should be noted that, for related information (that is, same information or similar information) and related descriptions in the foregoing different embodiments, reference may be made to each other.

The foregoing mainly describes the communication methods provided in embodiments of this application. It may be understood that, to implement the foregoing corresponding functions, the SF, the AF, the NEF, the UDM, and the terminal device may include corresponding hardware structures and/or software modules for performing the functions. With reference to the units and the steps of each example described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In the embodiments of this application, function module division may be performed on the SF, the AF, the NEF, the UDM, the terminal device, and the like based on the foregoing method examples. For example, functional modules may be obtained through division based on corresponding functions, or two or more functions may be integrated into one module. The integrated module may be implemented in a form of hardware, or may be implemented in a form of a software functional module. It should be noted that, in embodiments of this application, division into the modules is an example, is merely logical function division, and may be other division during actual implementation.

When functional modules are obtained through division based on corresponding functions, FIG. 19 is a diagram of a possible structure of a communications apparatus 1900. The communications apparatus 1900 includes a receiving unit 1901, a sending unit 1902, and a processing unit 1903. In a possible design, the communications apparatus 1900 may be the foregoing sensing function network element, may be a chip in the sensing function network element, or may be a processing system in the sensing function network element or the like.

The receiving unit 1901 is configured to receive a first sensing service request, wherein the first sensing service request is for requesting a first sensing service.

The sending unit 1902 is configured to respectively send sensing control requests to sensing signal receiving nodes in a plurality of sensing node groups based on the first sensing service request, wherein the sensing control requests is for requesting sensing data corresponding to the first sensing service, the sensing node group comprises a sensing signal sending node and the sensing signal receiving node, and sensing signal sending nodes and/or sensing signal receiving nodes in different sensing node groups are different.

The processing unit 1903 is configured to respectively obtain, from the sensing signal receiving nodes in the plurality of sensing node groups, sensing data corresponding to the first sensing service.

For example, the processing unit 1903 may respectively obtain, by using the receiving unit 1901 from the sensing signal receiving nodes in the plurality of sensing node groups, the sensing data corresponding to the first sensing service.

In a possible implementation, the first sensing service request comprises a redundancy sensing indication, and the sending unit 1902 is specifically configured to: respectively send the sensing control requests to the sensing signal receiving nodes in the plurality of sensing node groups based on the redundancy sensing indication.

In a possible implementation, the processing unit 1903 is further configured to: allocate a sensing task identifier ID to each of the sensing control requests, wherein the sensing task ID corresponds to the first sensing service; respectively obtain, from the sensing signal receiving nodes in the plurality of sensing node groups, the sensing data corresponding to the first sensing service and the sensing task ID corresponding to each piece of the sensing data; and determine, based on the sensing task ID corresponding to the piece of the sensing data, that the piece of the sensing data corresponds to the first sensing service.

In a possible implementation, before the sending unit 1902 respectively sends the sensing control requests to the sensing signal receiving nodes in the plurality of sensing node groups, the sending unit 1902 is further configured to send a first sensing authorization request to a data management network element based on the first sensing service request, wherein the first sensing authorization request is for requesting to perform an authorization check on obtaining of the plurality of pieces of sensing data corresponding to the first sensing service; and the receiving unit 1901 is further configured to receive a first authorization response from the data management network element, wherein the first authorization response indicates that obtaining of the plurality of pieces of sensing data corresponding to the first sensing service is authorized.

In a possible implementation, the first sensing authorization request comprises one or more of the following: a sensing service type, a sensing area, an application function identifier, and the redundancy sensing indication.

In a possible implementation, the first authorization response comprises first authorization indication information, and the first authorization indication information indicates that obtaining of the plurality of pieces of sensing data corresponding to the first sensing service is authorized.

In a possible implementation, the sending unit 1902 is further configured to: when the first sensing service request satisfies first redundancy sensing configuration information, respectively send the sensing control requests to the sensing signal receiving nodes in the plurality of sensing node groups.

In a possible implementation, the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

In a possible implementation, the receiving unit 1901 is further configured to receive a first parameter configuration request from the network exposure function network element, wherein the first parameter configuration request comprises second redundancy sensing configuration information, and the first redundancy sensing configuration information comprises the second redundancy sensing configuration information.

In a possible implementation, the first sensing service request further comprises one or more of the following: the sensing service type, a sensing service requirement, the sensing area, and the application function identifier.

In a possible implementation, the first sensing service request is from a terminal device, the network exposure function network element, or an application function network element.

With reference to the sixth aspect, in a possible implementation, the processing unit 1903 is further configured to determine a first sensing result based on the plurality of pieces of sensing data corresponding to the first sensing service.

In a possible implementation, the processing unit 1903 is specifically configured to: obtain target sensing data after excluding, based on the plurality of pieces of sensing data corresponding to the first sensing service, biased sensing data in the plurality of pieces of sensing data corresponding to the first sensing service; and obtain the first sensing result based on the target sensing data.

For specific operations of the units in the communications apparatus 1900, refer to the descriptions corresponding to the SF in the foregoing method embodiments. Details are not described herein again.

FIG. 20 is a diagram of a possible structure of a communications apparatus 2000. The communications apparatus 2000 includes a receiving unit 2001 and a sending unit 2002. The communications apparatus 2000 may further include a processing unit 2003. In a possible design, the communications apparatus 2000 may be the foregoing data management network element, may be a chip in the data management network element, or may be a processing system in the data management network element or the like.

The receiving unit is configured to receive a first sensing authorization request, wherein the first sensing authorization request is for requesting to perform an authorization check on obtaining of a plurality of pieces of sensing data corresponding to a first sensing service.

The sending unit 2002 is configured to: when the first sensing authorization request satisfies first redundancy sensing configuration information, send a first authorization response, wherein the first authorization response indicates that obtaining of the plurality of pieces of sensing data corresponding to the first sensing service is authorized.

In a possible implementation, the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

In a possible implementation, the first sensing authorization request comprises one or more of the following: a sensing service type, a sensing area, an application function identifier, and a redundancy sensing indication.

In a possible implementation, the communications apparatus further includes: the processing unit 2003, configured to: when the first sensing authorization request comprises the redundancy sensing indication, perform, based on the first sensing authorization request and the first redundancy sensing configuration information, the authorization check on obtaining of the plurality of pieces of sensing data corresponding to the first sensing service.

In a possible implementation, the first authorization response comprises first authorization indication information, and the first authorization indication information indicates that obtaining of the plurality of pieces of sensing data corresponding to the first sensing service is authorized.

In a possible implementation, the receiving unit 2001 is further configured to receive a first parameter configuration request from a network exposure function network element, wherein the first parameter configuration request comprises second redundancy sensing configuration information, and the first redundancy sensing configuration information comprises the second redundancy sensing configuration information.

In a possible implementation, the first sensing authorization request is from the network exposure function network element or a sensing function network element.

For specific operations of the units in the communications apparatus 2000, refer to the descriptions corresponding to the UDM in the foregoing method embodiments. Details are not described herein again.

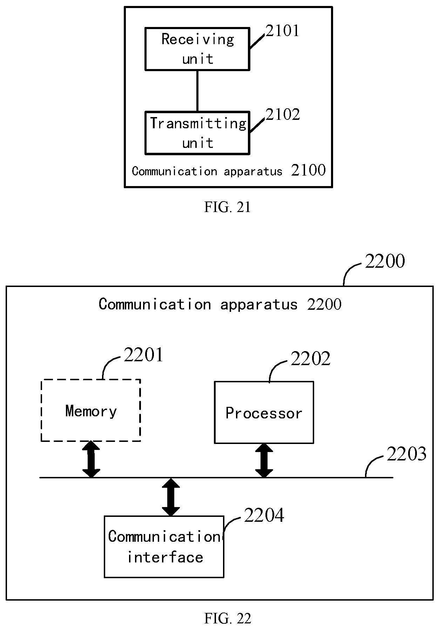

FIG. 21 is a diagram of a possible structure of a communications apparatus 2100. The communications apparatus 2100 includes a receiving unit 2101 and a sending unit 2102. In a possible design, the communications apparatus 2100 may be the foregoing network exposure function network element, may be a chip in the network exposure function network element, or may be a processing system in the network exposure function network element or the like.

The receiving unit 2101 is configured to receive a second sensing service request, where the second sensing service request is for requesting a first sensing service.

The sending unit 2102 is configured to send a first sensing authorization request to a data management network element based on the second sensing service request, where the first sensing authorization request is for requesting to perform an authorization check on obtaining of a plurality of pieces of sensing data corresponding to the first sensing service.

The receiving unit 2101 is further configured to receive a first authorization response from the data management network element, where the first authorization response indicates that obtaining of the plurality of pieces of sensing data corresponding to the first sensing service is authorized.

The sending unit 2102 is further configured to send a first sensing service request to a sensing function network element based on the first authorization response, where the first sensing service request is for requesting the first sensing service.

In a possible implementation, the second sensing service request includes one or more of the following: a sensing service type, a sensing service requirement, a sensing area, an application function identifier, and a redundancy sensing indication.

In a possible implementation, the sending unit 2102 is specifically configured to: when the second sensing service request includes the redundancy sensing indication, send the first sensing authorization request to the data management network element based on the second sensing service request.

In a possible implementation, the first sensing authorization request comprises one or more of the following: the sensing service type, the sensing area, the application function identifier, and the redundancy sensing indication.

In a possible implementation, the first authorization response includes first authorization indication information, and the first authorization indication information indicates that obtaining of the plurality of pieces of sensing data corresponding to the first sensing service is authorized.

In a possible implementation, the first sensing service request includes one or more of the following: the sensing service type, the sensing service requirement, the sensing area, the application function identifier, and the redundancy sensing indication.

In a possible implementation, the receiving unit 2101 is further configured to receive a second parameter configuration request from an application function network element, where the second parameter configuration request includes third redundancy sensing configuration information; and the sending unit 2102 is further configured to send a first parameter configuration request based on the second parameter configuration request, where the first parameter configuration request includes second redundancy sensing configuration information, and the second redundancy sensing configuration information is obtained based on the third redundancy sensing configuration information.

In a possible implementation, that the sending unit 2102 sends the first parameter configuration request based on the second parameter configuration request includes: when an authorization check on the application function network element succeeds, sending the first parameter configuration request based on the second parameter configuration request.

In a possible implementation, the second redundancy sensing configuration information includes one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

In a possible implementation, the receiving unit 2101 is further configured to receive a first sensing result from the sensing function network element, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

For specific operations of the units in the communications apparatus 2000, refer to the descriptions corresponding to the NEF in the foregoing method embodiments. Details are not described herein again.

In a possible design, the communications apparatus 2100 may be the foregoing network exposure function network element, may be a chip in the network exposure function network element, or may be a processing system in the network exposure function network element or the like.

The receiving unit 2101 is configured to receive a second sensing service request, where the second sensing service request is for requesting a first sensing service, the second sensing service request includes a redundant sensing indication, and the redundant sensing indication indicates to obtain a plurality of pieces of sensing data corresponding to the first sensing service.

The sending unit 2102 is configured to send a first sensing service request to a sensing function network element based on the second sensing service request, where the first sensing service request is for requesting the first sensing service.

In a possible implementation, the second sensing service request further includes one or more of the following: a sensing service type, a sensing service requirement, a sensing area, and an application function identifier.

In a possible implementation, the first sensing service request includes one or more of the following: the sensing service type, the sensing service requirement, the sensing area, the application function identifier, and the redundancy sensing indication.

In a possible implementation, that the sending unit 2102 sends the first sensing service request to the sensing function network element based on the second sensing service request includes: sending a second sensing authorization request to a data management network element based on the second sensing service request, where the second sensing authorization request is for requesting to perform an authorization check on the first sensing service; the receiving unit 2101 is further configured to receive a second authorization response from the data management network element, where the second authorization response indicates that the first sensing service is authorized; and the sending unit 2102 is further configured to send the first sensing service request to the sensing function network element based on the second authorization response.

In a possible implementation, the receiving unit 2101 is further configured to receive a first sensing result from the sensing function network element, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

For specific operations of the units in the communications apparatus 2000, refer to the descriptions corresponding to the NEF in the foregoing method embodiments. Details are not described herein again.

In a possible design, the communications apparatus 2100 may be the foregoing terminal device or application function network element, may be a chip in the terminal device or the application function network element, or may be a processing system in the terminal device or the application function network element, or the like.

The sending unit 2102 is configured to send a first sensing service request, where the first sensing service request is for requesting a first sensing service, the first sensing service request includes a redundancy sensing indication, and the redundancy sensing indication indicates to obtain a plurality of pieces of sensing data corresponding to the first sensing service.

In a possible implementation, the communications apparatus further includes: the receiving unit 2101, configured to receive a first sensing result, where the first sensing result is obtained based on the plurality of pieces of sensing data corresponding to the first sensing service, the plurality of pieces of sensing data are obtained by using a plurality of sensing node groups, the sensing node group includes a sensing signal sending node and a sensing signal receiving node, and sensing signal sending nodes and/or sensing signal receiving nodes in different sensing node groups are different.

In a possible implementation, the receiving unit 2101 is further configured to receive a second sensing result, where the second sensing result is a sensing result obtained by performing the first sensing service through non-redundant sensing; and the sending unit 2102 is specifically configured to send the first sensing service request based on the second sensing result.

In a possible implementation, the first sensing service request includes one or more of the following: a sensing service type, a sensing service requirement, a sensing area, and an application function identifier.

In a possible implementation, before the first sensing service request is sent, the receiving unit 2101 is further configured to receive a second sensing result, where the second sensing result is a sensing result obtained by performing the first sensing service through non-redundant sensing; and the sending unit 2102 is further configured to send a second parameter configuration request based on the second sensing result, where the second parameter configuration request includes third redundancy sensing configuration information.

In a possible implementation, the third redundancy sensing configuration information includes one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

In a possible implementation, the first sensing service request is sent by a terminal device or the application function network element.

For specific operations of the units in the communications apparatus 2000, refer to the descriptions corresponding to the AF and the terminal device in the foregoing method embodiments. Details are not described herein again.

In a possible implementation, in the communications apparatuses shown in FIG. 19, FIG. 20, and FIG. 21, the processing unit may be one or more processors/logic circuits, the sending unit may be a transmitter, the receiving unit may be a receiver, and the sending unit and the receiving unit may be integrated into one device, for example, a transceiver. In embodiments of this application, the processor and the transceiver may be coupled, and so on. A manner of connection between the processor and the transceiver is not limited in embodiments of this application. In a process of performing the foregoing methods, a process of sending information (for example, sending the sensing control request or the sensing control response) in the foregoing methods may be understood as a process of outputting the information by the processor. When outputting the information, the processor outputs the information to the transceiver, so that the transceiver transmits the information. After the information is outputted by the processor, other processing may further need to be performed before arrival at the transceiver. Similarly, a process of receiving information (for example, receiving the sensing control request or the sensing control response) in the foregoing methods may be understood as a process of receiving the input information by the processor. When the processor receives the input information, the transceiver receives the information, and inputs the information into the processor. Further, after the transceiver receives the information, other processing may further need to be performed on the information before input into the processor.

In another possible implementation, in the communications apparatuses shown in FIG. 19, FIG. 20, and FIG. 21, the processing unit may be one or more processors/logic circuits, the sending unit may be an output interface, the receiving unit may be an input interface, the sending unit and the receiving unit are integrated into one unit, for example, an input/output interface, also referred to as a communications interface, an interface circuit, an interface, or the like.

FIG. 22 is a diagram of a possible hardware structure of a communications apparatus 2200 according to an embodiment of this application. The communications apparatus 2200 may include a communications interface 2204 and at least one processor 2202. Optionally, a bus 2203 may be further included. Further, optionally, at least one memory 2201 may be further included. The memory 2201, the processor 2202, and the communications interface 2204 are connected through the bus 2203.

The memory 2201 is configured to provide storage space, and the storage space may store data such as an operating system and a computer program. The memory 2201 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

The processor 2202 is a module that performs an arithmetic operation and/or a logic operation, and may be specifically one or a combination of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), and a complex programmable logic device (Complex programmable logic device, CPLD).

The communication interface 2204 is configured to receive data sent by the outside and/or send data to the outside, and may be a wired link interface including, for example, an ethernet cable, or may be a wireless link (for example, Wi-Fi, Bluetooth, universal wireless transmission, or the like) interface. Optionally, the communication interface 2204 may further include a transmitter (for example, a radio frequency transmitter or an antenna), a receiver, or the like that is coupled to the interface.

In a design, the communications apparatus 2200 may be configured to perform the functions of the SF in the foregoing embodiments. For details, refer to the related descriptions in FIG. 4 to FIG. 18. Details are not described herein again.

In another design, the communications apparatus 2200 may be configured to perform the functions of the UDM in the foregoing embodiments. For details, refer to the related descriptions in FIG. 4 to FIG. 18. Details are not described herein again.

In still another design, the communications apparatus 2200 may be configured to perform the functions of the AF in the foregoing embodiments. For details, refer to the related descriptions in FIG. 4 to FIG. 18. Details are not described herein again.

In still another design, the communications apparatus 2200 may be configured to perform the functions of the NEF in the foregoing embodiments. For details, refer to the related descriptions in FIG. 4 to FIG. 18. Details are not described herein again.

In still another design, the communications apparatus 2200 may be configured to perform the functions of the terminal device in the foregoing embodiments. For details, refer to the related descriptions in FIG. 4 to FIG. 18. Details are not described herein again.

In a possible design, the processor 2202 in the apparatus 2200 is configured to read the computer program stored in the memory 2201, to perform the operations performed by the SF, the UDM, the AF, the NEF, or the terminal device in the foregoing communication methods, for example, the communication method described in any one of the embodiments in FIG. 4 to FIG. 18.

It should be noted that the communication apparatus 2200 shown in FIG. 22 is merely an implementation of embodiments of this application. During actual application, the communication apparatus 2200 may further include more or fewer components. This is not limited herein.

An embodiment of this application further discloses a communications system. The communications system includes a sensing function network element and a data management network element. The sensing function network element is configured to perform the operations performed by the sensing function network element in any one of the foregoing method embodiments. The data management network element is configured to perform the operations performed by the data management network element in any one of the foregoing method embodiments.

An embodiment of this application further discloses a communications system. The communications system includes a sensing function network element and an application function network element. The sensing function network element is configured to perform the operations performed by the sensing function network element in any one of the foregoing method embodiments, and the application function network element is configured to perform the operations performed by the application function network element in any one of the foregoing method embodiments.

An embodiment of this application further discloses a communications system. The communications system includes a sensing function network element, an application function network element, and a network exposure function network element. The sensing function network element is configured to perform the operations performed by the sensing function network element in any one of the foregoing method embodiments. The application function network element is configured to perform the operations performed by the application function network element in any one of the foregoing method embodiments. The network exposure function network element is configured to perform the operations performed by the network element in any one of the foregoing method embodiments.

An embodiment of this application further discloses a communications system. The communications system includes a sensing function network element, an application function network element, and a network exposure function network element. The sensing function network element is configured to perform the operations performed by the sensing function network element in any one of the foregoing method embodiments. The application function network element is configured to perform the operations performed by the application function network element in any one of the foregoing method embodiments. The network exposure function network element is configured to perform the operations performed by the network exposure function network element in any one of the foregoing method embodiments, the data management network element is configured to perform the operations performed by the data management network element in any one of the foregoing method embodiments.

An embodiment of this application further discloses a chip. The chip includes a processor. The processor is configured to execute a computer program or computer instructions stored in a memory, so that the chip performs the operations performed by the SF in the foregoing method embodiments, the chip performs the operations performed by the UDM in the foregoing method embodiments, the chip performs the operations performed by the AF in the foregoing method embodiments, the chip performs the operations performed by the NEF in the foregoing method embodiments, or the chip performs the operations performed by the terminal device in the foregoing method embodiments.

In a possible implementation, the memory is located outside the chip.

An embodiment of this application further discloses a computer-readable storage medium, storing instructions. When the instructions are executed, the operations performed by the SF in the foregoing method embodiments, the operations performed by the UDM in the foregoing method embodiments, the operations performed by the AF in the foregoing method embodiments, the operations performed by the NEF in the foregoing method embodiments, or the operations performed by the terminal device in the foregoing method embodiments are performed.

An embodiment of this application further discloses a computer program product including instructions. When the instructions are executed, the operations performed by the SF in the foregoing method embodiments, the operations performed by the UDM in the foregoing method embodiments, the operations performed by the AF in the foregoing method embodiments, the operations performed by the NEF in the foregoing method embodiments, or the operations performed by the terminal device in the foregoing method embodiments are performed.

It should be understood that sending in embodiments of this application may be direct sending, or may be indirect sending. Direct sending means that a device or a module directly sends information/data to a corresponding device or module, and indirect sending means that a device or module sends information/data to a corresponding device or module via another device or module.

Clearly, the foregoing embodiments are merely some but not all of embodiments of this application. "Embodiment" mentioned in this specification means that a particular feature, structure, or characteristic described with reference to embodiments may be included in at least one of embodiments of this application. The phrase shown in various locations in this specification is not necessarily refer to a same embodiment, and is not an independent or alternative embodiment exclusive from another embodiment. It may be explicitly and implicitly understood by a person skilled in the art that embodiments described in this specification may be combined with other embodiments. All other embodiments obtained by a person of ordinary skill in the art based on embodiments of this application without creative efforts shall fall within the protection scope of this application. In this specification, claims, and accompanying drawings of this application, the terms "first", "second", "third", and the like are for distinguishing between different objects, but do not indicate a particular order. In addition, terms "include", "have", and any variants thereof are intended to cover non-exclusive inclusion. For example, a series of steps or units are included; optionally, a step or a unit that is not listed is further included; or optionally, another inherent step or unit of the processes, the methods, the products, or the devices is further included. It may be understood that, in some embodiments, an equal sign of the foregoing condition determining may be applied to a greater-than end or a less-than end. For example, the foregoing condition determining for a threshold greater than, or less than or equal to may be changed to condition determining for the threshold greater than or equal to, or less than. This is not limited herein. It may be further understood that, for an architecture having a plurality of devices or modules, if one of the devices or modules generates one piece of information, and another device or module uses the information, the another device may obtain the information in a plurality of manners. For example, the device or module that generates the information may directly send the information to the device or module that uses the information (which is equivalent to direct sending), or the device or module that generates the information may send, via another device or module, the information to the device or module that uses the information (which is equivalent to indirect sending).

It may be understood that the accompanying drawings show only some but not all content related to this application. It should be understood that some example embodiments are described as processing or methods depicted as flowcharts. Although the flowchart describes operations (or steps) as sequential processing, many of the operations can be implemented in parallel, concurrently, or simultaneously. In addition, the sequence of the operations may be rearranged. The processing may be terminated upon completion of the operations thereof, but may further have additional steps not included in the accompanying drawings. The processing may correspond to a method, a function, a procedure, a subroutine, a subprogram, or the like.

Terms such as "component", "module", "system", and "unit" used in this specification indicate computerrelated entities, hardware, firmware, combinations of hardware and software, software, or software being executed. For example, a unit may be, but is not limited to, a process running on a processor, a processor, an object, an executable file, an execution thread, or a program, and/or may be distributed between two or more computers. In addition, these units may be executed from various computer-readable media storing various data structures. For example, the units may communicate with each other by using a local and/or remote process based on a signal having one or more data packets (for example, data from a second unit interacting with another unit in a local system, in a distributed system, and/or across a network, such as the internet interacting with another system by using a signal).

The objectives, the technical solutions, and the beneficial effects of this application are further described in detail in the foregoing specific implementations. It should be understood that the foregoing descriptions are merely specific implementations of this application, but are not intended to limit the protection scope of this application. Any modification, equivalent replacement, improvement, or the like made based on the technical solutions in this application shall fall within the protection scope of this application.

## Claims

1. A communication method, comprising:
receiving, by a sensing function network element, a first sensing service request, wherein the first sensing service request is for requesting a first sensing service;
respectively sending sensing control requests to sensing signal receiving nodes in a plurality of sensing node groups based on the first sensing service request, wherein the sensing control requests is for requesting sensing data corresponding to the first sensing service, the sensing node group comprises a sensing signal sending node and the sensing signal receiving node, and sensing signal sending nodes and/or sensing signal receiving nodes in different sensing node groups are different; and
respectively obtaining, from the sensing signal receiving nodes in the plurality of sensing node groups, sensing data corresponding to the first sensing service.

2. The method according to claim 1, wherein the first sensing service request comprises a redundancy sensing indication, and the respectively sending the sensing control requests to the sensing signal receiving nodes in the plurality of sensing node groups based on the first sensing service request comprises:
respectively sending the sensing control requests to the sensing signal receiving nodes in the plurality of sensing node groups based on the redundancy sensing indication.

3. The method according to claim 1 or 2, wherein the method further comprises:
allocating a sensing task identifier ID to each of the sensing control requests, wherein the sensing task ID corresponds to the first sensing service; and
the respectively obtaining, from the sensing signal receiving nodes in the plurality of sensing node groups, the sensing data corresponding to the first sensing service comprises:
respectively obtaining, from the sensing signal receiving nodes in the plurality of sensing node groups, the sensing data corresponding to the first sensing service and the sensing task ID corresponding to each piece of the sensing data; and
determining, based on the sensing task ID corresponding to the piece of the sensing data, that the piece of the sensing data corresponds to the first sensing service.

4. The method according to any one of claims 1 to 3, wherein before respectively sending the sensing control requests to the sensing signal receiving nodes in the plurality of sensing node groups, the method further comprises:
sending a first sensing authorization request to a data management network element based on the first sensing service request, wherein the first sensing authorization request is for requesting to perform an authorization check on obtaining of the plurality of pieces of sensing data corresponding to the first sensing service; and
receiving a first authorization response from the data management network element, wherein the first authorization response indicates that obtaining of the plurality of pieces of sensing data corresponding to the first sensing service is authorized.

5. The method according to claim 4, wherein the first sensing authorization request comprises one or more of the following: a sensing service type, a sensing area, an application function identifier, and the redundancy sensing indication.

6. The method according to claim 4 or 5, wherein the first authorization response comprises first authorization indication information, and the first authorization indication information indicates that obtaining of the plurality of pieces of sensing data corresponding to the first sensing service is authorized.

7. The method according to any one of claims 1 to 3, wherein the respectively sending the sensing control requests to the sensing signal receiving nodes in the plurality of sensing node groups based on the first sensing service request comprises:
when the first sensing service request satisfies first redundancy sensing configuration information, respectively sending the sensing control requests to the sensing signal receiving nodes in the plurality of sensing node groups.

8. The method according to claim 7, wherein the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

9. The method according to claim 7 or 8, wherein the method further comprises:
receiving a first parameter configuration request from the network exposure function network element, wherein the first parameter configuration request comprises second redundancy sensing configuration information, and the first redundancy sensing configuration information comprises the second redundancy sensing configuration information.

10. The method according to any one of claims 1 to 9, wherein the first sensing service request further comprises one or more of the following: the sensing service type, a sensing service requirement, the sensing area, and the application function identifier.

11. The method according to any one of claims 1 to 10, wherein the first sensing service request is from a terminal device, the network exposure function network element, or an application function network element.

12. The method according to any one of claims 1 to 11, wherein the method further comprises:
determining a first sensing result based on the plurality of pieces of sensing data corresponding to the first sensing service.

13. The method according to claim 12, wherein the determining the first sensing result based on the plurality of pieces of sensing data corresponding to the first sensing service comprises:
obtaining target sensing data after excluding, based on the plurality of pieces of sensing data corresponding to the first sensing service, biased sensing data in the plurality of pieces of sensing data corresponding to the first sensing service; and
obtaining the first sensing result based on the target sensing data.

14. A communication method, comprising:
receiving, by a data management network element, a first sensing authorization request, wherein the first sensing authorization request is for requesting to perform an authorization check on obtaining of a plurality of pieces of sensing data corresponding to a first sensing service; and
when the first sensing authorization request satisfies first redundancy sensing configuration information, sending a first authorization response, wherein the first authorization response indicates that obtaining of the plurality of pieces of sensing data corresponding to the first sensing service is authorized.

15. The method according to claim 14, wherein the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

16. The method according to claim 14 or 15, wherein the first sensing authorization request comprises one or more of the following: a sensing service type, a sensing area, an application function identifier, and a redundancy sensing indication.

17. The method according to claim 16, wherein the method further comprises:
when the first sensing authorization request comprises the redundancy sensing indication, performing, based on the first sensing authorization request and the first redundancy sensing configuration information, the authorization check on obtaining of the plurality of pieces of sensing data corresponding to the first sensing service.

18. The method according to any one of claims 14 to 17, wherein the first authorization response comprises first authorization indication information, and the first authorization indication information indicates that obtaining of the plurality of pieces of sensing data corresponding to the first sensing service is authorized.

19. The method according to any one of claims 14 to 18, wherein the method further comprises:
receiving a first parameter configuration request from a network exposure function network element, wherein the first parameter configuration request comprises second redundancy sensing configuration information, and the first redundancy sensing configuration information comprises the second redundancy sensing configuration information.

20. The method according to any one of claims 14 to 19, wherein the first sensing authorization request is from the network exposure function network element or a sensing function network element.

21. A communication apparatus, comprising:
a receiving unit, configured to receive a first sensing service request, wherein the first sensing service request is for requesting a first sensing service;
a sending unit, configured to respectively send sensing control requests to sensing signal receiving nodes in a plurality of sensing node groups based on the first sensing service request, wherein the sensing control requests is for requesting sensing data corresponding to the first sensing service, the sensing node group comprises a sensing signal sending node and the sensing signal receiving node, and sensing signal sending nodes and/or sensing signal receiving nodes in different sensing node groups are different; and
a processing unit, configured to respectively obtain, from the sensing signal receiving nodes in the plurality of sensing node groups, sensing data corresponding to the first sensing service.

22. The communications apparatus according to claim 21, wherein the first sensing service request comprises a redundancy sensing indication, and the sending unit is specifically configured to:
respectively send the sensing control requests to the sensing signal receiving nodes in the plurality of sensing node groups based on the redundancy sensing indication.

23. The communication apparatus according to claim 21 or 22, wherein the processing unit is further configured to:
allocate a sensing task identifier ID to each of the sensing control requests, wherein the sensing task ID corresponds to the first sensing service;
respectively obtain, from the sensing signal receiving nodes in the plurality of sensing node groups, the sensing data corresponding to the first sensing service and the sensing task ID corresponding to each piece of the sensing data; and
determine, based on the sensing task ID corresponding to the piece of the sensing data, that the piece of the sensing data corresponds to the first sensing service.

24. The communications apparatus according to any one of claims 21 to 23, wherein before the sending unit respectively sends the sensing control requests to the sensing signal receiving nodes in the plurality of sensing node groups, the sending unit is further configured to send a first sensing authorization request to a data management network element based on the first sensing service request, wherein the first sensing authorization request is for requesting to perform an authorization check on obtaining of the plurality of pieces of sensing data corresponding to the first sensing service; and
the receiving unit is further configured to receive a first authorization response from the data management network element, wherein the first authorization response indicates that obtaining of the plurality of pieces of sensing data corresponding to the first sensing service is authorized.

25. The communications apparatus according to claim 24, wherein the first sensing authorization request comprises one or more of the following: a sensing service type, a sensing area, an application function identifier, and the redundancy sensing indication.

26. The communications apparatus according to claim 24 or 25, wherein the first authorization response comprises first authorization indication information, and the first authorization indication information indicates that obtaining of the plurality of pieces of sensing data corresponding to the first sensing service is authorized.

27. The communications apparatus according to any one of claims 21 to 23, wherein the sending unit is further configured to: when the first sensing service request satisfies first redundancy sensing configuration information, respectively send the sensing control requests to the sensing signal receiving nodes in the plurality of sensing node groups.

28. The communications apparatus according to claim 27, wherein the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

29. The communications apparatus according to claim 27 or 28, wherein the receiving unit is further configured to receive a first parameter configuration request from the network exposure function network element, wherein the first parameter configuration request comprises second redundancy sensing configuration information, and the first redundancy sensing configuration information comprises the second redundancy sensing configuration information.

30. The communications apparatus according to any one of claims 21 to 29, wherein the first sensing service request further comprises one or more of the following: the sensing service type, a sensing service requirement, the sensing area, and the application function identifier.

31. The communications apparatus according to any one of claims 21 to 30, wherein the first sensing service request is from a terminal device, the network exposure function network element, or an application function network element.

32. The communications apparatus according to any one of claims 21 to 31, wherein the processing unit is further configured to determine a first sensing result based on the plurality of pieces of sensing data corresponding to the first sensing service.

33. The communication apparatus according to claim 32, wherein the processing unit is specifically configured to:
obtain target sensing data after excluding, based on the plurality of pieces of sensing data corresponding to the first sensing service, biased sensing data in the plurality of pieces of sensing data corresponding to the first sensing service; and
obtain the first sensing result based on the target sensing data.

34. A communication apparatus, comprising:
a receiving unit, configured to receive a first sensing authorization request, wherein the first sensing authorization request is for requesting to perform an authorization check on obtaining of a plurality of pieces of sensing data corresponding to a first sensing service; and
a sending unit, configured to: when the first sensing authorization request satisfies first redundancy sensing configuration information, send a first authorization response, wherein the first authorization response indicates that obtaining of the plurality of pieces of sensing data corresponding to the first sensing service is authorized.

35. The communications apparatus according to claim 34, wherein the first redundancy sensing configuration information comprises one or more of the following: a sensing service type for which redundancy sensing is allowed to be performed, a sensing area for which redundancy sensing is allowed to be performed, an application function identifier for which redundancy sensing is allowed to be performed, and time for which redundancy sensing is allowed to be performed.

36. The communications apparatus according to claim 34 or 35, wherein the first sensing authorization request comprises one or more of the following: a sensing service type, a sensing area, an application function identifier, and a redundancy sensing indication.

37. The communication apparatus according to claim 36, wherein the communication apparatus further comprises:
a processing unit, configured to: when the first sensing authorization request comprises the redundancy sensing indication, perform, based on the first sensing authorization request and the first redundancy sensing configuration information, the authorization check on obtaining of the plurality of pieces of sensing data corresponding to the first sensing service.

38. The communications apparatus according to any one of claims 34 to 37, wherein the first authorization response comprises first authorization indication information, and the first authorization indication information indicates that obtaining of the plurality of pieces of sensing data corresponding to the first sensing service is authorized.

39. The communications apparatus according to any one of claims 34 to 38, wherein the receiving unit is further configured to receive a first parameter configuration request from a network exposure function network element, wherein the first parameter configuration request comprises second redundancy sensing configuration information, and the first redundancy sensing configuration information comprises the second redundancy sensing configuration information.

40. The communications apparatus according to any one of claims 34 to 39, wherein the first sensing authorization request is from the network exposure function network element or a sensing function network element.

41. A communications system, wherein the communications system comprises a sensing function network element and a data management network element, the sensing function network element is configured to implement the method according to any one of claims 1 to 13, and the data management network element is configured to implement the method according to any one of claims 14 to 20.

42. A communications system, wherein the communications system comprises a sensing function network element and an application function network element, and the sensing function network element is configured to implement the method according to any one of claims 1 to 13.

43. A communications system, comprising a processor and a communication interface, wherein the communication interface is configured to receive and/or send data, and the processor invokes a computer program or computer instructions stored in a memory, to implement the method according to any one of claims 1 to 13.

44. A communications system, comprising a processor and a communication interface, wherein the communication interface is configured to receive and/or send data, and the processor invokes a computer program or computer instructions stored in a memory, to implement the method according to any one of claims 14 to 20.

45. A computer-readable storage medium, wherein the computer-readable storage medium stores a computer program or computer instructions; and the computer program or the computer instructions are executed by a processor, to implement the method according to any one of claims 1 to 13; or the computer program or the computer instructions are executed by a processor, to implement the method according to any one of claims 14 to 20.

46. A computer program product, wherein the computer program product comprises computer program code or computer instructions; and when the computer program code or the computer instructions are run, the method according to any one of claims 1 to 13 is implemented, or the method according to any one of claims 14 to 20 is implemented.
